# EUROPEAN PATENT APPLICATION

(11) **EP 1 793 517 A1**
(43) Date of publication of application: **06.06.2007**
(21) Application number: 05768910.1
(22) Date of filing: 08.08.2005
(51) Int. Cl.: H04J 11/00, H04J 13/00

(54) **DATA COMMUNICATION SYSTEM, RECEIVER APPARATUS AND TRANSMITTER APPARATUS**

(30) Priority: 24.08.2004 JP 2004243754; 07.06.2005 JP 2005166875
(71) Applicant: SHARP KABUSHIKI KAISHA, Osaka-shi, Osaka 545-8522 (JP)
(72) Inventor: ISHIKURA, Katsutoshi, Sakura-shi, Chiba 285-0811 (JP); FUKUMASA, Hidenobu, Narashino-shi, Chiba 275 0015 (JP)
(74) Representative: Müller, Frithjof E.
(86) International application number: PCT/JP2005/014506
(87) International publication number: WO 2006/022136

(57) **Abstract**

In a wireless communication system based on an OFDM technology, a control channel and a low-speed data channel can be multiplexed without a reduction in the transmission speed of a traffic channel. In a communication system that is operated by multiplexing a traffic channel for performing high-speed data transmission and a control channel for performing low-speed control information transmission, an OFDM signal for transmitting the traffic channel and an OFDM signal for transmitting a control signal are multiplexed for transmission. In a receiving station, the control channel is first demodulated/decoded and a judgment is made as to whether or not any signal addressed to the self station is contained in a traffic channel signal. When any signal addressed to the self station is contained, the control channel signal is cancelled from the reception signal in accordance with a wireless channel quality and the traffic channel is demodulated.

## Description

### TECHNICAL FIELD

The present invention relates to data communication systems, receiver apparatuses, and transmitter apparatuses. More specifically, the present invention relates to a data communication system using an OFDM technology.

### BACKGROUND OF THE INVENTION

Demands for electromagnetic-wave-based wireless data communication systems, such as wireless LANs and mobile telephone systems, are increasing more and more, and there is a need for a technology for realizing high-speed data communication by effectively using limited frequency resources.
The OFDM (Orthogonal Frequency Division Multiplexing) technology is used for broad-band wireless communication based on, for example, IEEE 802.11g and 802.11a for realizing high-speed wireless LANs.

Based on the OFDM technology, OFCDM (Orthogonal Frequency and Code Division Multiplexing) and MC-CDMA (Multi-Carrier Code Division Multiple Access) schemes incorporate the concepts of spectrum spreading and code division multiplexing. The term "MC-CDMA" is also used for a system for performing communication using multiple narrow-band CDMA signals in parallel, but technology here is limited to one based on the OFDM technology. Further, the MC-CDMA based on the OFDM technology is regarded as being included in the OFCDM, and the term "OFCDM" will thus be used hereinafter. The OFDM and OFCDM will be briefly described below.

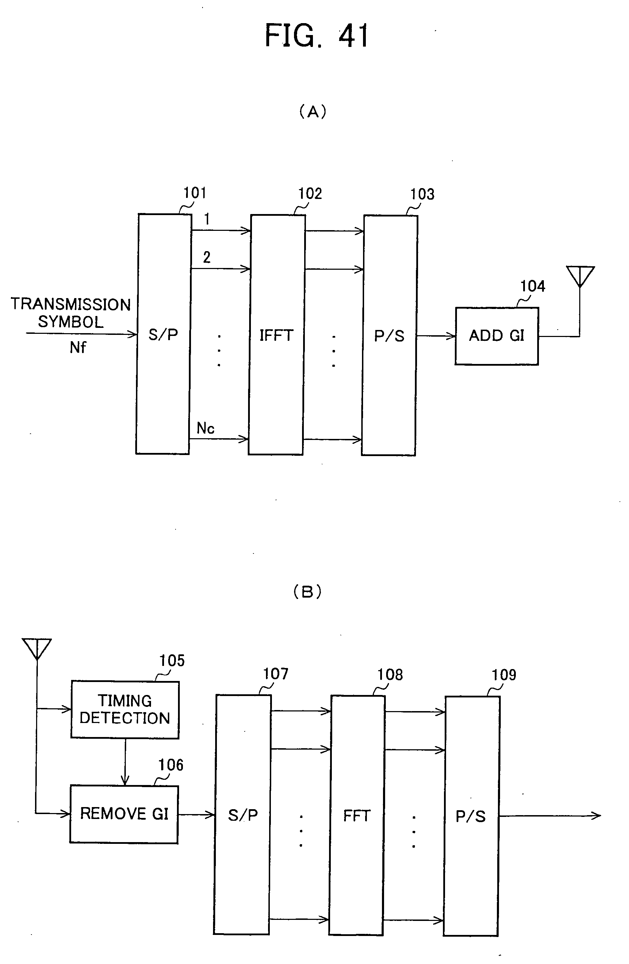

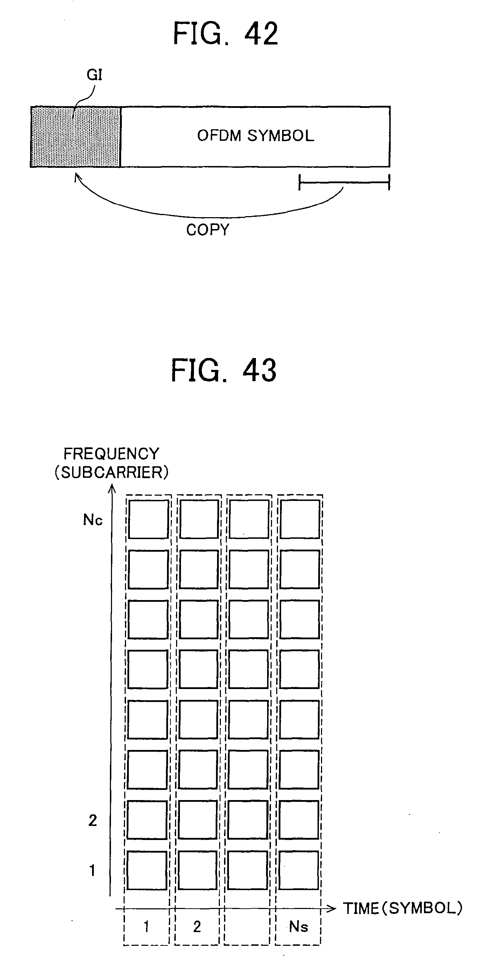

Fig. 41 is a block diagram of OFDM. The number of transmission symbols for one frame is assumed to be Nf = Ns × Nc. Nc indicates the number of subcarriers and Ns indicates the number of OFDM symbols. Although pilot symbols for estimating channels (wireless channels) are typically included in addition to those described above, the descriptions thereof will be omitted herein.
In a transmitter shown in Fig. 41(A), transmission symbols converted into parallel symbols for respective Nc symbols by an S/P conversion (serial-to-parallel conversion) 101 become subcarrier components, which are then subjected to IFFT (Inverse Fast Fourier Transform) processing 102 and are subjected to P/S conversion (parallel-to-serial conversion) 103, so that a sequence of time signals is obtained. In this case, a processing portion of FFT (fast Fourier transform) is one symbol of OFDM. Add GI 104 adds a GI (guard interval) for each OFDM symbol. As shown in Fig. 42, a signal at the rear part of an OFDM symbols is inserted into the front of the OFDM symbol as the guard interval. The guard interval can reduce interference caused by delayed waves in wireless channels.

Fig. 43 shows the arrangement of transmission symbols of transmission signals in one frame. In this example, one frame consists of Ns OFDM symbols and, in OFDM symbols, transmission symbols are sequentially arranged in the frequency direction.

In a receiver shown in Fig. 41(B), a Remove GI 106 performs cutout for each OFDM symbol, that is, for each FFT, in accordance with a result of detection performed by timing detection 105. After S/P conversion 107 is performed, FFT processing 108 is performed, and each subcarrier component is extracted. Thereafter, P/S conversion 109 is performed, so that a series of symbols having the same sequence as an arrangement of symbols of the transmission frame.

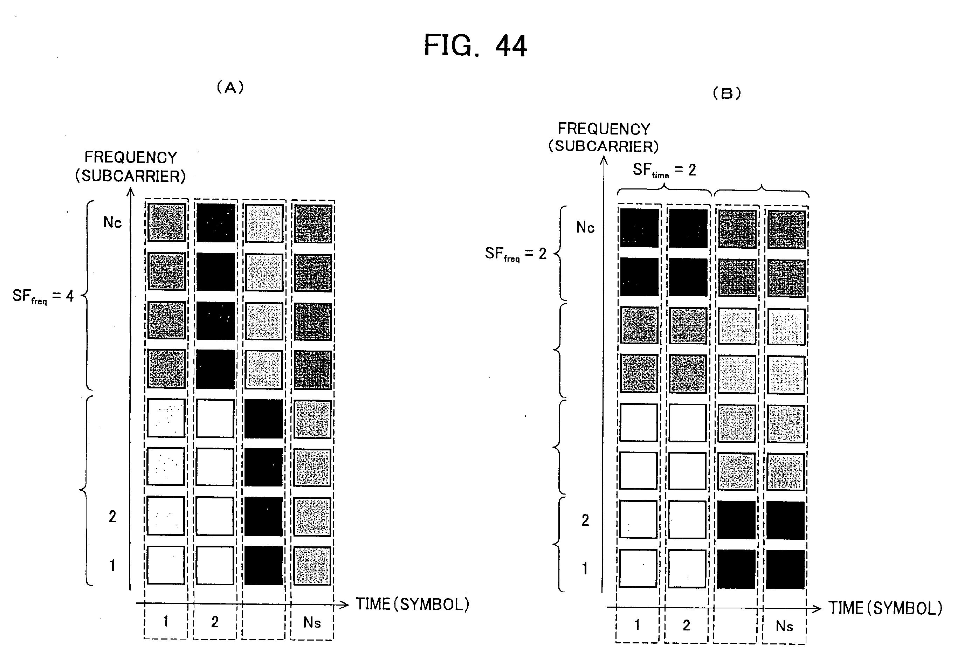

In the OFCDM, frequency-domain or time-domain spreading is performed to arrange the same transmission symbols over multiple subcarriers or multiple OFDM symbols, as shown in Fig. 44. In Fig. 44(A), the frequency-domain spreading ratio is 4 and the same data symbol is transmitted over four subcarriers. In Fig. 44 (B), the frequency-domain spreading ratio is 2 and the time-domain spreading ratio is 2, and the same data symbol is transmitted over two subcarriers and two OFDM symbols. In these examples, since spreading with a spreading ratio of 4 is performed, the transmission speed of the transmission symbols decreases to one fourth. This is the concept of spectrum spreading, and transmission of signals using a wider frequency bands or a larger time slots than frequency bands or time slots which are required for transmission of transmission symbols makes it possible to reduce the signal power density. Also, the use of a wider frequency range can provide a frequency diversity effect. In addition, multiplying an orthogonal code as a spreading code during spreading allows different transmission symbols to be multiplexed and transmitted using the same domain. This is the concept of code division multiplexing. The code division multiplexing allows the transmission speed to be increased and allows the transmission speed to be controlled so as to correspond to a channel environment.

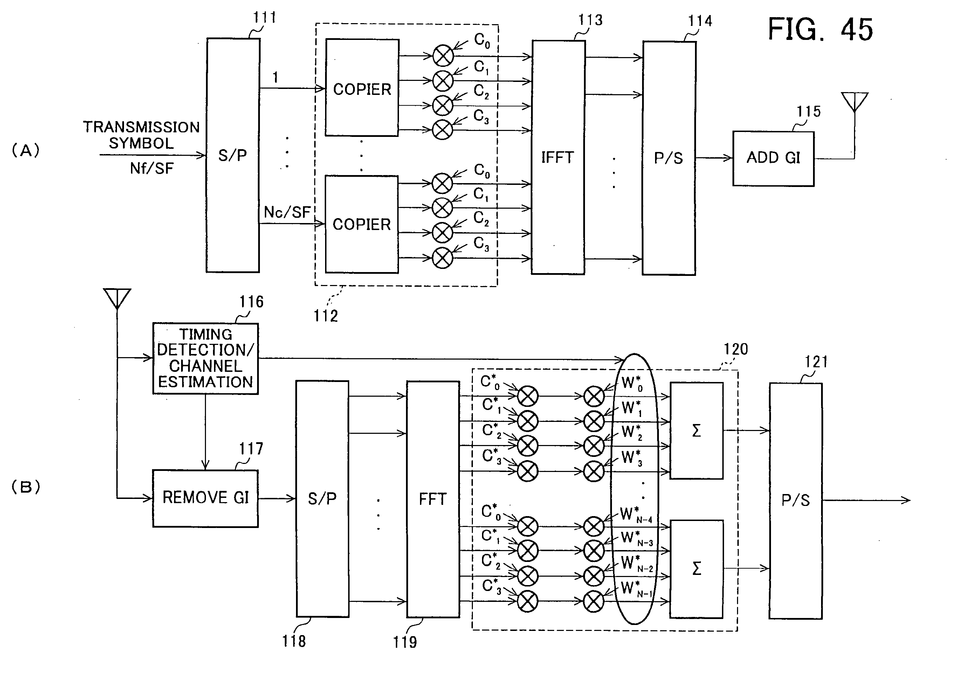

Fig. 45 is a block diagram showing a typical OFCDM transmitter and receiver, Fig. 45(A) showing the transmitter and Fig. 45(B) showing the receiver.
In the transmitter, the spreading ratio for frequency domain spreading is assumed to be SF. The number of transmission symbols for one frame is 1/SF of that in OFDM. Symbols, converted into parallel symbols for respective Nc/SF symbols by an S/P conversion 111, are subjected to frequency-domain spreading processing and thus become subcarrier components. Frequency-domain spreading processing 112 copies one symbol onto SF subcarrier components, which are then multiplied by spreading codes {C₀, C₁, ..., C_{SF-1}}. In this case, a complex valued sequence having a code length SF is used as the spreading codes. In addition, IFFT processing 113 and P/S conversion 114 are performed to obtain a sequence of time signals. Add GI 115 further adds a GI (guard interval) for each OFDM symbol.

In the receiver shown in Fig. 45(B), timing-detection/channel-estimation processing 116 performs timing detection and channel estimation to determine timing for extracting a reception signal for performing FFT processing and channel estimation values. From the channel estimation values, a weighting factor by which each subcarrier is to be multiplied after FFT is determined.

A guard interval of the reception signal is removed by Remove GI 117 and the control channel is demodulated. Since the control channel has been subjected to OFCDM modulation involving frequency domain spreading, complex conjugates of spreading codes used for the spreading and the weighting factors determined by the channel estimating portion are used to perform despreading processing. While there are various ways of determining the weighting factors, complex conjugates of channel coefficients {W₀, W₁, ..., W_{N-1}} corresponding to respective subcarriers are used in this case. In this case, S/P conversion 118, FFT processing 119, frequency-domain despreading 120, and P/S conversion 121 are executed.

An OFDM-based SCS-MC-CDMA scheme (Non-Patent Document 1) and an OFDM-based VSF-OFCDM scheme (Non-Patent Document 2) are considered for next-generation cellular mobile communication systems. In the SCS-MC-CDMA scheme, a control channel and a communication channel are arranged over different subcarriers on a frequency axis. On the other hand, the VSF-OFCDM scheme is a method for multiplexing a data channel spread in a time domain and a control channel spread in both time and frequency domains by using orthogonal codes.

As an invention related to the OFDM and MC-CDMA, Patent Document 1 is available. In the document, in a cellular mobile communication system, the use of OFDM and the use of MC-CDMA are switched for each transmission slot, depending on the state of a channel between a mobile terminal and a base station.
Patent Document 1: Japanese Laid-Open Patent Publication No. 2004-158901
Non-Patent Document 1: Nagate, et al., "A Study on Common Control Channel Synchronization for SCS-MC-CDMA Systems", The 2004 IEICE General Conference B-5-81
Non-Patent Document 2: Kishiyama, et al., "Field Experiments on Adaptive Modulation and Channel Coding for VSF-OFCDM Broadband Wireless Access in Forward Link", The 2004 IEICE General Conference B-5-94

### DISCLOSURE OF THE INVENTION

### PROBLEMS TO BE SOLVED BY THE INVENTION

In the above-noted SCS-MC-CDMA, a part of multiple subcarriers used for OFDM is assigned as a control channel. In this case, there are problems in that a specific subcarrier cannot be used for data transmission and it is difficult to obtain a frequency diversity effect. In VSF-OFCDM, the number of multiplexing codes is restricted according to a portion assigned to the control channel and codes must be assigned so that the control channel and the traffic channel do not interfere with each other. Thus, there is a problem in that the freedom of wireless parameters, such as a spreading ratio, decreases. It is also possible to assign a specific symbol in a frame as a control channel, but such an arrangement also has problems in that the transmission speed decreases and the freedom of wireless parameters decreases.
For example, with a spreading ratio of 8 for the traffic channel, even when the traffic channel has a low speed and a spreading ratio corresponding to a required transmission speed is 128, only seven codes can be assigned to the traffic channel and the transmission speed thus decreases.
Problems similar to those described above also arise when a continuous low-speed data channel and a noncontinuous high-speed channel are multiplexed.

The present invention has been made in view of the foregoing situations, and an object of the present invention is to overcome problems in multiplexing a traffic channel that allows high-speed data transmission and a control channel that transmits a low-speed control signal in next-generation cellular mobile communication systems and so on.

Another object of the present invention is to overcome problems in multiplexing a traffic channel 1 for performing high-speed data transmission and a traffic channel 2 for performing low-speed data transmission in next-generation cellular mobile communication systems and so on.

### MEANS FOR SOLVING THE PROBLEMS

In order to overcome the problems described above, there is a need for a high-freedom channel assigning method that is different from the known methods. That is, the traffic channel and the control channel are multiplexed using signals that are not orthogonal in any of time axis, frequency axis, and code.

The use of the non-orthogonal signals causes the control channel and the traffic channel to interfere with each other. In general, a traffic channel is high in speed and the transmission therefor thus requires large amount of power. On the other hand, a control channel is low in speed and the power of the entire channel is low. However, when an error occurs in the control channel, there is a possibility that data in the traffic channel cannot be accurately processed, and the control channel thus requires a high communication quality. The rate of the power for the control channel to the entire signals is small; therefore, even when the power for the control channel is set to be relatively large, the influence on the entire signals is small. Accordingly, power is distributed such that power for the control channel is set to be relatively large to reduce an error ratio. With this arrangement, even when the control channel is interfered with by the traffic channel, reception can be accurately performed.

When the power for the control channel is increased, interference from the control channel to the traffic channel also increases. This problem can be dealt with by using an interference removing (canceling) technology, as needed. When the channel quality is sufficiently high, traffic channel reception is possible without the use of the interference removal. When the channel quality is low, a method in which copies (replicas) of a control channel signal are generated after determination of a control channel symbol and a method in which re-encoded is performed after decoding of the control channel and replicas are generated are available and are selectively usable in accordance with the channel quality.

When traffic channel information transmitted in the same frame is contained in a control channel, processing on the control channel is first performed and a judgment is made as to whether or not information addressed to the self station is contained in a traffic channel. Thus, reception processing does not have to be performed on an unnecessary traffic channel. When information addressed to the self station is contained in a traffic channel and the channel quality is not so favorable, generation of replicas of a control channel signal and cancellation of the replicas from a reception signal makes it possible to reduce deterioration of the traffic channel quality. This is also effective for a case in which traffic channel information of a frame to be subsequently sent is carried on a control channel contained in a previously-sent frame.

A combination of a high-speed traffic channel and a low-speed control channel has been described above. Many of the functions can be directly applied to a case in which two traffic channels having different speeds exist, but the combination is not limited to a combination of the control channel and the traffic channel.

Means for solving the problems of the present invention are described in detail below.
A first technical means is a communication system using an orthogonal frequency division multiplexing (OFDM) technology, the communication system comprising: a traffic channel for transmitting traffic data and a control channel for transmitting control data, wherein a traffic channel signal generated using OFDM modulation and a control channel signal generated using a signal that is not orthogonal in any of time, frequency, and code relative to the traffic channel signal are multiplexed to generate a transmission signal.

A second technical means is the communication system of the first technical means, wherein the control channel signal is a signal spread over multiple subcarriers or multiple OFDM symbols of the OFDM-modulated traffic channel signal or over both the domains.

A third technical means is the communication system of the first technical means, wherein the control channel signal is a signal encoded using low-rate block codes, and codewords therefor are signals configured to be transmitted using multiple subcarriers of a single OFDM symbol.

A fourth technical means is the communication system of the first technical means, wherein a receiving station receives a signal in which the traffic channel and the control channel are multiplexed, generates copies of the control channel signal, multiplexed in a reception signal, from reception symbols obtained by demodulating the control channel and determining a signal point, removes control channel signal components from the reception signal, and then performs demodulation on the traffic channel.

A fifth technical means is the communication system of the first technical means, wherein data of the control channel is subjected to error correction encoding; and a receiving station receives a signal in which the traffic channel and the control channel are multiplexed, generates copies of the control channel signal, multiplexed in a reception signal, from control channel data obtained by demodulating/decoding the control channel, removes control channel signal components from the reception signal, and then performs demodulation processing on the traffic channel.

A sixth technical means is the communication system of the first technical means, wherein data of the control channel is subjected to error correction encoding and the data of the control channel contains address information of the traffic channel transmitted at present time or subsequently; and a receiving station receives a signal in which the traffic channel and the control channel are multiplexed, extracts control channel data by demodulating/decoding the control channel, and determines whether or not information addressed to the self station is contained in the traffic channel in accordance with control information obtained previously or at present time, and, when information addressed to the self station is contained in the traffic channel, the receiving station generates copies of the control channel signal, multiplexed in a reception signal, from the extracted control channel data, removes control channel signal components from the reception signal, and then performs demodulation processing on the traffic channel.

A seventh technical means is a communication system using an orthogonal frequency division multiplexing (OFDM) technology, the communication system comprising: a traffic channel 1 for transmitting high-speed traffic data and a traffic channel 2 for transmitting low-speed traffic data, wherein a traffic-channel-1 signal generated using OFDM modulation and a traffic-channel-2 signal generated using a signal that is not orthogonal in any of time, frequency, and code relative to the traffic-channel-1 signal are multiplexed to generate a transmission signal.

An eighth technical means is the communication system of the seventh technical means, wherein the traffic-channel-2 signal is a signal spread over multiple subcarriers or multiple OFDM symbols of the OFDM-modulated traffic-channel-1 signal or over both the domains.

A ninth technical means is the communication system of the seventh technical means, wherein the traffic-channel-2 signal is a signal encoded using low-rate block codes, and codewords therefor are signals configured to be transmitted using multiple subcarriers of a single OFDM symbol.

A tenth technical means is the communication system of the seventh technical means, wherein a receiving station receives a signal in which the traffic channel 1 and the traffic channel 2 are multiplexed, generates copies of the traffic-channel-2 signal, multiplexed in a reception signal, from a traffic-channel-2 symbol obtained by demodulating the traffic channel 2 and determining a signal point, removes signal components of the traffic channel 2 from the reception signal, and then performs demodulation processing on the traffic channel 1.

An eleventh technical means is the communication system of the seventh technical means, wherein data of the traffic channel 2 is subjected to error correction encoding; and a receiving station receives a signal in which the traffic channel 1 and the traffic channel 2 are multiplexed, generates copies of the traffic-channel-2 signal, multiplexed in a reception signal, from the traffic-channel-2 data obtained by demodulating/decoding the traffic channel 2, removes signal components of the traffic channel 2 from the reception signal, and then performs demodulation on the traffic channel 1.

A twelfth technical means is a transmitter apparatus using orthogonal frequency division multiplexing (OFDM) modulation, the transmitter apparatus comprising: means for generating a traffic channel signal by performing OFDM modulation on traffic channel data; means for generating a control channel signal from control channel data by using a signal that is not orthogonal in any of time, frequency, and code relative to the traffic channel signal; and means for generating a transmission signal by multiplexing the traffic channel signal and the control channel signal.

A thirteenth technical means is the transmitter apparatus of the twelfth technical means, wherein the control-channel-signal generating means comprises means for spreading a control channel symbol for transmitting control channel data over multiple subcarriers or multiple OFDM symbols of the OFDM-modulated traffic channel signal or over both the domains.

A fourteenth technical means is the transmitter apparatus of the twelfth technical means, wherein the control-channel-signal generating means comprises encoding means using low-rate block codes and means for arranging codewords therefor so that the codewords are transmitted using multiple subcarriers of a single OFDM symbol.

A fifteenth technical means is a receiver apparatus for receiving a signal transmitted from the transmitter apparatus of the twelfth technical means, the receiver apparatus comprising: means for generating copies of the control channel signal, multiplexed in a reception signal, from a reception symbol obtained by demodulating the control channel and determining a signal point; and means for removing control channel signal components from the reception signal.

A sixteenth technical means is a receiver apparatus for receiving a signal transmitted from the transmitter apparatus of the twelfth technical means, wherein data of the control channel has been subjected to error correction encoding; and the receiver apparatus comprises means for generating copies of the control channel signal, multiplexed in a reception signal, from control channel data obtained by demodulating/decoding the control channel and means for removing control channel signal components from the reception signal.

A seventeenth technical means is a receiver apparatus for receiving a signal transmitted from the transmitter apparatus of the twelfth technical means, wherein data of the control channel has been subjected to error correction encoding; and the receiver apparatus comprises means for extracting control channel data by demodulating/decoding the control channel and determines whether or not information addressed to the self station is contained in the traffic channel in accordance with control information obtained previously or at present time, and when information addressed to the self station is contained in the traffic channel, the receiver apparatus generates copies of the control channel signal, multiplexed in a reception signal, from the extracted control channel data, removes control channel signal components from the reception signal, and then performs demodulation processing on the traffic channel.

An eighteenth technical means is a receiver apparatus for receiving a signal transmitted from the transmitter apparatus of the twelfth technical means, the receiver apparatus comprising: a canceling function 1 for receiving a signal in which the traffic channel and the control channel are multiplexed, for generating copies of the control channel from a control channel symbol obtained by performing demodulation and determination on the control channel, and for removing control channel signal components from a reception signal; and a canceling function 2 for receiving a signal in which the traffic channel and the control channel are multiplexed, for generating copies of the control channel, multiplexed in the reception signal, from control channel data obtained by demodulating/decoding the control channel, and for removing control channel signal components from the reception signal, wherein in accordance with a channel quality, one of the canceling function 1, the canceling function 2, and no canceling is selected to perform demodulation processing on the traffic channel.

A nineteenth technical means is a receiver apparatus for receiving a signal transmitted from the transmitter apparatus of the twelfth technical means, the receiver apparatus comprising only one of two canceling functions consisting of: a canceling function 1 for receiving a signal in which the traffic channel and the control channel are multiplexed, for generating copies of the control channel signal, multiplexed in a reception signal, from a control channel symbol obtained by performing demodulation and determination on the control channel, and for removing control channel signal components from the reception signal; and a canceling function 2 for receiving a signal in which the traffic channel and the control channel are multiplexed, for generating copies of the control channel, multiplexed in the reception signal, from control channel data obtained by demodulating/decoding the control channel, and for removing control channel signal components from the reception signal, wherein in accordance with a channel quality, one of canceling and no canceling is selected to perform demodulation on the traffic channel.

A twentieth technical means is a transmitter apparatus using orthogonal frequency division multiplexing (OFDM) modulation, the transmitter apparatus comprising: means for generating a signal of a traffic channel 1 by performing OFDM modulation on data of the traffic channel 1; means for generating a signal of a traffic channel 2 by using a signal that is not orthogonal in any of time, frequency, and code relative to the traffic-channel-1 signal; and means for generating a transmission signal by multiplexing the traffic-channel-1 signal and the traffic-channel-2 signal.

A twenty-first technical means is the transmitter apparatus of the twentieth technical means, wherein the means for generating the traffic-channel-2 signal comprises means for spreading a symbol for transmitting the traffic channel 2 over multiple subcarriers or multiple OFDM symbols of the OFDM-modulated signal of the traffic channel 1 or over both the domains.

A twenty-second technical means is the transmitter apparatus of the twentieth technical means, wherein the means for generating the traffic-channel-2 signal comprises encoding means using low-rate block codes and means for arranging codewords therefor so that the codewords are transmitted using multiple subcarriers of a single OFDM symbol.

A twenty-third technical means is a receiver apparatus for receiving a signal transmitted from the transmitter apparatus of the twentieth technical means, the receiver apparatus comprising: means for generating copies of the traffic-channel-2 signal, multiplexed in a reception signal, from a traffic-channel-2 symbol obtained by demodulating the traffic channel 2 and determining a signal point; and means for removing signal components of the traffic channel 2 from the reception signal.

A twenty-fourth technical means is a receiver apparatus for receiving a signal transmitted from the transmitter apparatus of the twentieth technical means, wherein data of the traffic channel 2 has been subjected to error correction encoding; and the receiver apparatus comprises means for copying the traffic-channel-2 signal, multiplexed in a reception signal, from traffic-channel-2 data obtained by demodulating/decoding the traffic channel 2; and means for removing signal components of the traffic channel 2 from the reception signal.

A twenty-fifth technical means is a receiver apparatus for receiving a signal transmitted from the transmitter apparatus of the twentieth technical means, the receiver apparatus comprising: a canceling function 1 for generating copies of the traffic-channel-2 signal, multiplexed in a reception signal, from a traffic-channel-2 symbol obtained by performing demodulation and determination on the traffic channel 2 and for removing signal components of the traffic channel 2 from the reception signal; and a canceling function 2 for generating copies of the traffic-channel-2 signal, multiplexed in the reception signal, from traffic-channel-2 data obtained by demodulating/decoding the traffic channel 2 and for removing signal components of the traffic channel 2 from the reception signal, wherein in accordance with a channel quality, one of the canceling function 1, the canceling function 2, and no canceling is selected to perform demodulation on the traffic channel 1.

A twenty-sixth technical means is a receiver apparatus for receiving a signal transmitted from the transmitter apparatus of the twentieth technical means, the receiver apparatus comprising only one of: a canceling function 1 for generating copies of the traffic-channel-2 signal, multiplexed in a reception signal, from a traffic-channel-2 symbol obtained by performing demodulation and determination on the traffic channel 2 and for removing signal components of the traffic channel 2 from the reception signal; and a canceling function 2 for generating copies of the traffic-channel-2, multiplexed in the reception signal, from traffic-channel-2 data obtained by demodulating/decoding the traffic channel 2 and for removing signal components of the traffic channel 2 from the reception signal, wherein in accordance with a channel quality, one of canceling and no canceling is selected to perform demodulation on the traffic channel 1.

A twenty-seventh technical means is a transmitter apparatus using an orthogonal frequency division multiplexing (OFDM) technology and using a modulation scheme (OFCDM modulation) in which a signal subjected to OFDM modulation by using the OFDM technology is a signal spread over multiple subcarriers, multiple OFDM symbols, or both the domains, the transmitter apparatus comprising: traffic-channel-signal generating means for generating a traffic channel signal by performing OFCDM modulation on traffic channel data; control-channel-signal generating means for generating a control channel signal from control channel data by using a signal that is not orthogonal in any of time, frequency, and code relative to the traffic channel signal; and transmission-signal generating means for generating a transmission signal by multiplexing the traffic channel signal and the control channel signal.

A twenty-eighth technical means is a transmitter apparatus using an orthogonal frequency division multiplexing (OFDM) technology and using a modulation scheme (OFCDM modulation) in which a signal subjected to OFDM modulation by using the OFDM technology is a signal spread over multiple subcarriers, over multiple OFDM symbols, or over both the domains, the transmitter apparatus comprising: traffic-channel-signal generating means for generating a traffic channel signal by performing OFCDM modulation on traffic channel data; control-channel-signal generating means for generating a control channel signal by modulating control channel data by an arbitrary scheme; switching means for switching between a non-orthogonal signal, with which the control channel signal and the traffic channel signal are not orthogonal to each other in any of time, frequency, and code, and an orthogonal signal, with which the control channel signal and the traffic channel signal are orthogonal to each other in any of time, frequency, and code; and transmission-signal generating means for generating a transmission signal by multiplexing the traffic channel signal and the control channel signal.

A twenty-ninth technical means is the transmitter apparatus of the twenty-eighth technical means, wherein the switching means performs switching to the non-orthogonal signal when a channel quality is favorable, and performs switching to the orthogonal signal when the channel quality is poor.

A thirtieth technical means is the transmitter apparatus of the twenty-eighth technical means, wherein the switching means switches between the non-orthogonal signal and the orthogonal signal in accordance with the number of spreading codes currently used for the traffic channel signal.

A thirty-first technical means is the transmitter apparatus of any one of the twenty-seventh to thirtieth technical means, wherein the control channel signal generated by the control-channel-signal generating means is a signal subjected to the OFCDM modulation.

A thirty-second technical means is the transmitter apparatus of the twenty-seventh technical means, wherein the control-channel-signal generating means comprises encoding means using low-rate block code and means for arranging codewords therefor so that the codewords are transmitted using multiple subcarriers of a single OFDM symbol.

A thirty-third technical means is the receiver apparatus for receiving a signal transmitted from the transmitter apparatus of any one of the twenty-seventh to thirty-second technical means, comprising: control-channel-signal processing means for performing demodulation processing on control channel data from the control channel signal; traffic-channel-signal processing means for performing demodulation processing on traffic channel data by performing OFCDM demodulation on the traffic channel signal; and control-channel canceller means comprising means for demodulating the control channel signal and generating copies of the control channel signal, multiplexed in a reception signal, from the demodulated signal and means for removing control channel signal components from the reception signal.

A thirty-fourth technical means is the receiver apparatus of the thirty-third technical means, wherein the control-channel canceller means generates copies of the control channel signal, multiplexed in the reception signal, from a control channel symbol obtained by demodulating the control channel signal and causing determining means to determine a signal point, removes control channel signal components from the reception signal, and then demodulates the traffic channel signal.

A thirty-fifth technical means is the receiver apparatus of the thirty-third technical means, wherein the control-channel canceller means generates copies of the control channel signal, multiplexed in the reception signal, from control channel data obtained by demodulating the control channel signal and causing error-correction-code decoding means to decode the demodulated control channel signal, removes control channel signal components from the reception signal, and then performs demodulation processing on the traffic channel signal.

A thirty-sixth technical means is the receiver apparatus of the thirty-fourth or thirty-fifth technical means, wherein in accordance with control information obtained previously or at the present time, the control-channel canceller means judges whether or not information addressed to the self station is contained in the traffic channel, and upon determining that information addressed to the self station is contained in the traffic channel, the control-channel canceller means generates copies of the control channel signal multiplexed in the reception signal, removes control channel signal components from the reception signal, and then performs demodulation processing on the traffic channel signal.

A thirty-seventh technical means is the receiver apparatus of the thirty-third technical means, wherein the control-channel canceller means comprises: canceling (1) means for generating copies of the control channel from a control channel symbol obtained by demodulating the control channel signal and causing determining means to determine a signal point and for removing control channel signal components from the reception signal; and canceling (2) means for generating copies of the control channel, multiplexed in the reception signal, from control channel data obtained by demodulating/decoding the control channel and for removing control channel signal components from the reception signal, wherein in accordance with a channel quality, one of the canceling (1) means, the canceling (2) means, and means for preventing execution of canceling is selected to perform demodulation processing on the traffic channel.

A thirty-eighth technical means is the receiver apparatus of the thirty-third technical means, wherein the control-channel canceller means comprises only one of two canceling means consisting of: canceling (1) means for receiving a signal in which the traffic channel and the control channel are multiplexed, for generating copies of the control channel signal, multiplexed in the reception signal, from a control channel symbol obtained by performing demodulation and determination on the control channel, and for removing control channel signal components from the reception signal; and canceling (2) means for receiving a signal in which the traffic channel and the control channel are multiplexed, for generating copies of the control channel, multiplexed in the reception signal, from control channel data obtained by performing demodulation and decoding on the control channel, and for removing control channel signal components from the reception signal, wherein in accordance with a channel quality, whether or not canceling is to be executed is selected to perform demodulation on the traffic channel.

A thirty-ninth technical means is a receiver apparatus for receiving a signal transmitted from the transmitter apparatus of any one of the twenty-eighth to thirtieth technical means, the receiver apparatus comprising: traffic-channel-signal processing means for performing OFCDM demodulation on a traffic channel signal to perform demodulation processing on traffic channel data; control-channel-signal processing means for performing demodulation processing of control channel data from a control channel signal; switching means for changing time, frequency or code so as to allow demodulation with any of a non-orthogonal signal, with which the control channel signal and the traffic channel signal are not orthogonal to each other in any of time, frequency, and code, and an orthogonal signal, with which the control channel signal and the traffic channel signal are orthogonal to each other in any of time, frequency, and code; and control-channel canceller means comprising copying means for generating copies of the control channel signal, multiplexed in a reception signal, from a reception symbol or reception data obtained by demodulating the control channel and removing means for removing control channel signal components from the reception signal; wherein when the control channel is the orthogonal signal, the traffic channel is demodulated, and when the control channel is not the orthogonal signal, the control-channel canceller means cancels the control channel from the reception signal and then performs demodulation on the traffic channel.

A fortieth technical means is a receiver apparatus for receiving a signal transmitted from the transmitter apparatus of any one of the twenty-eighth to thirtieth technical means, the receiver apparatus comprising: traffic-channel-signal processing means for performing OFCDM demodulation on a traffic channel signal to perform demodulation processing on traffic channel data; control-channel-signal processing means for performing demodulation processing of control channel data from a control channel signal; switching means for changing time, frequency or code so as to allow demodulation with any of a non-orthogonal signal, with which the control channel signal and the traffic channel signal are not orthogonal to each other in any of time, frequency, and code, and an orthogonal signal, with which the control channel signal and the traffic channel signal are orthogonal to each other in any of time, frequency, and code; and control-channel canceller means comprising copying means for generating copies of the control channel signal, multiplexed in a reception signal, from a reception symbol or reception data obtained by demodulating the control channel and removing means for removing control channel signal components from the reception signal; wherein, by using signals resulting from the copying performed by the copying means, the control-channel canceller means judges whether or not the removing means executes canceling of the control channel from the reception signal, performs selection, and performs demodulation on the traffic channel, in accordance with a channel quality and with whether or not the orthogonal signal or the non-orthogonal signal is used.

A forty-first technical means is a transmitter apparatus using an orthogonal frequency division multiplexing (OFDM) technology and using a modulation scheme (OFCDM modulation) in which a signal subjected to OFDM modulation by using the OFDM technology is a signal spread over multiple subcarriers, multiple OFDM symbols, or both the domains, the transmitter apparatus comprising: traffic-channel-signal-1 generating means for generating a traffic channel signal 1 by performing OFCDM modulation on traffic channel data 1; traffic-channel-signal-2 generating means for generating a traffic channel signal 2 from traffic channel data 2 by using a signal that is not orthogonal in any of time, frequency, and code relative to the traffic channel signal 1, the traffic channel data 2 being low in speed compared to the traffic channel data 1; and transmission-signal generating means for generating a transmission signal by multiplexing the traffic channel signal 1 and the traffic channel signal 2.

A forty-second technical means is a transmitter apparatus using an orthogonal frequency division multiplexing (OFDM) technology and using a modulation scheme (OFCDM modulation) in which a signal subjected to OFDM modulation by using the OFDM technology is a signal spread over multiple subcarriers, over multiple OFDM symbols, or over both the domains, the transmitter apparatus comprising: traffic-channel-signal-1 generating means for generating a traffic channel signal 1 by performing OFCDM modulation on traffic channel data 1; traffic-channel-2 signal generating means for generating a signal of a traffic channel 2 by modulating traffic channel data 2 by an arbitrary scheme; switching means for switching between a non-orthogonal signal, with which the traffic-channel-2 signal and the traffic-channel-1 signal are not orthogonal to each other in any of time, frequency, and code, and an orthogonal signal, with which the traffic-channel-2 signal and the traffic-channel-1 signal are orthogonal to each other in any of time, frequency, and code; and transmission-signal generating means for generating a transmission signal by multiplexing the traffic channel signal 1 and the traffic channel signal 2.

A forty-third technical means is the transmitter apparatus of the forty-second technical means, wherein the switching means performs switching to the non-orthogonal signal when a channel quality is favorable, and performs switching to the orthogonal signal when the channel quality is poor.

A forty-fourth technical means is the transmitter apparatus of the forty-second technical means, wherein the switching means switches between the non-orthogonal signal and the orthogonal signal in accordance with the number of spreading codes currently used for the traffic-channel-1 signal.

A forty-fifth technical means is the transmitter apparatus of any one of the forty-first to forty-fourth technical means, wherein the traffic-channel-2 signal generated by the traffic-channel-signal-2 generating means is a signal subjected to the OFCDM modulation.

A forty-sixth technical means is the transmitter apparatus of the forty-first technical means, wherein the traffic-channel-signal-2 generating means comprises encoding means using low-rate block code and means for arranging codewords therefor so that the codewords are transmitted using multiple subcarriers of a single OFDM symbol.

A forty-seventh technical means is the receiver apparatus for receiving a signal transmitted from the transmitter apparatus of any one of the forty-first to forty-sixth technical means, comprising: the receiver apparatus comprising: traffic-channel-1 signal processing means for performing OFCDM demodulation on the traffic channel signal 1 to perform demodulation processing on the traffic channel data 1; traffic-channel-2 signal processing means for performing demodulation processing on traffic channel data 2 from a traffic channel signal 2, the traffic channel data 2 being low in speed compared to the traffic channel data 1; and traffic-channel-2 canceller means comprising means for generating copies of the traffic channel signal 2 multiplexed in a reception signal and means for removing components of the traffic channel signal 2 from the reception signal.

A forty-eighth technical means is the receiver apparatus of the forty-seventh technical means, wherein in accordance with the traffic channel data 2 obtained by demodulating the traffic channel 2 and causing error-correction-code decoding means to perform decoding, the traffic-channel canceller means generates copies of the traffic channel signal 2 multiplexed in the reception signal and removes signal components of the traffic channel 2 from the reception signal.

A forty-ninth technical means is the receiver apparatus of the forty-seventh technical means, wherein in accordance with a traffic channel 2 symbol obtained by demodulating the traffic channel signal 2 and causing determining means to determine a signal point, the traffic-channel canceller means generates copies of the traffic channel signal 2 multiplexed in the reception signal and removes components of the traffic channel signal 2 from the reception signal.

A fiftieth technical means is the receiver apparatus of the forty-seventh technical means, wherein the traffic-channel canceller means comprises: canceling (1) means for generating copies of the traffic channel signal 2, multiplexed in the reception signal, from a traffic-channel-2 symbol obtained by demodulating the traffic channel 2 and causing determining means to determine a signal point and for removing components of the traffic channel signal 2 from the reception signal; and canceling (2) means for generating copies of the traffic channel signal 2, multiplexed in the reception signal, from the traffic channel data 2 obtained by demodulating the traffic channel 2 and causing error-correction-code decoding means to decode the demodulated traffic channel 2 and for removing signal components of the traffic channel 2 from the reception signal, wherein one of the canceling (1) means, the canceling (2) means, and means for preventing execution of canceling is selected to perform demodulation on the traffic channel 1.

A fifty-first technical means is the receiver apparatus of the forty-seventh technical means, wherein the traffic-channel canceller means comprises only one of two canceling means consisting of: canceling (1) means for generating copies of the traffic-channel-2 signal, multiplexed in the reception signal, from a traffic-channel-2 symbol obtained by demodulating the traffic channel 2 and performing determination and for removing components of the traffic channel signal 2 from the reception signal; and canceling (2) means for generating copies of the traffic channel 2, multiplexed in the reception signal, from traffic channel data 2 obtained by demodulating/decoding the traffic channel 2 and for removing components of the traffic channel signal 2 from the reception signal, wherein in accordance with a channel quality, whether or not canceling is to be executed is selected to perform demodulation on the traffic channel 1.

A fifty-second technical means is a receiver apparatus for receiving a signal transmitted from the transmitter apparatus of any one of the forty-second to forty-fourth technical means, the receiver apparatus comprising: traffic-channel-1 signal processing means for performing OFCDM demodulation on the traffic channel signal 1 to perform demodulation processing on the traffic channel data 1; traffic-channel-2 signal processing means for demodulating the traffic channel signal 2 to perform demodulation processing on the traffic channel data 2; switching means for changing time, frequency or code so as to allow demodulation with any of a non-orthogonal signal, with which the traffic channel signal 1 and the traffic channel signal 2 are not orthogonal to each other in any of time, frequency, and code, and an orthogonal signal, with which the traffic channel signal 1 and the traffic channel signal 2 are orthogonal to each other in any of time, frequency, and code; and traffic-channel-2 canceller means comprising copying means for generating copies of the traffic channel signal 2, multiplexed in a reception signal, from a reception symbol or reception data obtained by demodulating the traffic channel signal 2 and removing means for removing components of the traffic channel signal 2 from the reception signal; wherein when the traffic channel signal 2 is the orthogonal signal, the traffic channel data 1 is demodulated, and when the traffic channel signal 2 is not the orthogonal signal, the traffic-channel-2 canceller means generates the copies, cancels the traffic channel signal 2 from the reception signal, and then performs demodulation on the traffic channel data 1.

A fifty-third technical means is a receiver apparatus for receiving a signal transmitted from the transmitter apparatus of any one of the forty-second to forty-fourth technical means, the receiver apparatus comprising: traffic-channel-1 signal processing means for performing OFCDM demodulation on the traffic channel signal 1 to perform demodulation processing on the traffic channel data 1; traffic-channel-2 signal processing means for demodulating the traffic channel signal 2 to perform demodulation processing on the traffic channel data 2; switching means for changing time, frequency or code so as to allow demodulation with any of a non-orthogonal signal, with which the traffic channel signal 1 and the traffic channel signal 2 are not orthogonal to each other in any of time, frequency, and code, and an orthogonal signal, with which the traffic channel signal 1 and the traffic channel signal 2 are orthogonal to each other in any of time, frequency, and code; and traffic-channel-2 canceller means comprising copying means for generating copies of the traffic channel signal 2, multiplexed in a reception signal, from a reception symbol or reception data obtained by demodulating the traffic channel signal 2 and removing means for removing components of the traffic channel signal 2 from the reception signal; wherein, by using signals resulting from the copying performed by the copying means, the traffic-channel-2 canceller means determines whether or not the removing means executes canceling of the traffic channel signal 2 from the reception signal, performs selection, and performs demodulation on the traffic channel data 1, in accordance with a channel quality and with whether or not the orthogonal signal or the non-orthogonal signal is used.

A fifty-fourth technical means is a data communication system comprising the transmitter apparatus of any one of the twenty-seventh to thirty-second technical means and the receiver apparatus of any one of the thirty-third to thirty-eighth technical means.

A fifty-fifth technical means is a data communication system comprising the transmitter apparatus of any one of the twenty-eighth to thirty-first technical means and the receiver apparatus of the thirty-ninth or fortieth technical means.

A fifty-sixth technical means is a data communication system comprising the transmitter apparatus of any one of the forty-first to forty-sixth technical means and the receiver apparatus of any one of the forty-seventh to fifty-first technical means.

A fifty-seventh technical means is a data communication system comprising the transmitter apparatus of any one of the forty-second to forty-fifth technical means and the receiver apparatus of fifty-second or fifty-third technical means.

### EFFECT OF THE INVENTION

When a part of multiple subcarriers is assigned as a control channel, as in SCS-MC-CDMA, a specific subcarrier cannot be used for data transmission. When orthogonal codes are assigned to the traffic channel and the control channel, as in VSF-OFCDM, codes corresponding to a spreading ratio cannot be assigned to the traffic channel. For example, with a spreading ratio of 8 for the traffic channel, even when the control channel has a low speed and a spreading ratio corresponding to a required transmission speed is 128, only seven codes can be assigned to the traffic channel and the transmission speed thus decreases.

In contrast, the present invention makes it possible to multiplex a control channel without reducing the transmission speed of a traffic channel. In addition, use of a canceller for removing control channel components makes it possible to minimize deterioration of the traffic channel quality.

According to the transmitter apparatus, the receiver apparatus, and the communication system of the present invention, when OFCDM is used for a control channel, codes that are orthogonal to or that are not orthogonal to spreading codes used for a traffic channel are used based on a channel quality and/or the number of codes in use. This arrangement makes it possible to more efficiently perform transmission.

### BRIEF DESCRIPTION OF THE DRAWINGS

[Fig. 1] Fig. 1 is a block diagram of a transmitter according to a first embodiment of the present invention.
[Fig. 2] Fig. 2 is a block diagram of a traffic-channel-signal generating portion and a control-channel-signal generating portion according to the first embodiment of the present invention.
[Fig. 3] Fig. 3 is a block diagram of a control-channel-signal generating portion according to a second embodiment of the present invention.
[Fig. 4] Fig. 4 is a block diagram of a control-channel-signal generating portion according to a third embodiment of the present invention.
[Fig. 5] Fig. 5 is a block diagram of a transmitter according to a fourth embodiment of the present invention.
[Fig. 6] Fig. 6 is a block diagram of a traffic-channel and control-channel signal generating portion according to the fourth embodiment of the present invention.
[Fig. 7] Fig. 7 is a block diagram of a transmitter according to a fifth embodiment of the present invention.
[Fig. 8] Fig. 8 is a block diagram of a traffic-channel and control-channel signal generating portion according to the fifth embodiment of the present invention.
[Fig. 9] Fig. 9 is a block diagram of a receiver according to a sixth embodiment of the present invention.
[Fig. 10] Fig. 10 is a block diagram of a control-channel-signal canceller portion according to sixth and seventh embodiments of the present invention.
[Fig. 11] Fig. 11 is a block diagram of a receiver according to a seventh embodiment of the present invention.
[Fig. 12] Fig. 12 is a block diagram of a control-channel-signal canceller portion according to the seventh embodiment and a ninth embodiment of the present invention.
[Fig. 13] Fig. 13 is a block diagram of a receiver according to an eighth embodiment of the present invention.
[Fig. 14] Fig. 14 is a block diagram of a receiver according to the ninth embodiment of the present invention.
[Fig. 15] Fig. 15 is a block diagram of a receiver according to a tenth embodiment of the present invention.
[Fig. 16] Fig. 16 is a block diagram of a control-channel-signal canceller portion according to the tenth embodiment of the present invention.
[Fig. 17] Fig. 17 is a flow diagram of a receiver according to an eleventh embodiment of the present invention.
[Fig. 18] Fig. 18 is a flow diagram of a receiver according to a twelfth embodiment of the present invention.
[Fig. 19] Fig. 19 is a block diagram of a transmitter according to a thirteenth embodiment of the present invention.
[Fig. 20] Fig. 20 is a block diagram of a traffic-channel-signal generating portion and a control-channel-signal generating portion in the transmitter according to the thirteenth embodiment of the present invention.
[Fig. 21] Fig. 21 is a block diagram of a control-channel-signal generating portion in a transmitter according to a fourteenth embodiment of the present invention.
[Fig. 22] Fig. 22 is a block diagram of a control-channel-signal generating portion in a transmitter according to a fifteenth embodiment of the present invention.
[Fig. 23] Fig. 23 is a block diagram of a transmitter according to a sixteenth embodiment of the present invention.
[Fig. 24] Fig. 24 is a block diagram of a traffic-channel and control-channel signal generating portion in the transmitter according to the sixteenth embodiment of the present invention.
[Fig. 25] Fig. 25 is a block diagram of a transmitter according to a seventeenth embodiment of the present invention.
[Fig. 26] Fig. 26 is a block diagram of a traffic-channel and control-channel signal generating portion according to the seventeenth embodiment of the present invention.
[Fig. 27] Fig. 27 is a block diagram of a receiver according to an eighteenth embodiment of the present invention.
[Fig. 28] Fig. 28 is a block diagram of a control-channel-signal canceller portion in the receiver according to the eighteenth embodiment of the present invention.
[Fig. 29] Fig. 29 is a block diagram of a receiver according to a nineteenth embodiment of the present invention.
[Fig. 30] Fig. 30 is a block diagram of a control-channel-signal canceller portion in the receiver according to the nineteenth embodiment of the present invention.
[Fig. 31] Fig. 31 is a block diagram of a receiver according to a twentieth embodiment of the present invention.
[Fig. 32] Fig. 32 is a block diagram of a receiver according to a twenty-first embodiment of the present invention.
[Fig. 33] Fig. 33 is a block diagram of a receiver according to a twenty-second embodiment of the present invention.
[Fig. 34] Fig. 34 is a block diagram of a control-channel-signal canceller portion in the receiver according to the twenty-second embodiment of the present invention.
[Fig. 35] Fig. 35 is a block diagram of a traffic-channel-signal generating portion, a control-channel-signal generating portion, and an orthogonal-code generating portion in a transmitter according to a twenty-third embodiment of the present invention.
[Fig. 36] Fig. 36 is a block diagram of a receiver according to a twenty-fourth embodiment of the present invention.
[Fig. 37] Fig. 37 is a block diagram of a receiver according to a twenty-fifth embodiment of the present invention.
[Fig. 38] Fig. 38 is a flow chart showing an operation flow of the receiver according to the twentieth and twenty-first embodiments of the present invention.
[Fig. 39] Fig. 39 is a flow chart showing an operation flow of the receiver according to the twentieth and twenty-first embodiments of the present invention.
[Fig. 40] Fig. 40 is a flow chart showing an operation flow of the receiver according to the twenty-fifth embodiment of the present invention.
[Fig. 41] Fig. 41 is a block diagram of typical OFDM.
[Fig. 42] Fig. 42 is a diagram showing a guard interval of an OFDM signal.
[Fig. 43] Fig. 43 is a diagram showing the structure of the OFDM signal.
[Fig. 44] Fig. 44 is a diagram showing the structure of an OFCDM signal.
[Fig. 45] Fig. 45 is a block diagram of typical OFCDM.

### EXPLANATION OF REFERENCE NUMERALS

1, 5, 24, 100, 104, 1023, 1121, 1444...FEC Encoder; 2, 6, 25, 101, 105, 1025, 1122, 1445...Interleaver; 3, 7, 26, 102, 106, 702, 1026, 1123, 1226, 1446...MOD; 4, 103...traffic-channel-signal generating portion; 8, 107, 300, 400...control-channel-signal generating portion; 9...traffic-channel and control-channel signal generating portion; 11...timing-detection/channel-estimation processing; 12, 234, 950, 1011, 1110, 1210, 1310, 1410...Remove GI; 13, 904, 956, 1012, 1124, 1217, 1420...memory; 14, 905, 957, 1013, 1125, 1218, 1447...control-channel-signal canceller portion; 15...despreading processing; 16, 21, 156, 908, 911, 953, 961, 1020, 1033, 1118, 1129, 1222, 1361, 1364, 1441, 1449...Demod; 17, 22, 909, 912, 954, 962, 1021, 1034, 1119, 1130, 1223, 1362, 1365, 1442, 1450...Deinterleaver; 18, 23, 157, 910, 913, 963, 975, 1022, 1035, 1120, 1131, 1224, 1363, 1366, 1443, 1451...Decoder; 19, 907, 955...Decision; 20, 958, 1126, 1219...traffic channel processing; 41, 81, 87, 91, 92, 141, 151, 201, 230, 230a, 230b, 236, 920a, 920b, 930, 970, 980, 1015, 1028, 1113, 1213, 1320...S/P conversion; 44, 85, 97, 155, 204, 205, 232, 232a, 232b, 238, 924a, 924b, 933, 960, 974, 1019, 1032, 1117, 1128, 1216, 1221...P/S conversion; 42, 83, 95, 143, 202a, 202b...scrambling; 82, 88, 90, 93, 99, 142, 201a, 201b, 301, 401...frequency-domain spreading processing; 43, 84, 96, 231, 231a, 231b, 932...IFFT processing; 45, 86, 98, 233, 233a, 233b...Add GI; 89, 302...MUX; 144...channel-estimation-value multiplication; 94, 147, 148...+; 152, 202, 237, 921a, 921b, 971, 1016, 1029, 1114, 1214, 1330...FFT processing; 153, 203, 922a, 922b, 972, 1017, 1030, 1115, 1215...descrambling; 108, 1350, 1440...orthogonal-code generating portion; 109...orthogonal-code generating device 1; 110...orthogonal-code generating device 2; 111...code switch; 235...timing detector; 240...GI; 500, 700...traffic-channel and control-channel signal generating portion; 501, 934...adder; 701, 1225...Enc; 271, 900, 951, 1010, 1211, 1300, 1400...timing detection and channel estimation processing; 903, 1112...control-channel-signal processing portion; 1212, 1430...control-channel data signal processing portion; 1340...control-channel data signal processing portion (2); 906, 952, 1014, 1027, 1448...traffic-channel-signal processing portion; 1360...traffic data signal processing portion (2); 154, 272, 923a, 923b, 959, 973, 1018, 1031, 1116, 1127, 1220...frequency-domain despreading processing; 270a, 270b, 931a, 931b...copier.

### PREFERRED EMBODIMENTS OF THE INVENTION

### (First Embodiment)

In many wireless communication systems, control information that the user terminals exchange with the wireless communication systems to operate on the systems and control information indicating the attributes of traffic data transmitted are communicated in addition to traffic data, such as audio data, video data, and other packet data, exchanged between user terminals and another terminals.

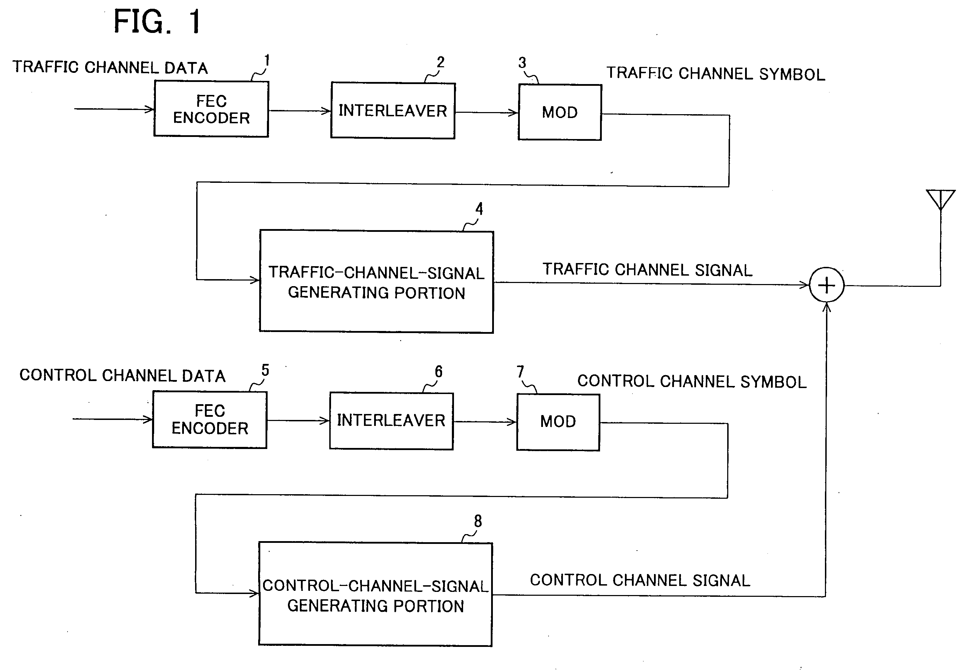

As shown in Fig. 1, in the present invention, traffic channel data and control channel data are encoded by FEC encoders 1 and 5, are interleaved by interleavers 2 and 6, and are subjected to modulation processing by MODs 3 and 7, respectively. A traffic channel data symbol is converted by a traffic-channel-signal generating portion 4 into a traffic channel signal and a control channel symbol is converted by a control-channel-signal generating portion 8 into a control channel signal. These signals are added and transmitted.

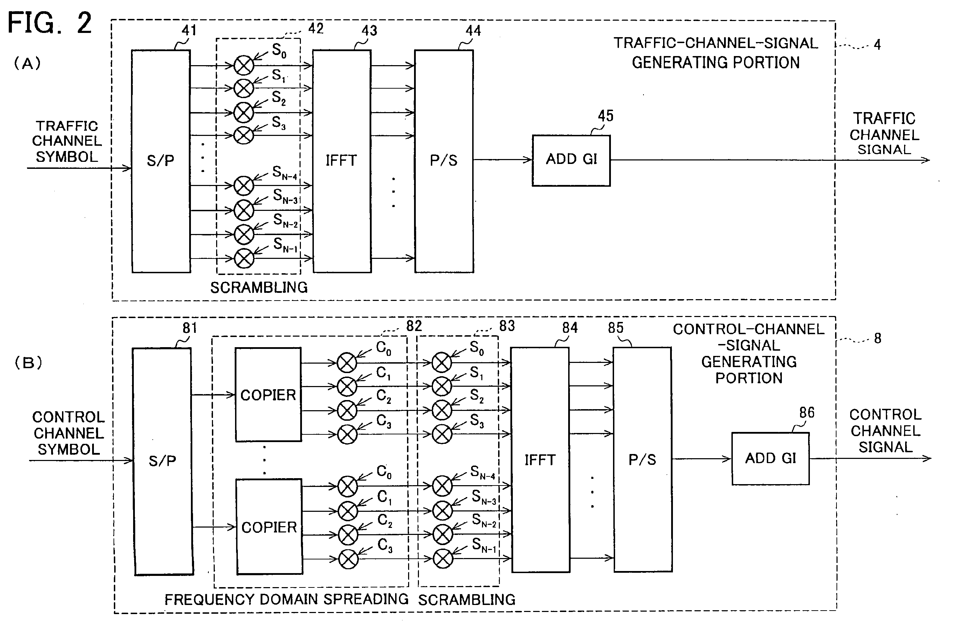

Fig. 2 shows details of the traffic-channel-signal generating portion 4 and the control-channel-signal generating portion 8. In the traffic-channel-signal generating portion 4 shown in Fig. 2(A), after S/P conversion (serial-to-parallel conversion) 41 is performed, the resulting signals are multiplied by cell-specific scrambling codes (scrambling 42) and are subjected to Inverse Fast Fourier Transform processing (IFFT processing) 43. The resulting signals are converted by P/S conversion (parallel-to-serial conversion) 44 into a sequence of time signals, to which a guard interval is added by an Add GI 45.

In the control-channel-signal generating portion 8 shown in Fig. 2(B), after S/P conversion 81 is performed, the control channel symbol is copied so that it is transmitted over multiple subcarriers, and the symbols are multiplied by spreading codes to thereby perform frequency-domain spreading processing 82. Thereafter, as in the traffic-channel-signal generating portion 4, the resulting signals are multiplied by cell-specific scrambling codes (scrambling 83) and are subjected to Inverse Fast Fourier Transform processing (IFFT processing) 84. The resulting signals are further converted by P/S conversion (parallel-to-serial conversion) 85 into a sequence of time signals, to which a guard interval is added by an Add GI 86.

### (Second Embodiment)

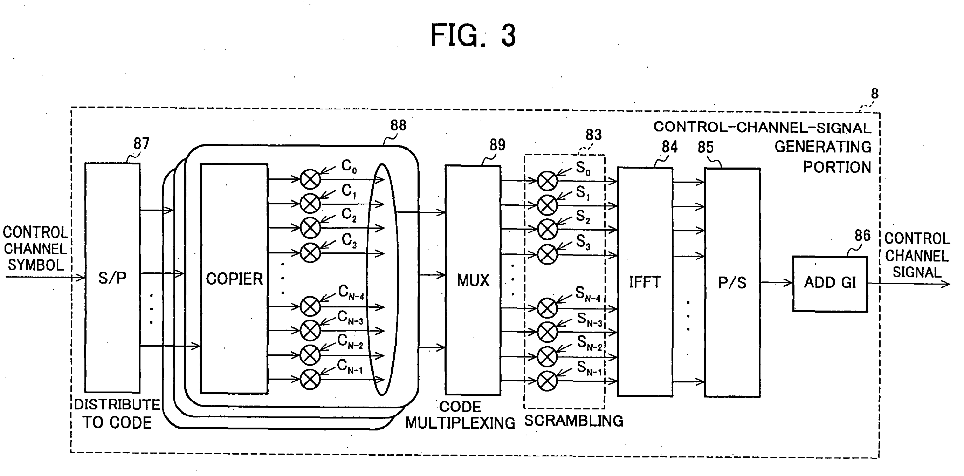

A description will be given of an embodiment of transmission signal generation using a control-channel generating method different from the first embodiment. While the block diagram shown in Fig. 1 and the traffic-channel-signal generating portion 4 shown in Fig. 2 are the same as those in the first embodiment, the configuration of a control-channel-signal generating portion 8 in the second embodiment is different from the one in the first embodiment. This portion is shown in Fig. 3. In the control-channel-signal generating portion 8 shown in Fig. 3, S/P conversion 87 is performed to distribute each control channel symbol to a spreading code. The spreading codes have a code length N (= the number of subcarriers) and are orthogonal to each other. The spreading codes are used to perform frequency domain spreading (frequency domain spreading processing 88) with a spreading ratio of N, and code multiplexing is then performed by MUX 89. The resulting signals are multiplied by cell-specific scrambling codes and are subjected to Inverse Fast Fourier Transform processing (IFFT processing) 84. The resulting signals are further converted by P/S conversion 85 into a sequence of time signals, to which a guard interval is added by an Add GI 86.

Compared to the first embodiment, the second embodiment can increase the spreading ratio. Since code multiplexing is performed so as to correspond to the increased spreading ratio, the transmission speed of a control channel does not change. Since the method of the second embodiment increases the spreading ratio, it is possible to average interference from the traffic channel. Also, wider spreading in a frequency domain makes it possible to enhance the frequency diversity effect.

### (Third Embodiment)

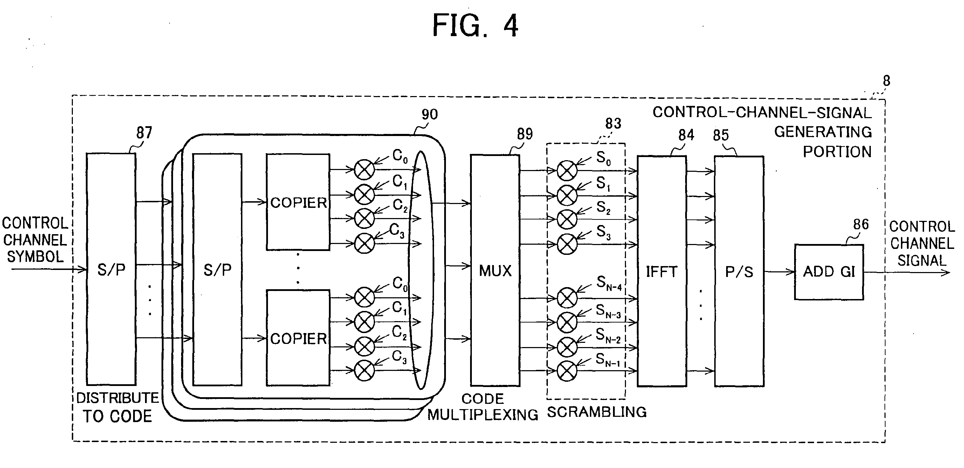

A description will be given of another embodiment of transmission signal generation using a control-channel generating method different from the first embodiment. In the third embodiment, the block diagram shown in Fig. 1 and the traffic-channel-signal generating portion 4 shown in Fig. 2 are the same as those in the first embodiment. Fig. 4 shows the configuration of a control-channel-signal generating portion 8 in the present embodiment. In the control-channel-signal generating portion 8, S/P conversion 87 is performed to distribute control channel symbols to spreading codes. Thereafter, S/P conversion is further performed and frequency domain spreading is performed (frequency-domain spreading processing 90). Code multiplexing is performed by MUX 89. Thereafter, the resulting signals are multiplied by cell-specific scrambling codes (scrambling 83) and are subjected to Inverse Fast Fourier Transform processing (IFFT processing) 84. The resulting signals are further converted by P/S conversion 85 into a sequence of time signals, to which a guard interval is added by an Add GI 86.

The scheme of the third embodiment may be regarded as an intermediate method between the first embodiment and the second embodiment. When the number of subcarriers is large, the configuration in the second embodiment, in which the spreading ratio and the number of subcarriers are the same, becomes complicated. Accordingly, it is effective to use the method of the third embodiment that reduces complexity while providing the interference averaging effect and the diversity effect by increasing the spreading ratio to some extent.

### (Fourth Embodiment)

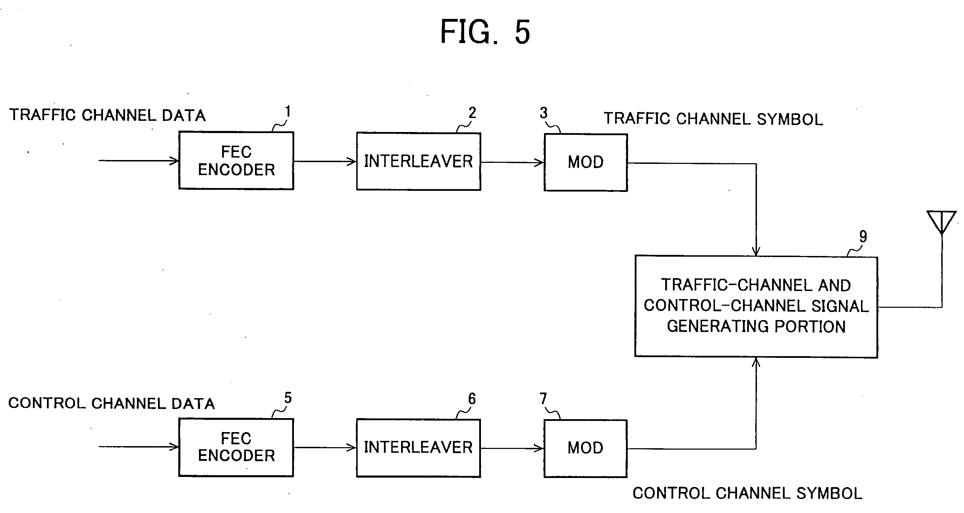

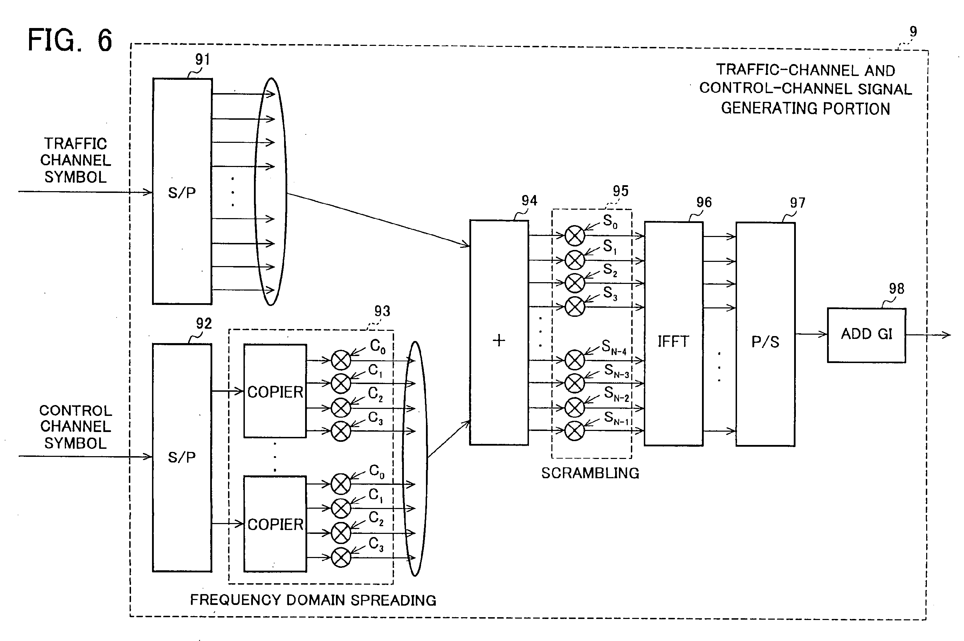

For simplicity of description, the processing for generating the traffic channel signal in the time domain and the processing for generating the control channel signal therein have been described in Fig. 1 as being completely separated. However, when the same scrambling codes are used for the traffic channel and the control channel, it is possible to use the same processing after the processing of multiplying the scrambling codes. Fig. 5 is a block diagram of a transmitter according to a fourth embodiment of the present invention. Fig. 6 is a block diagram illustrating details of a traffic-channel and control-channel signal generating portion shown in Fig. 5.

As shown in Fig. 5, traffic channel data and control channel data are encoded by FEC Encoders 1 and 5, are interleaved by Interleavers 2 and 6, and are subjected to modulation processing by MODs 3 and 7, respectively, so that a traffic channel symbol and a control channel symbol are input to a traffic-channel and control-channel signal generating portion 9.

As shown in Fig. 6, in the traffic-channel and control-channel signal generating portion 9, subcarrier components of traffic channel symbols that have been subjected to S/P conversion 91 and corresponding subcarrier components of control channel symbols that have been subjected to S/P conversion 92 and then to frequency-domain spreading processing 93 are added to one another (+ 94). The resulting signals are multiplied by cell-specific scrambling codes (scrambling 95), are subjected to Inverse Fast Fourier Transform processing (IFFT processing) 96, and are converted by P/S conversion 97 into a sequence of time signals, to which a guard interval is then added by an Add GI 98.

### (Fifth Embodiment)

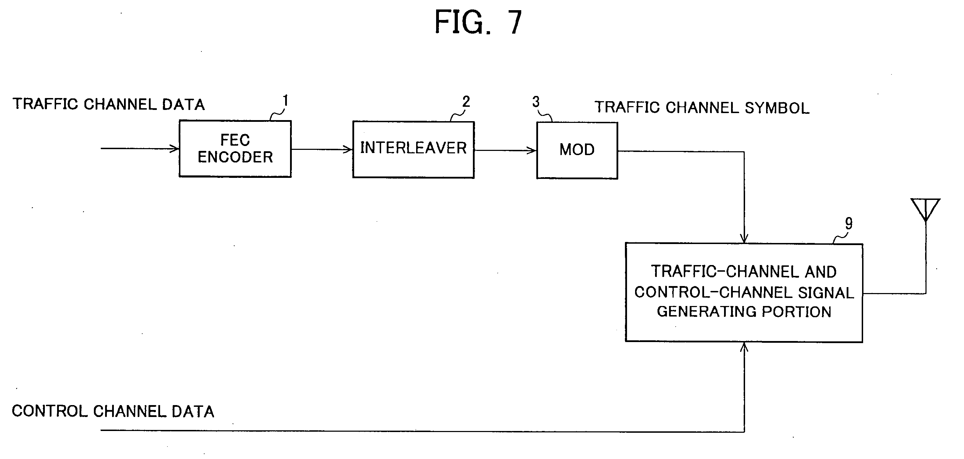

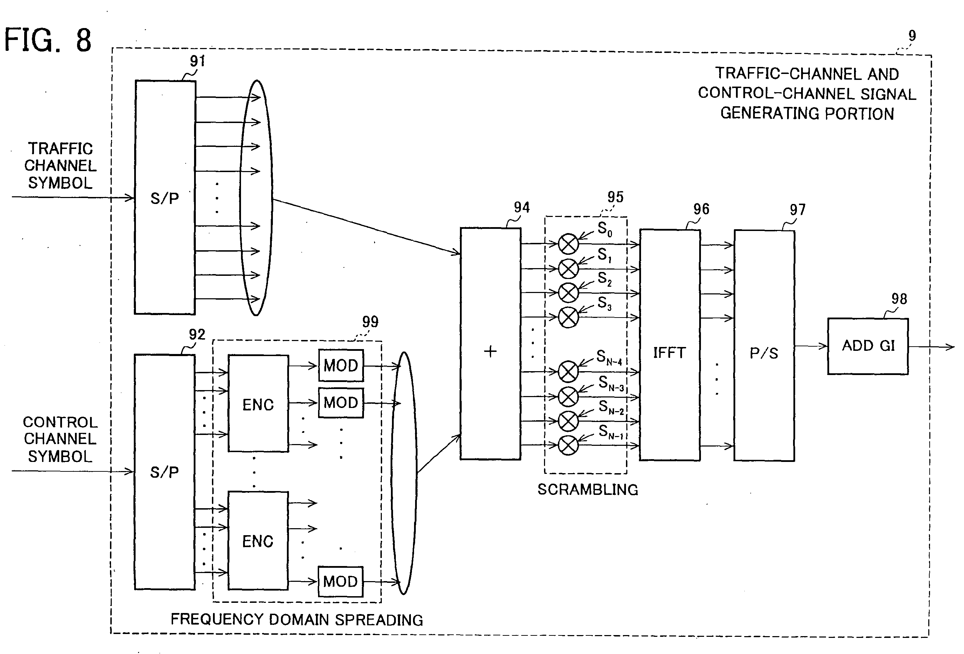

Fig. 7 is a block diagram of a transmitter according to a fifth embodiment of the present invention. Fig. 8 is a block diagram of a traffic-channel and control-channel signal generating portion in the present embodiment.
As shown in Fig. 7, in the transmitter of the present embodiment, control channel data is directly input to the traffic-channel and control-channel signal generating portion 9. Since the processing of the traffic channel data is analogous to that in the above-described fourth embodiment (Fig. 5), the redundant description will be omitted.

In the present embodiment, as shown in Fig. 8, in the traffic-channel and control-channel signal generating portion 9, the control channel data is subjected to S/P conversion 92 and is then subjected to frequency-domain spreading processing 99. In this case, the control channel data that has been subjected to the S/P conversion is block-encoded by block encoders (Enc) and is modulated as subcarrier components by modulators (MOD).

The block encoders (Enc) output n-bit codewords with respect to input k-bit information bits. It is desired in this case that n be a divisor of the number of subcarriers, N. When it is assumed that n is a divisor of N and the modulation scheme of the subcarriers is BPSK, the control channel data is subjected to serial-to-parallel conversion by the S/P conversion 92 for every k·N/n bits.
Encoding processing is performed by the block encoders (Enc), arranged in parallel with each other, and N bits are output. N bits are subjected to BPSK modulation as subcarrier components and are multiplexed (+ 94) with traffic channel signals.
Since the processing of the traffic channel signal in Fig. 8 is the same as that in the above-described fourth embodiment (Fig. 6), the redundant description will be omitted.

### (Sixth Embodiment)

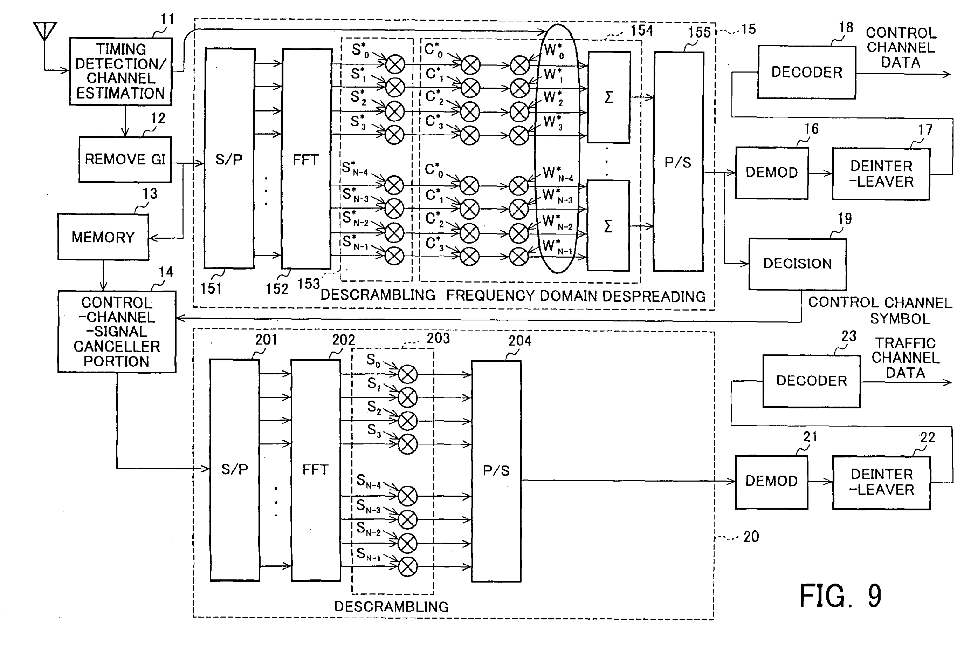

Fig. 9 is a block diagram showing the configuration of a receiver according to a sixth embodiment of the present invention. It is assumed in the present embodiment that a signal transmitted from a transmitter as described in the first embodiment or the fourth embodiment is received through a wireless channel.
First, timing-detection/channel-estimation processing 11 performs timing detection and channel estimation to determine timing for extracting a reception signal for performing FFT processing and channel estimation values. From the channel estimation values, a weighting factor by which each subcarrier is to be multiplied after FFT processing is determined. Although a complex conjugate of a channel gain corresponding to frequency components of each subcarrier of the channel is used as the weighting factor, the method for determining the weighting factor is not limited thereto. The channel estimation values are also used when a control-channel-signal canceller portion generates copies of the control channel signal.

A guard interval of the reception signal is removed by a Remove GI 12, the resulting signal is temporarily stored in a memory 13, and the control channel is first demodulated. Since the control channel has been subjected to OFCDM modulation involving frequency domain spreading, the complex conjugate of the spreading code used for the spreading and the weighting factors determined by the timing-detection/channel-estimation processing 11 are used to perform despreading processing 15. In this case, S/P conversion 151, FFT processing 152, descrambling 153, frequency-domain despreading 154, and P/S conversion 155 are executed.
After the despreading processing is performed, control channel data is obtained through a demodulator (Demod) 16, a deinterleaver (Deinterleaver) 17, and a decoder (Decoder) 18.

After the despreading is performed, a Decision 19 performs symbol determination, the control-channel-signal canceller portion creates copies of the control channel signal, and the control-channel-signal canceller portion 14 removes control-channel-signal components from the reception signal stored in the memory 13. The resulting signal is subjected to OFDM demodulation processing 20 of the traffic channel. In this case, S/P conversion 201, FFT processing 202, descrambling 203, and P/S conversion 204 are performed. Then, a demodulator (Demod) 21, a deinterleaver (Deinterleaver) 22, and a decoder (Decoder) 23 perform error correction decoding to obtain traffic channel data.

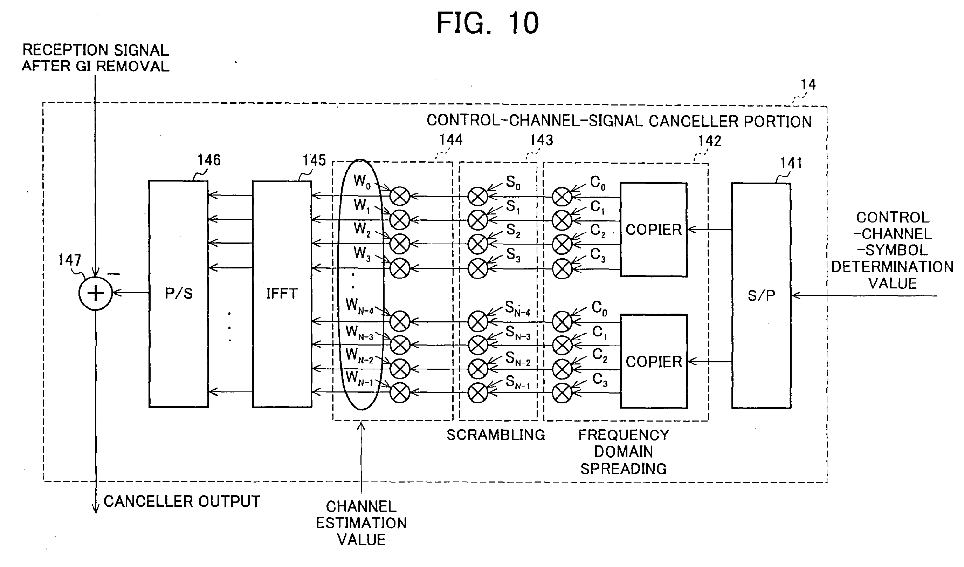

Fig. 10 shows details of the control-channel-signal canceller portion 14. In the same manner as the control-channel-signal generating portion 8 shown in Fig. 2, after S/P conversion 141 is performed on the determined control channel symbol, copying is performed so that the control channel symbol is transmitted over multiple subcarriers and frequency domain spreading is performed (frequency-domain spreading processing 142) by multiplying spreading codes. In addition, the resulting signals are multiplied by cell-specific scrambling codes (scrambling 143). In this case, after the subcarrier components are multiplied by the channel estimation values determined by the channel estimating portion (channel-estimation-value multiplication 144), Inverse Fast Fourier Transform processing (IFFT processing) 145 and P/S conversion 146 are performed to obtain copies of the time signal of the control channel signal. The copied signals are subtracted (+ 147) from the reception signal stored in the memory, so that a reception signal in which the control channel signal is cancelled is obtained.

### (Seventh Embodiment)

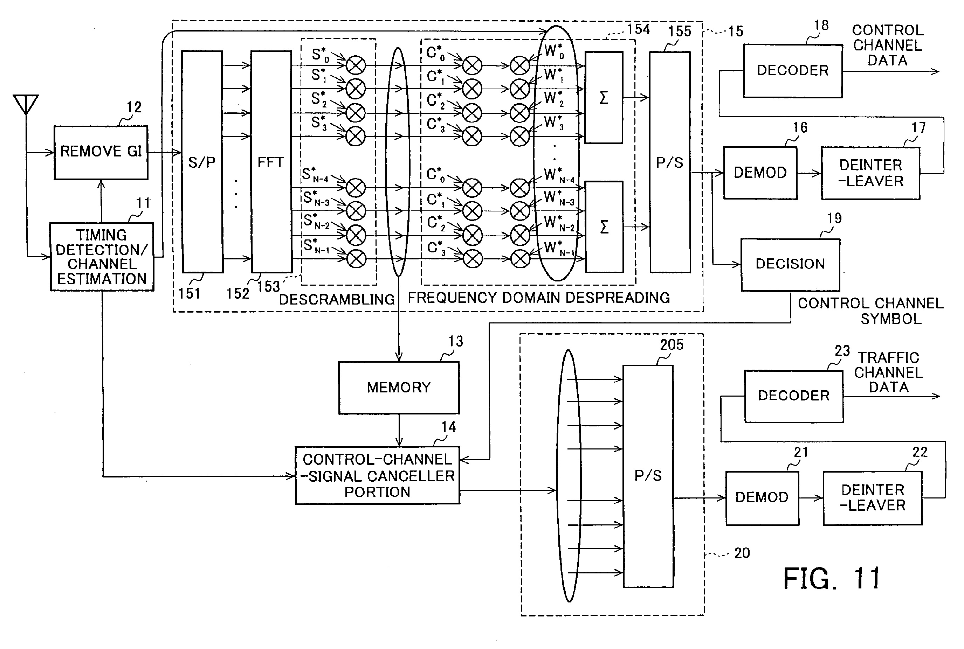

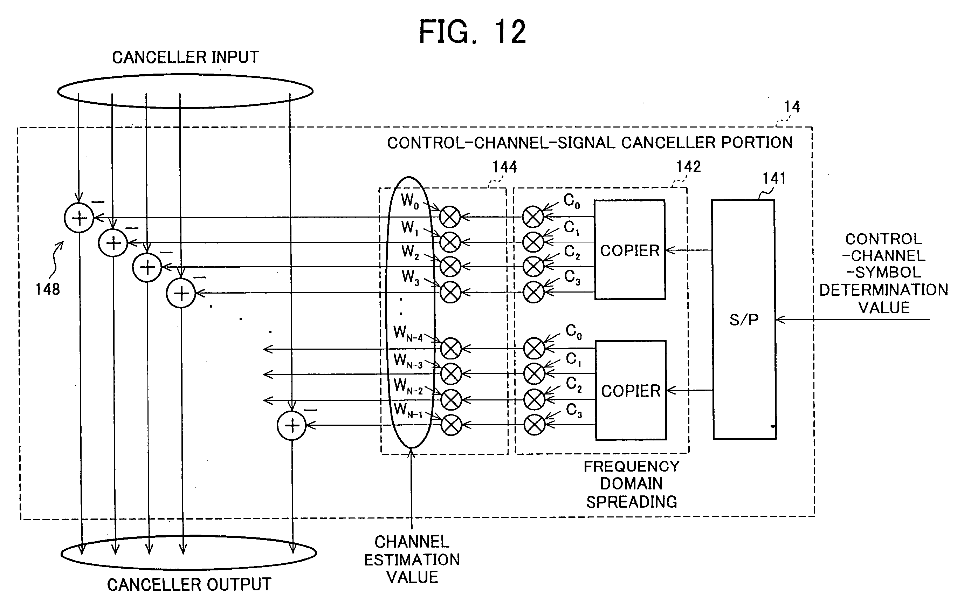

Although signals in a time domain are used for canceling in Figs. 9 and 10, canceling can also be performed for each subcarrier in a frequency domain as shown in Figs. 11 and 12. Fig. 11 is a block diagram showing the configuration of a receiver according to a seventh embodiment of the present invention.
In the seventh embodiment, a reception signal from which a guard interval was removed by a Remove GI 12 is subjected to despreading processing 15. In this case, the reception signal is subjected to S/P conversion 151 and is subjected to FFT processing 152 to be converted into subcarrier components. Signals at a point of time when descrambling 153 is performed are stored in a memory 13. The control channel signals are directly subjected to frequency-domain despreading processing 154 and P/S conversion 155 and are then subjected to symbol determination (Decision 19). A control-channel-signal canceller portion 14 cancels a control cannel signal in a frequency domain. P/S conversion 205 is performed in traffic channel processing 20. Demodulation is performed by a Demod 21, deinterleaving is performed by a Deinterleaver 22, and traffic channel data is output through a decoder (Decoder) 23. For other portions, redundant descriptions for functions similar to those in Fig. 9 will be omitted.

Fig. 12 is a diagram showing details of the control-channel-signal canceller portion 14 shown in Fig. 11. In this case, S/P conversion 141 is performed on the determined control channel symbol and the resulting signals are multiplied by spreading codes and are subjected to frequency domain spreading 142. Then, channel-estimation-value multiplication 144 is performed to multiply the subcarrier components by the channel estimation values determined by the timing-detection/channel-estimation processing 11. The resulting signals are then subtracted (+ 148) from signals (cancellers) obtained during descrambling and stored in the memory 13, so that a reception signal in which the control channel signal is cancelled is obtained.

### (Eighth Embodiment)

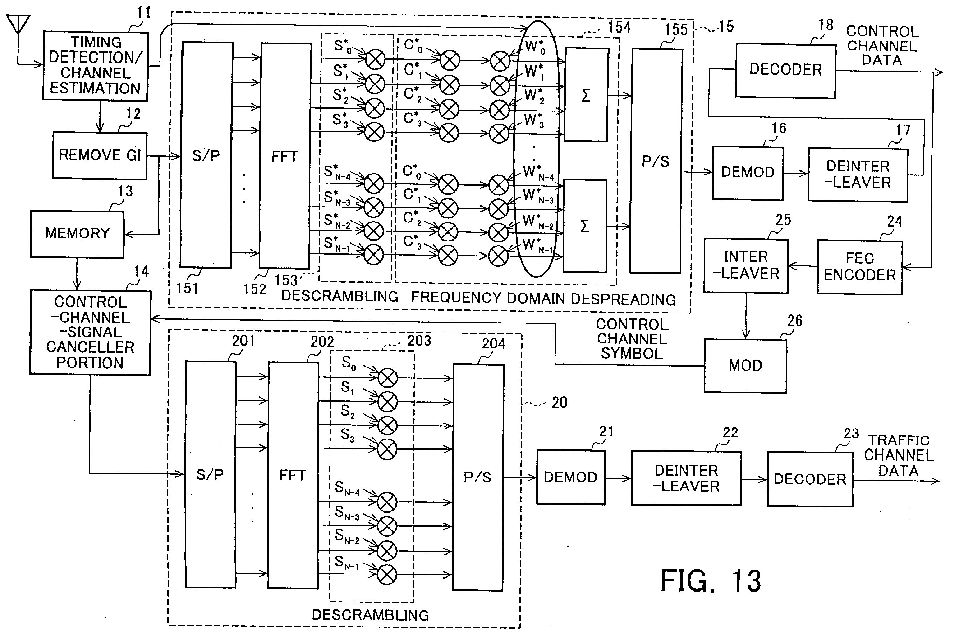

Fig. 13 is a block diagram showing the configuration of a receiver according to an eighth embodiment of the present invention. First, timing-detection/channel-estimation processing 11 performs timing detection and channel estimation to determine timing for extracting a reception signal for performing FFT processing and channel estimation values. From the channel estimation values, a weighting factor by which each subcarrier is to be multiplied after FFT is determined.

A guard interval of the reception signal is removed by a Remove GI 12, the resulting signal is temporarily stored in a memory 13, and the control channel is first demodulated. Since the control channel has been subjected to OFCDM modulation involving frequency domain spreading, the complex conjugates of the spreading code used for the spreading and the weighting factors determined by the timing-detection/channel-estimation processing 11 are used to perform despreading processing 15. In this case, S/P conversion 151, FFT processing 152, descrambling 153, frequency-domain despreading 154, and P/S conversion 155 are executed.
After the despreading processing is performed, control channel data is obtained through a demodulator (Demod) 16, a deinterleaver (Deinterleaver) 17, and a decoder (Decoder) 18.

In the present embodiment, the control channel data decoded by the decoder (Decoder) 18 is re-encoded by an FEC Encoder 24, is interleaved by an Interleaver 25, is modulated by a MOD 26, and is sent to a control-channel-signal canceller portion 14.
The control-channel-signal canceller portion 14 is the same as the above-described block shown in Fig. 10. That is, after the S/P conversion 141 is performed, copying is performed so that the control channel symbol is transmitted over multiple subcarriers, and frequency domain spreading is performed (frequency-domain spreading processing 142) by multiplying spreading codes. In addition, the resulting signals are multiplied by cell-specific scrambling codes (scrambling 143). In this case, after the subcarrier components are multiplied by the channel estimation values determined by the channel estimating portion (channel-estimation-value multiplication 144), Inverse Fast Fourier Transform processing (the IFFT processing) 145 and P/S conversion 146 are performed to obtain copies of the time signal of the control channel signal. The copied signals are subtracted (+ 147) from the reception signal stored in the memory, so that a reception signal in which the control channel signal is cancelled is obtained.

Then, OFDM demodulation processing 20 for the traffic channel is performed. In this case, S/P conversion 201, FFT processing 202, descrambling 203, and P/S conversion 204 are performed. Then, a demodulator (Demod) 21, a deinterleaver (Deinterleaver) 22, and a decoder (Decoder) 23 perform error correction decoding to obtain traffic channel data.

### (Ninth Embodiment)

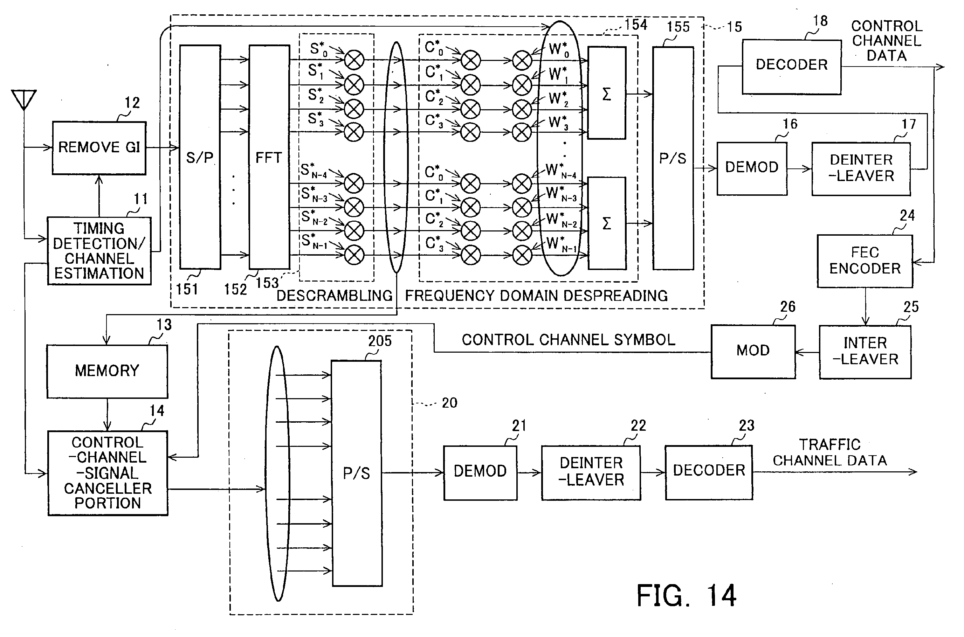

Fig. 14 is a block diagram showing the configuration of a receiver according to a ninth embodiment of the present invention. A reception signal from which a guard interval was removed by a Remove GI 12 is subjected to despreading processing 15. In this case, the reception signal is subjected to S/P conversion 151 and is subjected to FFT processing 152 to be converted into subcarrier components. Signals at a point of time when descrambling 153 is performed are stored in a memory 13. The control channel signals are directly subjected to frequency domain despreading processing 154 and P/S conversion 155.
After the despreading processing is performed, control channel data is obtained through a demodulator (Demod) 16, a deinterleaver (Deinterleaver) 17, and a decoder (Decoder) 18.

In the present embodiment, the control channel data temporarily decoded by the decoder (Decoder) 18 is re-encoded by an FEC Encoder 24, is interleaved by an Interleaver 25, is modulated by a MOD 26, and is sent to a control-channel-signal canceller portion 14.
The control-channel-signal canceller portion 14 is the same as the above-described block shown in Fig. 12. That is, S/P conversion 141 is performed on the determined control channel symbol, and the resulting signals are multiplied by spreading codes and are subjected to frequency-domain spreading processing 142. Then, channel-estimation-value multiplication 144 is performed to multiply the subcarrier components by the channel estimation values determined by a timing-detection/channel-estimation processing 11. The resulting signals are then subtracted (+ 148) from signals (cancellers) obtained during descrambling and stored in the memory 13, so that a reception signal in which the control channel signal is cancelled is obtained.

In traffic channel processing 20, P/S conversion 205 is performed. Demodulation is performed by a Demod 21, deinterleaving is performed by a Deinterleaver 22, decoding is performed by a Decoder 23, and traffic channel data is output.

### (Tenth Embodiment)

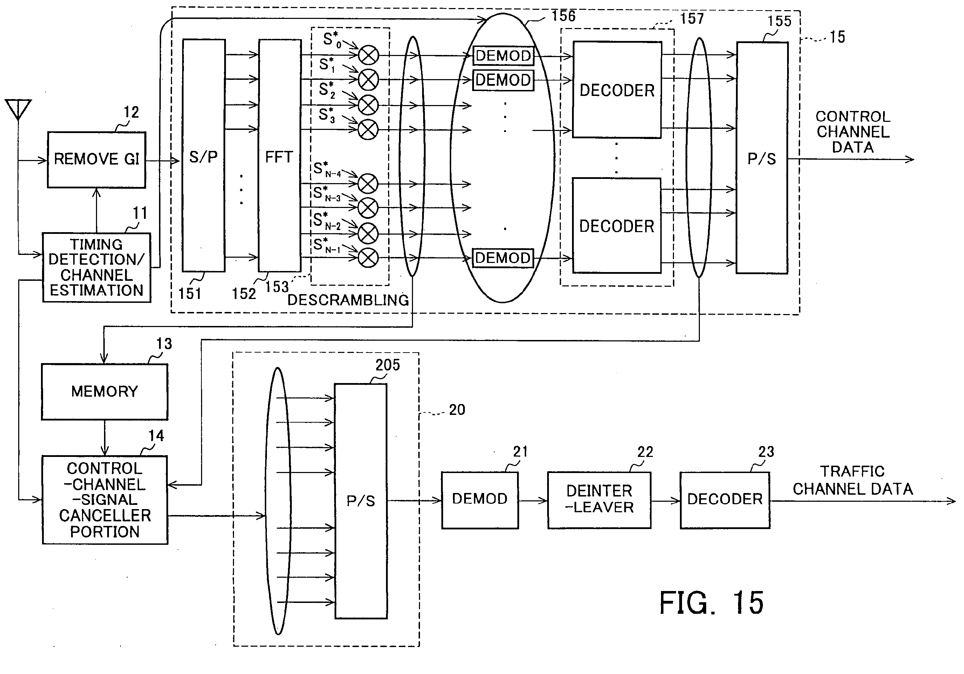

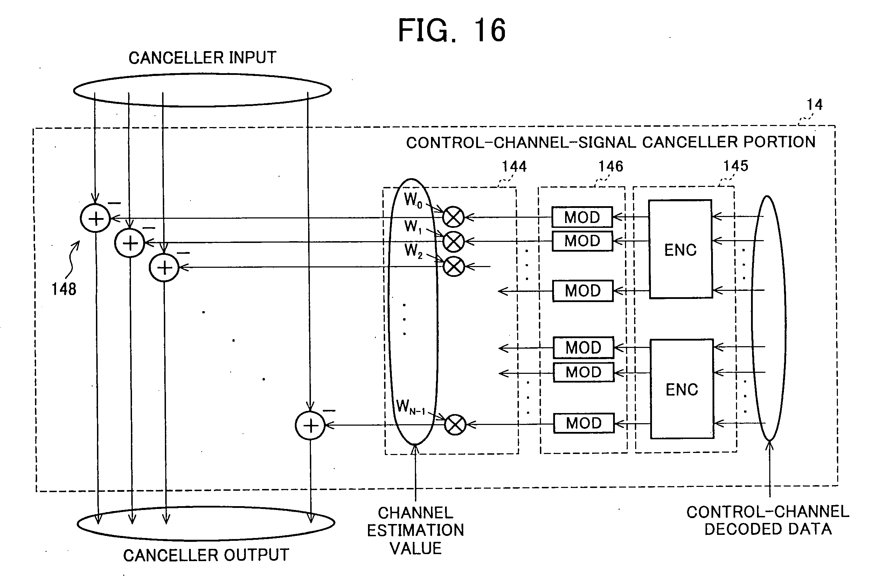

Fig. 15 is a block diagram showing the configuration of a receiver according to a tenth embodiment of the present invention and illustrating an embodiment of a receiver corresponding to the transmitter of the fifth embodiment described above. Fig. 16 is a block diagram of a control-channel-signal canceller portion in the present embodiment.
As shown in Fig. 15, in the receiver of the present embodiment, a reception signal from which a guard interval was removed by a Remove GI 12 is subjected to S/P conversion 151 and is then converted into subcarrier components by FFT processing 152, and signals at a point of time when descrambling 153 is performed are stored in a memory 13. Then, after the subcarrier components are demodulated by demodulators (Demod) 156, block-code decoding processing is performed by decoders (Decoder) 157, and P/S conversion 155 is performed, so that control channel data is obtained.

Since the configuration shown in Fig. 14 for the ninth embodiment described above requires decoding processing for error correction code for each frame, OFDM symbols need to be converted into time-series data by the P/S conversion after demodulation and need to be decoded for each frame. However, since block codes having a code length less than or equal to the number of subcarriers are used in the present embodiment, decoding processing can be performed for each OFDM symbol. The decoded control channel data is sent to a control-channel-signal canceller portion 14 and control channel signal components are cancelled from the reception signal stored in the memory 13. In addition, P/S conversion 205 is performed in traffic channel processing 20. Demodulation is performed by a Demod 21, deinterleaving is performed by a Deinterleaver 22, and decoding is performed by a Decoder 23, so that traffic channel data is output.

As shown in Fig. 16, in the control-channel-signal canceller portion 14, the control channel decoded data, which was temporarily decoded, is re-encoded by encoders (Enc) 145, the resulting data is modulated by modulators (Mod) 146 for each subcarrier, and the modulated data is subjected to channel-estimation-value multiplication 144, so that copies of the control channel signal are provided. The copies are subtracted (+ 148) from signals obtained after descrambling and stored in the memory 13, so that a canceller output signal is obtained.

### (Eleventh Embodiment)

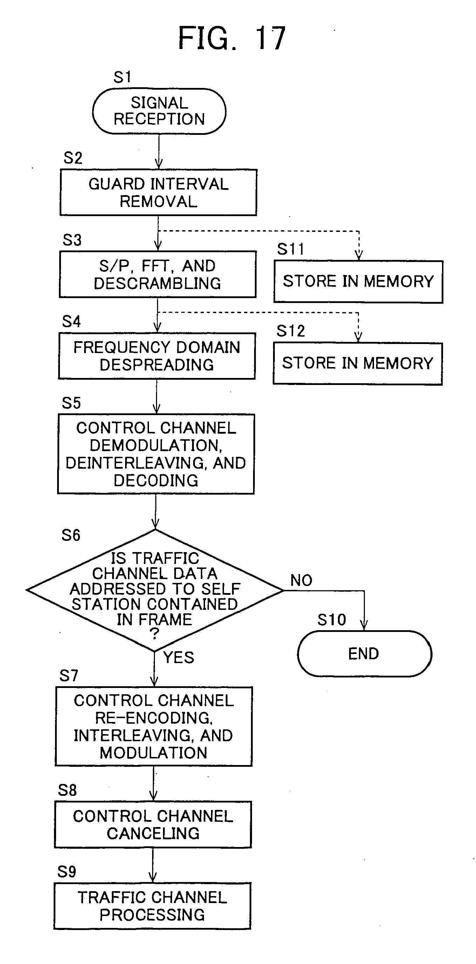

Fig. 17 is a flow diagram for a case in which, only when it is determined from obtained control information that information addressed to the self station is contained in the traffic channel, a traffic channel signal is extracted. This flow diagram is applied to the block diagram shown in Fig. 13 or the block diagram shown in Fig. 14. Although signals stored in the memories and subjected to the cancel processing are different from each other between the case of Fig. 13 and the case of Fig. 14, the flows of the controlling are the same. That is, based on the decoded control information, a determination is made as to whether or not information addressed to the self station is contained in the traffic channel of a received frame. Only when information addressed to the self station is contained, the subsequent re-encoding/interleaving/modulation, control channel canceling, and traffic channel reception processing are performed.

In this case, first, a signal is received (step S1). A guard interval is removed from the reception signal (step S2). Then, S/P conversion processing, FFT processing, and descrambling processing are performed (step S3). Frequency domain despreading is performed (step S4). In addition, control channel demodulation, deinterleaving, and decoding processing are performed (step S5). In the case of the configuration shown in Fig. 13, after a guard interval is removed in step S2, the reception signal is stored in the memory (step S11). In the case of the configuration shown in Fig. 14, after descrambling is performed in step S3, the reception signal is stored in the memory (step S12).

Next, based on the decoded control information, a determination is made as to whether or not traffic channel data addressed to the self station is contained in the received frame (step S6). When traffic channel data addressed to the self station is contained, the control channel data is re-encoded, interleaved, and modulated (step S7). The control channel is then cancelled (step S8). Processing for the traffic channel is performed (step S9). When a traffic channel addressed to the self station is not contained in the received frame in step S6 described above, the processing ends (step S10).

### (Twelfth Embodiment)

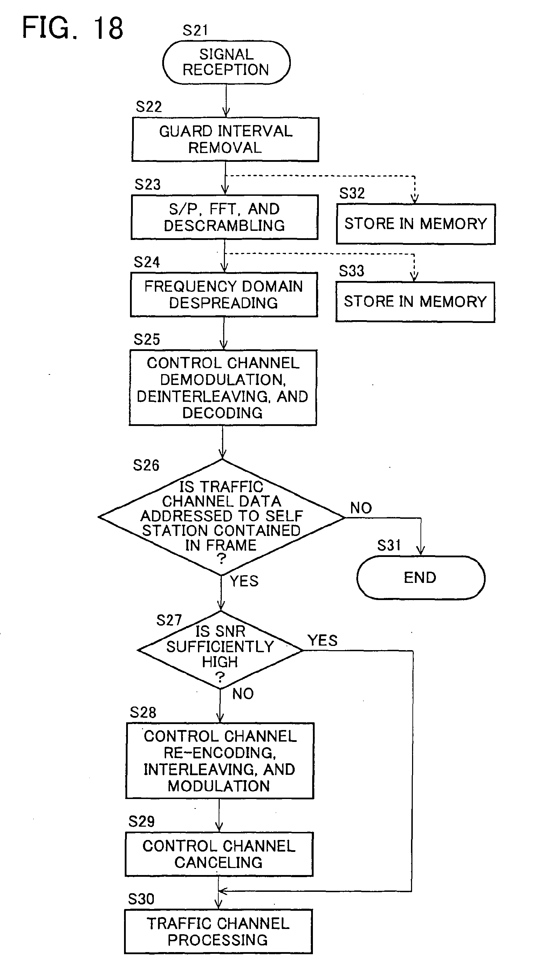

Fig. 18 is a flow diagram also showing a case in which, only when it is determined from obtained control information that information addressed to the self station is contained in the traffic channel, a traffic channel signal is extracted. This flow diagram is applied to the block diagram shown in Fig. 13 or the block diagram shown in Fig. 14. Although signals stored in the memories and subjected to the cancel processing are different from each other between the case of Fig. 13 and the case of Fig. 14, the flows of the controlling are the same. That is, based on the decoded control information, a determination is made as to whether or not information addressed to the self station is contained in the traffic channel of the received frame. Only when information addressed to the self station is contained, the process proceeds to a next determination processing.

In this case, first, a signal is received (step S21). A guard interval is removed from the reception signal (step S22). Then, S/P conversion processing, FFT processing, and descrambling processing are performed (step S23). Frequency domain despreading is performed (step S24). In addition, control channel demodulation, deinterleaving, and decoding processing are performed (step S25). In the case of the configuration shown in Fig. 13, after a guard interval is removed in step S22, the reception signal is stored in the memory (step S32). In the case of the configuration shown in Fig. 14, after descrambling is performed in step S23, the reception signal is stored in the memory (step S33).

A determination is then made as to whether or not traffic channel data addressed to the self station is contained in the received frame (step S26). When traffic channel data is contained, the process proceeds to step S27, which is the next determination block. When traffic channel data is not contained, the processing ends (step S31).

In step S27, a judgment is made as to whether or not the SNR is sufficiently high. That is, a judgment is made as to whether or not traffic channel data can be properly output even without canceling the control channel signal, based on channel state information measured by the channel estimating portion, modulated/encoded parameters contained in the control channel, and so on, and a determination is made as to whether or not to cancel the control channel. When the channel quality is sufficiently high, control channel re-encoding/interleaving/modulation and control-channel cancel processing are omitted and traffic-channel processing is performed (step S30). In this case, the control channel canceller directly outputs an input, received from the memory, to the traffic channel processing portion. When the channel quality is not sufficiently high, control-channel re-encoding, interleaving, and modulation processing are performed (step S28). Further, control-channel cancel processing is performed (step S29) and traffic channel processing is performed (step S30).

The above description has been given of a system in which the control channel and the traffic channel are multiplexed to perform transmission. In the first to ninth embodiments described above, replacing the traffic channel with a traffic channel 1 for communicating high-speed data and replacing the control channel with a traffic channel 2 for communicating low-speed data can provide an embodiment in which two traffic channels having different speeds are multiplexed.

In the configurations of the receiver, although it has been assumed that a signal transmitted from a transmitter as shown in the first or fourth embodiment is received through a wireless channel, it is possible to employ a similar configuration for signals using code multiplexing for a control channel, as in the second or third embodiment. The claims of the invention do not restrict the configuration to a receiver for a control channel using a single code.

Although the description for the drawings in the embodiments has been given using OFCDM using frequency domain spreading, it is apparent that the use of OFCDM involving two-dimensional spreading in a time domain and a frequency domain and OFCDM involving spreading in a time domain can also provide the same advantages. Thus, it should be noted that the OFCDM disclosed in the claims of the present invention is not limited to OFCDM using frequency domain spreading.

### (Thirteenth Embodiment)

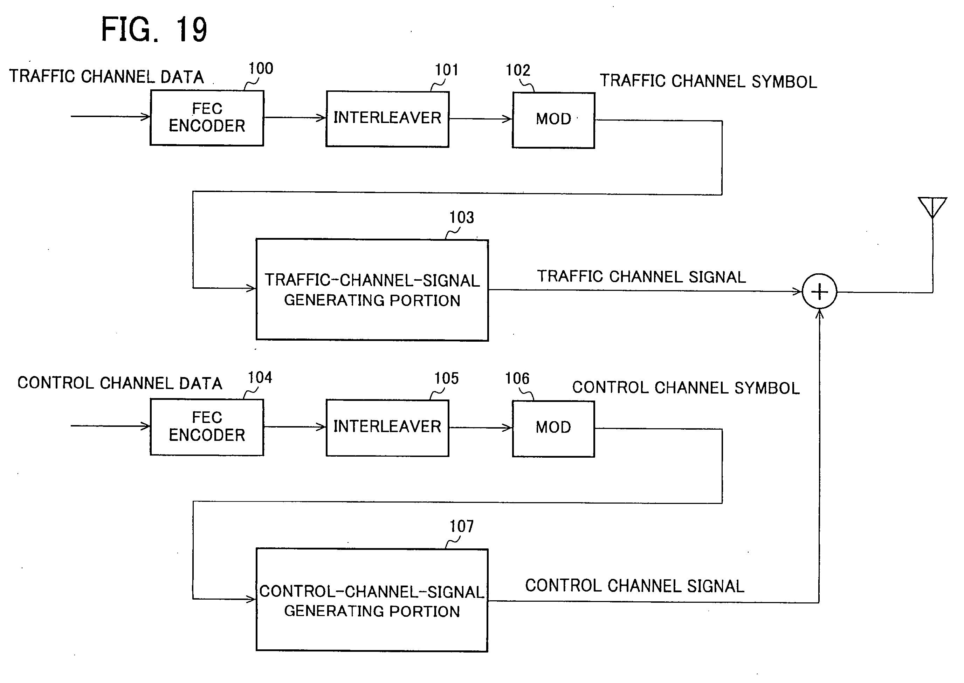

Fig. 19 is a block diagram of a transmitter according to a thirteenth embodiment of the present invention. In Fig. 19 and the subsequent figures, portions that overlap those in Figs. 41 to 45 (the conventional example) are denoted by the same reference numerals.

In addition to traffic data, such as audio data, video data, and other packet data, exchanged between a user terminal and another terminal, many wireless communication systems communicate control information that the user terminal exchanges with the wireless communication systems to operate on the system and control information indicating the attributes of traffic data transmitted.

As shown in Fig. 19, in the present embodiment, traffic channel data and control channel data are encoded by FEC Encoders 100 and 104, are interleaved by Interleavers 101 and 105, and are subjected to modulation processing by MODs 102 and 106, respectively. A traffic channel data symbol is converted by a traffic-channel-signal generating portion 103 into a traffic channel signal and a control channel symbol is converted by a control-channel-signal generating portion 107 into a control channel signal. These signals are added and transmitted.

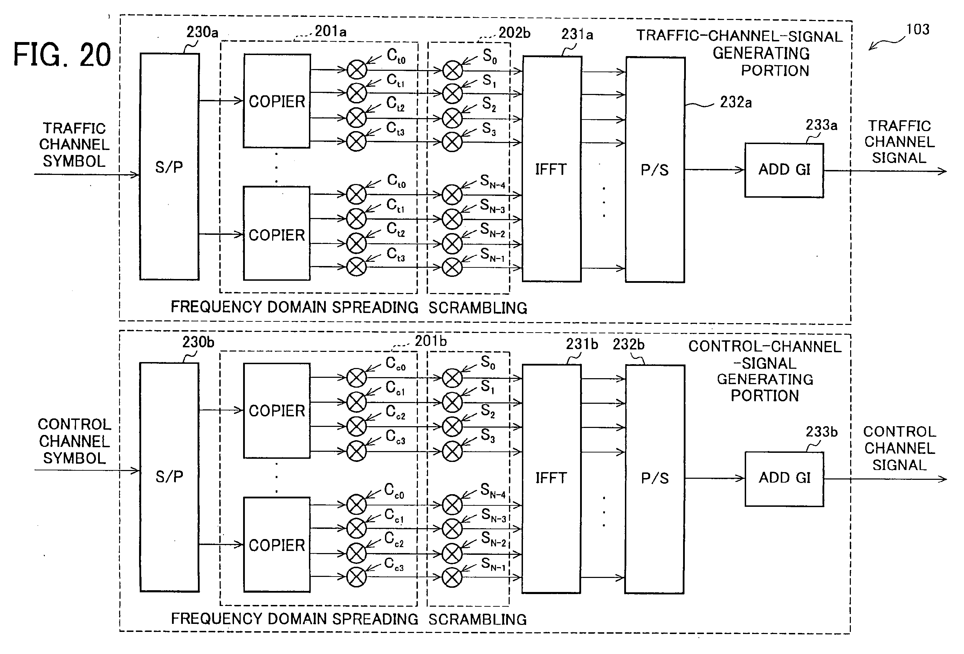

Fig. 20 is a block diagram of the traffic-channel-signal generating portion and the control-channel-signal generating portion of the transmitter according to the thirteenth embodiment of the present invention.

In the traffic-channel-signal generating portion 103 shown in Fig. 20(a), after S/P conversion 230a (serial-to-parallel conversion) is performed, a frequency-domain spreading processing portion 201a copies a traffic channel symbol so that it is transmitted over multiple subcarriers, and the symbols are multiplied by spreading codes (C_{T0}, C_{T1}. C_{T2}, C_{T3}) to perform frequency-domain spreading processing. Thereafter, the resulting signals are multiplied by cell-specific scrambling codes (scrambling) and are subjected to Inverse Fast Fourier Transform processing 231a (IFFT processing). In addition, P/S conversion 232a (parallel-to-serial conversion) is further performed to obtain a sequence of time signals, to which a GI 240 is added by an Add GI 233a.

In the control-channel-signal generating portion 107 shown in Fig. 20(b), after S/P conversion 230b is performed, a control channel symbol is copied so that it is transmitted over multiple subcarriers, and the symbols are multiplied by spreading codes (C_{C0}, C_{C1}, C_{C2}, C_{C3}) to perform frequency-domain spreading processing 201b, as in the same manner as the traffic-channel-signal generating portion 103. Thereafter, the resulting signals are multiplied by cell-specific scrambling codes (scrambling 202b) and are subjected to Inverse Fast Fourier Transform processing (IFFT processing 231b). P/S conversion 232b is further performed to obtain a sequence of time signals, to which a GI 240 is added by an Add GI 233b.

Codes that are not orthogonal to each other are used for the spreading codes (C_{T0}, C_{T1}, C_{T2}, C_{T3}) for the traffic channel and the spreading codes (C_{C0}, C_{C1}, C_{C2}, C_{C3}) for the control channel. In the present embodiment, spreading with a spreading ratio of 4 is performed for both the traffic channel signal and the control channel signal, but spreading may be performed with spreading ratios different from each other.

### (Fourteenth Embodiment)

A description will now be given of a fourteenth embodiment of transmission signal generation using a control-channel generating method different from the thirteenth embodiment.

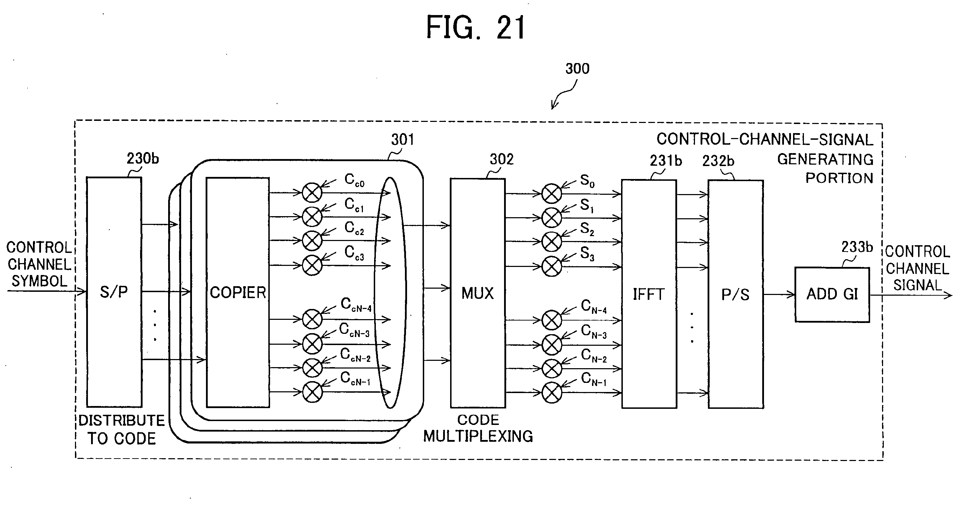

The fourteenth embodiment has the same configuration as the thirteenth embodiment shown in Figs. 19 and 20, but is different in the configuration of the control-channel-signal generating portion 107. This portion is shown in Fig. 21.

In a control-channel-signal generating portion 300 shown in Fig. 21, S/P conversion 230b is performed to distribute control channel symbols to spreading codes one by one. Spreading codes (C_{C0}, C_{C1}, ..., C_{CN-1}) have a code length N (= the number of subcarriers) and are orthogonal to each other. The spreading codes are used to perform frequency domain spreading 301 (frequency-domain spreading processing) with a spreading ratio of N. Thereafter, code multiplexing is performed by MUX 302. The resulting signals are multiplied by cell-specific scrambling codes and are subjected to Inverse Fast Fourier Transform processing (IFFT processing 231b). The resulting signals are further converted by P/S conversion 232b into a sequence of time signals, to which a GI 240 is added by an Add GI 233b.

In this cases, codes that are not orthogonal to each other are used for the traffic-channel spreading codes (C_{T0}, C_{T1}, C_{T2}, C_{T3}) and the control-channel spreading codes (C_{C0}, C_{C1}, ..., C_{CN-1}). As described above, however, the control-channel spreading codes are orthogonal to each other. Only one traffic channel is generated in the embodiments described above. However, when multiple traffic channels exist, orthogonal codes are used as the traffic-channel spreading codes.

The present embodiment can increase the spreading ratio compared to the thirteenth embodiment. Since code multiplexing is performed so as to correspond to the increased spreading ratio, the transmission speed of a control channel does not change. Since the method of the fourteenth embodiment increases the spreading ratio, it is possible to average interference from the traffic channel(s). Also, wider spreading in a frequency domain makes it possible to enhance the frequency diversity effect.

### (Fifteenth Embodiment)

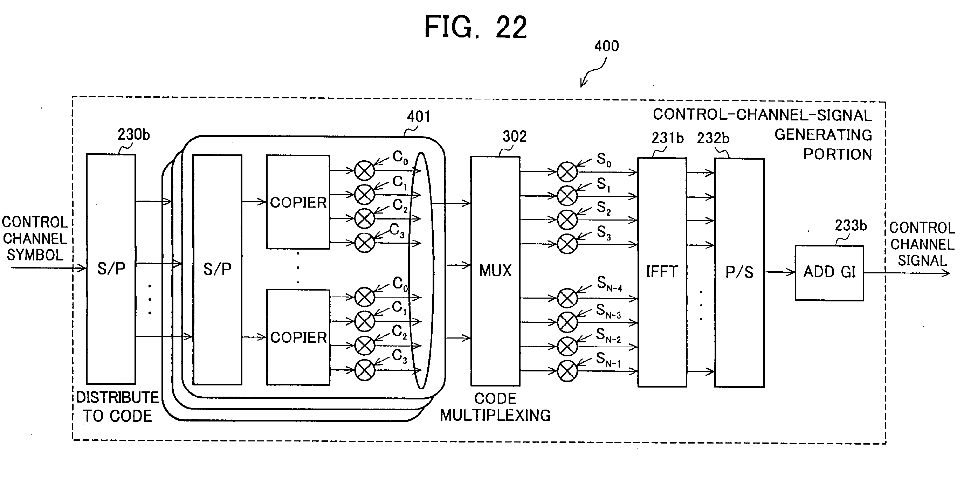

A description will now be given of a fifteenth embodiment of transmission signal generation using a control-channel generating method different from the thirteenth embodiment and the fourteenth embodiment. The configuration of the present embodiment has the same basic blocks shown in the traffic-channel-signal generating portion shown in Figs. 19 and 20, but is different in the configuration of the control-channel-signal generating portion shown in Fig. 20. Fig. 22 shows the configuration of a control-channel-signal generating portion 400 in the present embodiment. In the control-channel-signal generating portion 400, S/P conversion 230b is performed to distribute control channel symbols to spreading codes. Thereafter, S/P conversion is further performed and frequency domain spreading is performed (frequency-domain spreading processing 401). Code multiplexing is performed by MUX 302. Thereafter, the resulting signals are multiplied by cell-specific scrambling codes (scrambling) and are subjected to Inverse Fast Fourier Transform processing (IFFT processing 231b). In addition, P/S conversion 232b is performed to obtain a sequence of time signals, to which a GI 240 is added by an Add GI 233b.

When the number of subcarriers is large, the configuration of the fourteenth embodiment, in which the spreading ratio and the number of subcarriers are the same, becomes complicated. Accordingly, the present embodiment that reduces complexity while providing the interference averaging effect and the diversity effect by increasing the spreading ratio to some extent may be effective. In the sense described above, the present embodiment has an intermediate configuration between the thirteenth embodiment and the fourteenth embodiment.

### (Sixteenth Embodiment)

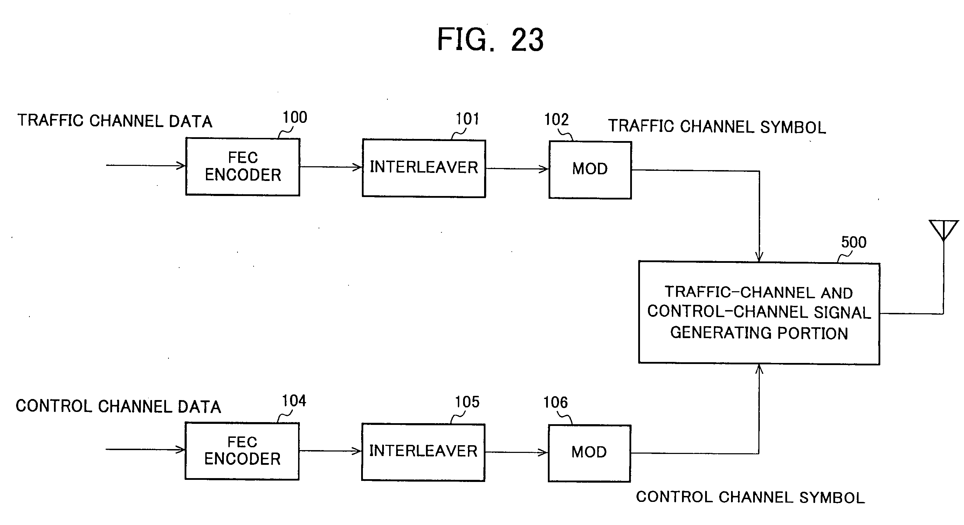

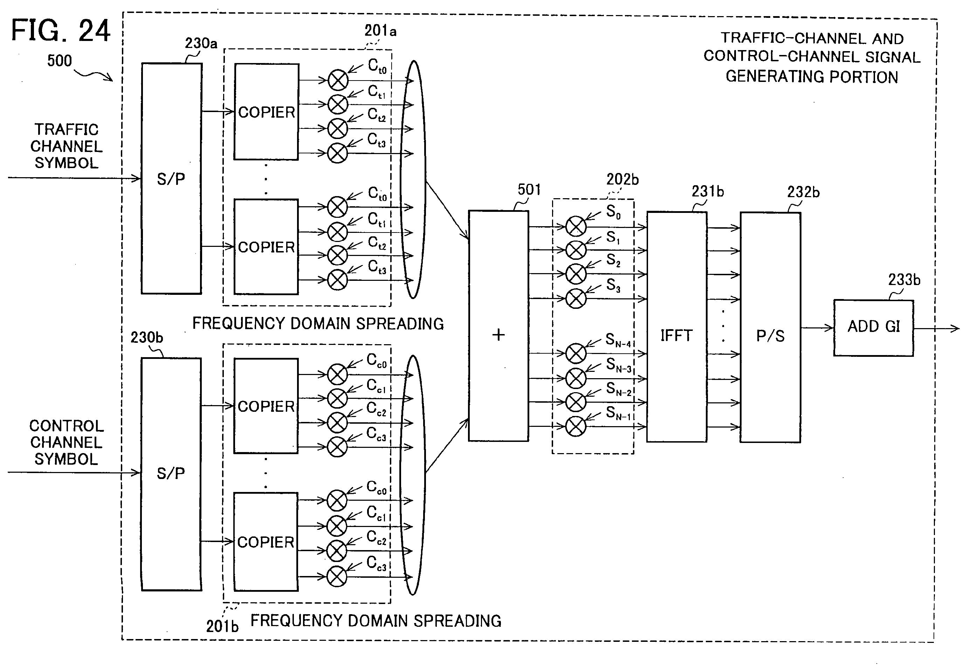

For simplicity of description, in Fig. 19, the configuration for processing for generating the traffic channel signal in the time domain and the configuration for processing for generating the control channel signal therein are completely separated. However, when the same scrambling codes are used for the traffic channel and the control channel, it is possible to use the same processing after the processing of multiplying the scrambling codes. Fig. 23 is a block diagram of a transmitter according to a sixteenth embodiment of the present invention. Fig. 24 is a block diagram illustrating details of a traffic-channel and control-channel signal generating portion shown in Fig. 23.

As shown in Fig. 23, traffic channel data and control channel data are encoded by FEC Encoders 100 and 104, are interleaved by Interleavers 101 and 105, and are subjected to modulation processing by MODs 102 and 106, respectively. The traffic channel symbol and the control channel symbol are input to a traffic-channel and control-channel signal generating portion 500.

As shown in Fig. 24, in the traffic-channel and control-channel signal generating portion 500, subcarrier components of traffic channel symbols that have been subjected to S/P conversion and that have then been subjected to frequency-domain spreading processing 201a and corresponding subcarrier components of control channel symbols that have been subjected to S/P conversion and that have then been subjected to frequency-domain spreading processing 201b are added by an adder 501. The resulting signals are multiplied by cell-specific scrambling codes (scrambling 202b), are subjected to Inverse Fast Fourier Transform processing (IFFT processing 231b), and are converted by P/S conversion 232b into a sequence of time signals, to which a GI 240 is then added by an Add GI 233b.

### (Seventeenth Embodiment)

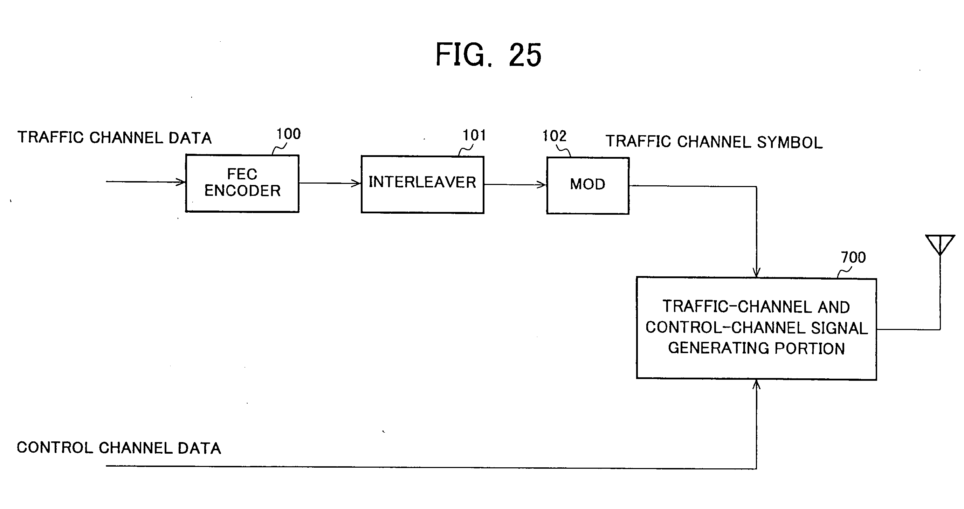

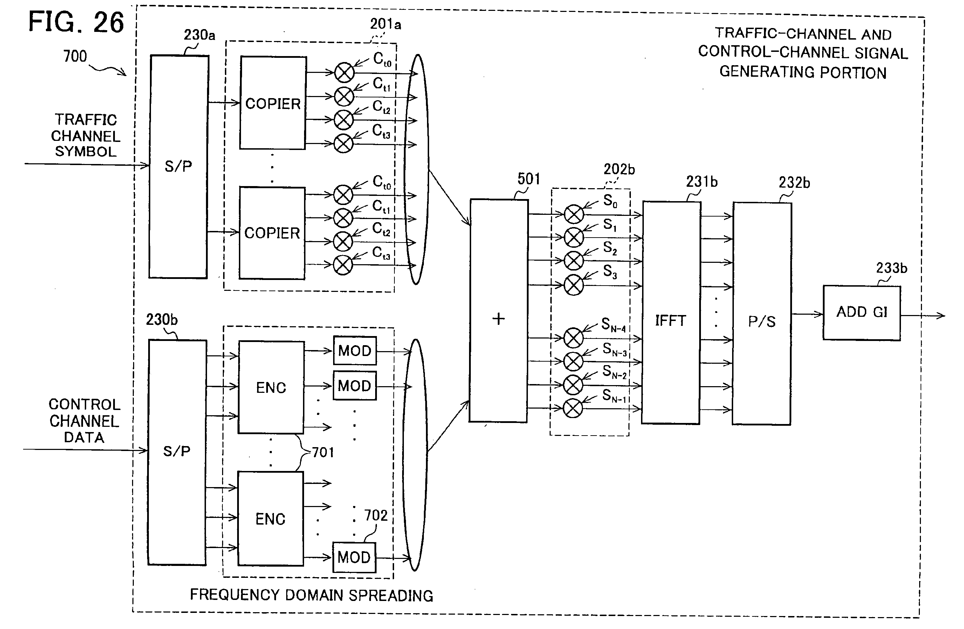

Fig. 25 is a block diagram of a transmitter for a communication system according to a seventeenth embodiment of the present invention. Fig. 26 is a block diagram of a traffic-channel and control-channel signal generating portion in the present embodiment.

As shown in Fig. 25, in the transmitter of the present embodiment, control channel data is directly input to a traffic-channel and control-channel signal generating portion 700. Since the processing of the traffic channel data is analogous to that in the above-described sixteenth embodiment (shown in Fig. 23), the redundant description will be omitted.

In the present embodiment, as shown in Fig. 26, in the traffic-channel and control-channel signal generating portion 700, the traffic channel symbol is subjected to S/P conversion 230a and is then subjected to frequency-domain spreading processing 201a. In this case, the control channel data that has been subjected to S/P conversion 230b is block-encoded by block encoders 701 (Enc) and is modulated as subcarrier components by modulators 702 (MOD).

The block encoders 701 (Enc) output n-bit codewords with respect to input k-bit information bits. It is desired in this case that n be a divisor of the number of subcarriers, N. When it is assumed that n is a divisor of N and the modulation scheme of the subcarriers is BPSK, the control channel data is subjected to serial-to-parallel conversion by the S/P conversion for every k·N/n bits.

Encoding processing is performed by the block encoders 701 (Enc), arranged in parallel with each other, and N bits are output. N bits are subjected to BPSK modulation as subcarrier components and are multiplexed with traffic channel signals by an adder 501.

Since the processing of the traffic channel signals in Fig. 26 is analogous to that in the above-described sixteenth embodiment (see Fig. 24), the redundant description will be omitted.

### (Eighteenth Embodiment)

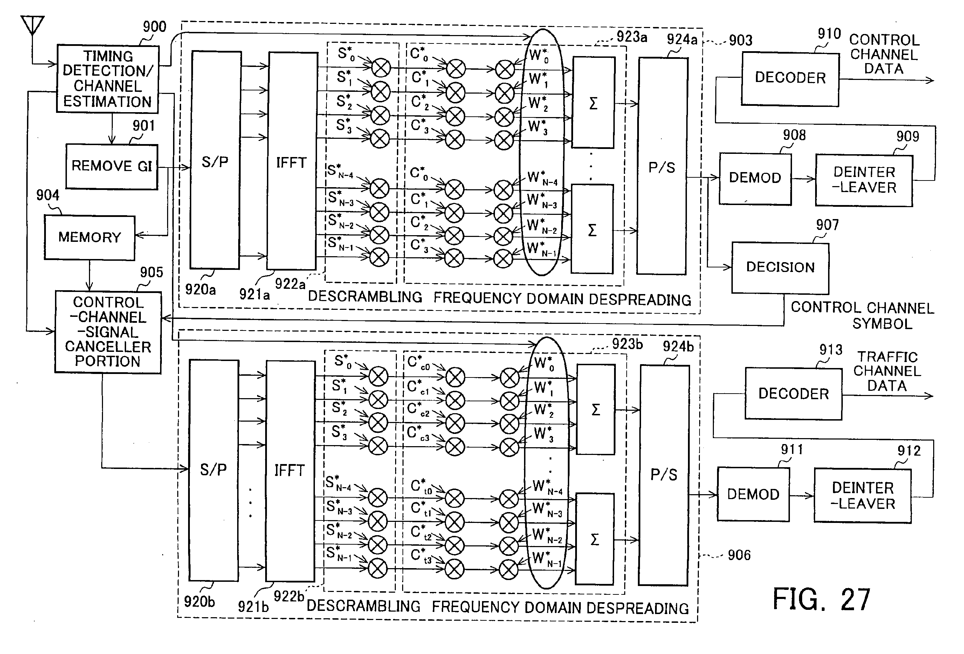

Fig. 27 is a block diagram showing the configuration of a receiver for a communication system according to an eighteenth embodiment of the present invention. It is assumed in the present embodiment that the receiver described in the present embodiment receives a signal transmitted from a transmitter as described in the thirteenth embodiment or the sixteenth embodiment through a wireless channel.

First, timing-detection/channel-estimation processing 900 performs timing detection and channel estimation to determine timing for extracting a reception signal for performing FFT processing 921a and channel estimation values. From the channel estimation values, weighting factors Wi* (i=0, 1, ..., N-1) by which respective subcarriers are to be multiplied after FFT processing 921a are determined. Although a complex conjugate of a channel gain corresponding to frequency components of each subcarrier of the channel is used as the weighting factor Wi*, the method for determining the weighting factor Wi* is not limited thereto. The channel estimation values are also used when a control-channel-signal canceller portion 905 generates copies of the control channel signal.

The GI 240 of the reception signal is removed by a Remove GI 901, the resulting signal is temporarily stored in a memory, and the control channel signal is first demodulated. The control channel signal has been subjected to OFCDM modulation involving frequency domain spreading. Thus, in a control-channel-signal processing portion 903, complex conjugates (C*_{C0}, C*_{C1}, C*_{C2}, C*_{C3}) of the spreading codes used for the spreading and the weighting factors Wi* determined by the timing-detection/channel-estimation processing 900 are used to perform frequency despreading processing 923a. In this case, S/P conversion 920a, FFT processing 921a, descrambling 922a, frequency-domain despreading processing 923a, and P/S conversion 924a are executed.

After the frequency-domain despreading processing 923a is performed, control channel data is obtained through a demodulator 908 (Demod), a deinterleaver 909 (Deinterleaver), and a decoder 910 (Decoder).

After the frequency-domain despreading is performed, a Decision 907 performs symbol determination and the control-channel-signal canceller portion 905 creates copies of the control channel signal and removes control channel signal components from the reception signal stored in a memory 904. Signals from which the control channel signal components are removed, i.e., the traffic channel signal components, have been subjected to OFCDM modulation involving frequency domain spreading. Thus, in a traffic-channel-signal processing portion 906, complex conjugates (C*_{T0}, C*_{T1}, C*_{T2}, C*_{T3}) of the spreading codes used for the spreading and the weighting factors Wi* determined by the timing-detection/channel-estimation processing are used to perform frequency-domain despreading processing 923b. In this case, S/P conversion 920b, FFT processing 921b, descrambling 922b, frequency-domain despreading processing 923b, and P/S conversion 924b are executed. Then, a demodulator 911 (Demod), a deinterleaver 912 (Deinterleaver), and a decoder 913 (Decoder) perform error correction decoding to obtain traffic channel data.

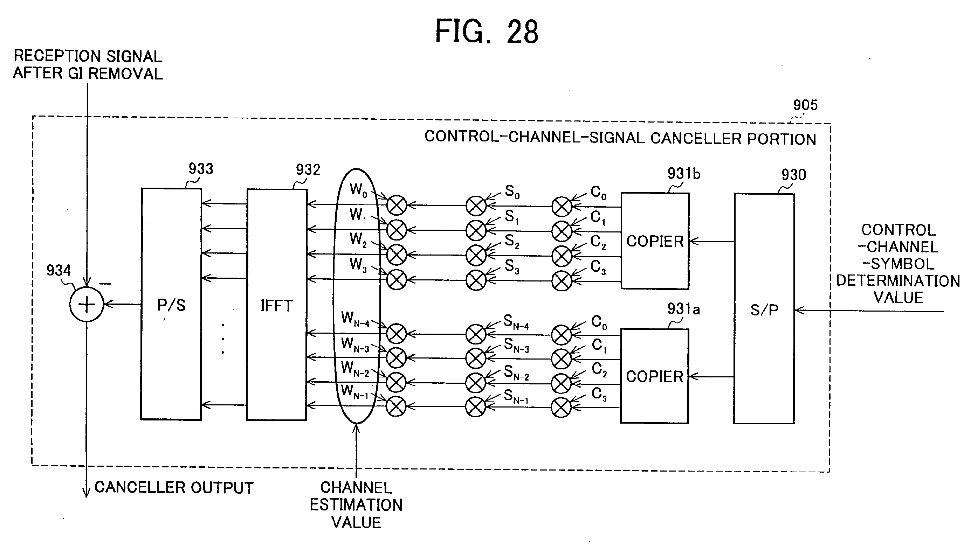

Fig. 28 is a block diagram showing a detailed configuration of the control-channel-signal canceller portion. In the same manner as the control-channel-signal generating portion 107 shown in Fig. 20, after S/P conversion 930 is performed on the control channel symbol determined by the Decision 907 shown in Fig. 27, copying is performed so that the control channel symbol is transmitted over multiple subcarriers, and frequency domain spreading is performed (frequency domain spreading processing) by multiplying spreading codes (C_{C0}, C_{C1}, C_{C2}, C_{C3}). In addition, the resulting signals are multiplied by cell-specific scrambling codes (scrambling). In this case, after the subcarrier components are multiplied by the channel estimation values determined by the channel estimating portion 900 (channel-estimation-value multiplication), Inverse Fast Fourier Transform processing (IFFT processing 932) and P/S conversion 933 are performed to obtain copies of the time signal of the control channel signal. The copied signals are subtracted by an adder 934 from the reception signal stored in the memory, so that a reception signal in which the control channel signal is cancelled is obtained.

### (Nineteenth Embodiment)

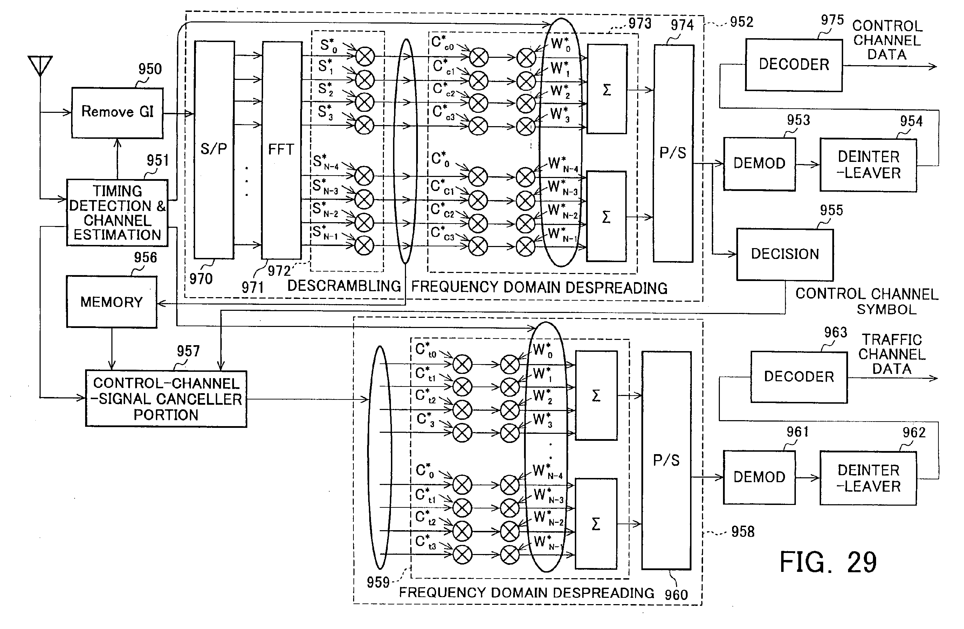

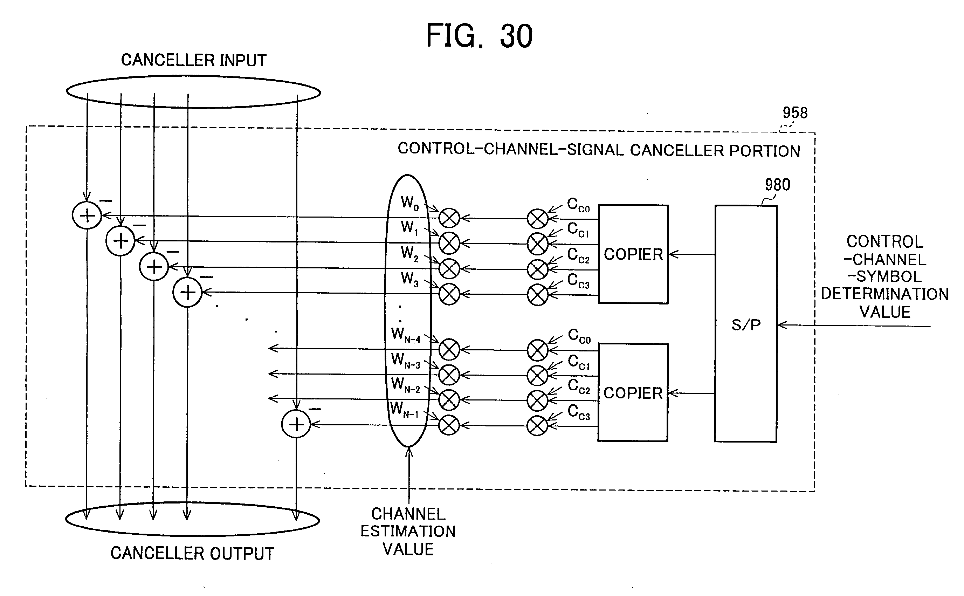

Fig. 29 is a block diagram showing the configuration of a receiver according to a nineteenth embodiment of the present invention.
Although Figs. 27 and 28 illustrate the embodiment in which the control channel signal is cancelled from the reception signal by using the signal in the time domain, it is also possible to perform canceling for each subcarrier in the frequency domain, as shown in Figs. 29 and 30.

In the present embodiment, a reception signal from which a guard interval was removed by a Remove GI 950 is subjected to frequency despreading processing by a traffic-channel-signal processing portion 952. In this case, the reception signal is subjected to S/P conversion 970 and is subjected to FFT processing 971 to be converted into subcarrier components. Signals at a point of time when descrambling 972 is performed are stored in a memory 956. The control channel signals directly subjected to frequency-domain despreading processing 973 and P/S conversion 974 are then subjected to symbol determination processing 955 (Decision 955). A control-channel-signal canceller portion 957 cancels the control channel signal in the frequency domain. In a traffic-channel-signal processing portion 1 (958), after frequency-domain despreading processing 959 is performed, P/S conversion 960 is performed. Demodulation is performed by a Demod 961, deinterleaving is performed by a Deinterleaver 962, and traffic channel data is output through a decoder (Decoder) 962. For other portions, redundant descriptions for functions similar to those in Fig. 27 will be omitted.

Fig. 30 is a detailed block diagram of the control-channel-signal canceller portion 957 shown in Fig. 29.

In this case, S/P conversion 980 is performed on the determined control channel symbol, and the resulting symbols are multiplied by spreading codes (C_{C0}, C_{C1}, C_{C2}, C_{C3}) and are subjected to frequency domain spreading. Then, channel-estimation-value multiplication is performed to multiply the subcarrier components by the channel estimation values determined by the timing-detection/channel-estimation processing. The resulting signals are then subtracted from signals (cancellers) obtained during descrambling and stored in the memory 956, so that a reception signal in which the control channel signal is cancelled is obtained.

### (Twentieth Embodiment)

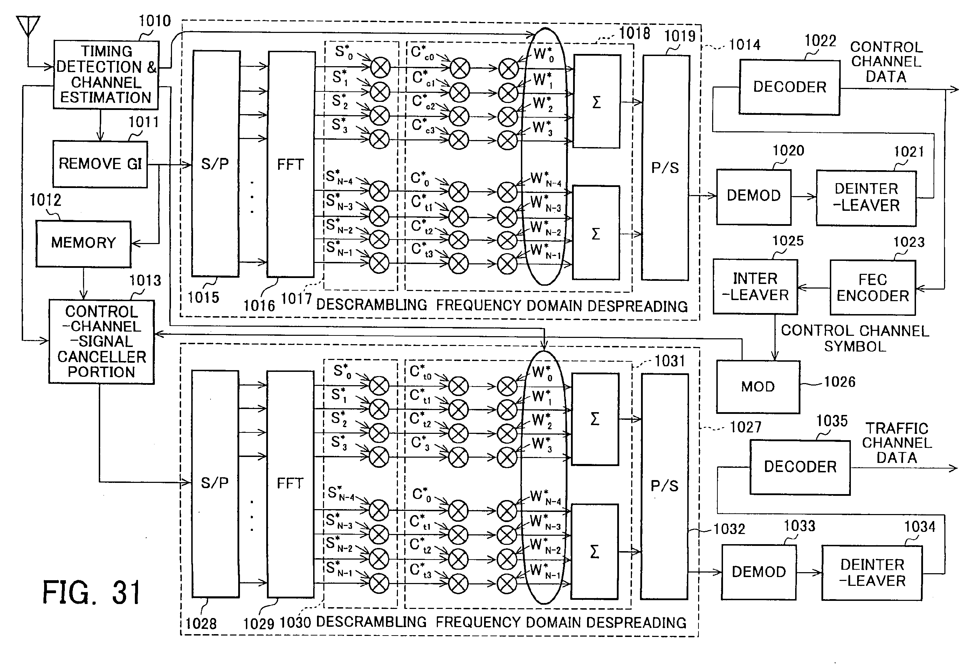

Fig. 31 is a block diagram showing the configuration of a receiver according to a twentieth embodiment of the present invention.
First, timing-detection/channel-estimation processing 1010 performs timing detection and channel estimation to determine timing for extracting a reception signal for performing FFT processing and channel estimation values. From the channel estimation values, a weighting factor by which each subcarrier is to be multiplied after FFT processing 1016 is determined.

A guard interval of the reception signal is removed by a Remove GI 1011, the resulting signal is temporarily stored in a memory 1012, and the control channel is first demodulated. The control channel signal has been subjected to OFCDM modulation involving frequency domain spreading. Thus, in a control-channel data signal processing portion 1014, complex conjugates (C*_{C0}, C*_{C1}, C*_{C2}, C*_{C3}) of the spreading codes used for the spreading and the weighting factors determined by the timing-detection/channel-estimation processing 1010 are used to perform frequency-domain despreading processing 1018. In this case, S/P conversion 1015, FFT processing 1016, descrambling 1017, frequency-domain despreading processing 1018, and P/S conversion 1019 are executed.

After the frequency despreading is performed, control channel data is obtained through a demodulator (Demod) 1020, a deinterleaver (Deinterleaver) 1021, and a decoder (Decoder) 1022.

In the present embodiment, the control channel data decoded by the decoder (Decoder) 1022 is re-encoded by an FEC Encoder 1023, is interleaved by an Interleaver 1025, is modulated by a MOD 1026, and is sent to a control-channel-signal canceller portion 1013.

The control-channel-signal canceller portion 1013 is the same as the block shown in Fig. 28 illustrated above. In this case, a description is given using Fig. 28.

First, after S/P conversion 930 is performed, the control channel symbol is copied by copiers 931a and 931b so that it is transmitted over multiple subcarriers, the resulting symbols are multiplied by spreading codes (C_{C0}, C_{C1}, C_{C2}, C_{C3}) to thereby perform frequency domain spreading (frequency-domain spreading processing). The resulting signals are multiplied by cell-specific scrambling codes (scrambling). In this case, after the subcarrier components are multiplied by the channel estimation values determined by the channel estimating portion 1010 (channel-estimation-value multiplication), Inverse Fast Fourier Transform processing (IFFT processing) 932 and P/S conversion 933 are performed to obtain copies of the time signal of the control channel signal. A subtractor 934 subtracts the copied signals from the reception signal stored in the memory, so that a reception signal in which the control channel signal is cancelled is obtained.

The generated reception signal is subjected to OFCDM demodulation processing by a traffic-channel-signal processing portion 1027. In this case, S/P conversion 1028, FFT processing 1029, descrambling 1030, frequency-domain despreading processing 1031, and P/S conversion 1032 are performed. In addition, a demodulator (Demod) 1033, a deinterleaver (Deinterleaver) 1034, and a decoder (Decoder) 1035 can perform error correction decoding to obtain traffic channel data.

### (Twenty-First Embodiment)

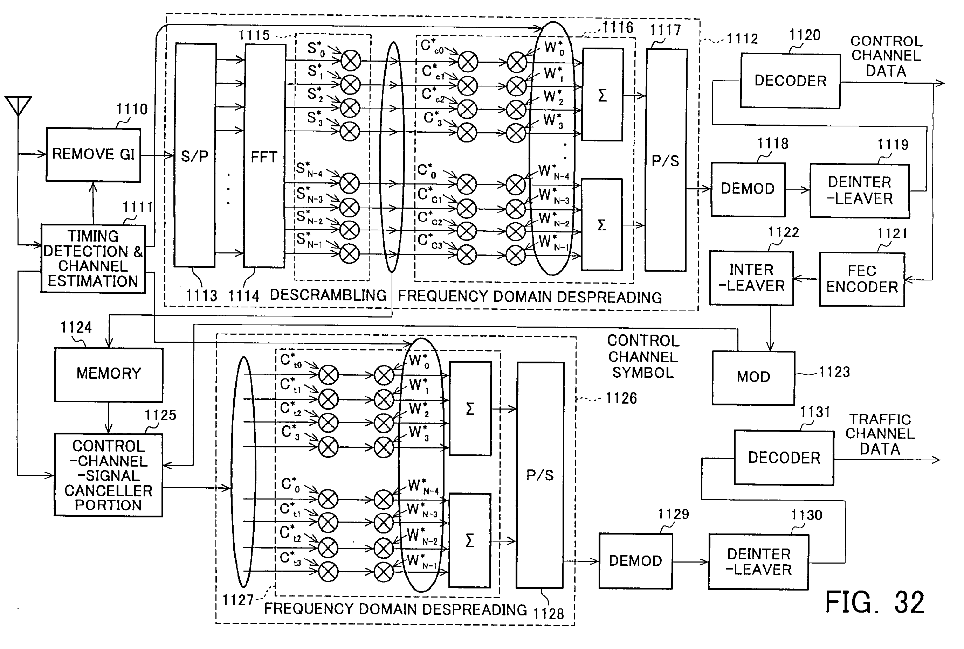

Fig. 32 is a block diagram showing the configuration of a receiver according to a twenty-first embodiment of the present invention. A reception signal from which a guard interval was removed by a Remove GI 1110 is subjected to frequency despreading processing by a control-channel-signal processing portion 1112. In this case, the reception signal is subjected to S/P conversion 1113 and is subjected to FFT processing 1114 to be converted into subcarrier components. Signals at a point of time when descrambling 1115 is performed are stored in a memory 1124. The control channel signals are directly subjected to frequency-domain despreading processing 1116 and P/S conversion 1117.

After the control-channel data signal processing portion 1112, control channel data is obtained through a demodulator (Demod) 1118, a deinterleaver (Deinterleaver) 1119, and a decoder (Decoder) 1120.

In the present embodiment, the control channel data temporarily decoded by the decoder (Decoder) 1120 is re-encoded by an FEC Encoder 1121, is interleaved by an Interleaver 1122, is modulated by a MOD 1123, and is sent to a control-channel-signal canceller portion 1125.

The control-channel-signal canceller portion 1125 is the same as the block shown in Fig. 30 illustrated above. In this case, a description is now given using Fig. 30.

S/P conversion 980 is performed on the control channel symbol modulated by the MOD 1123, and the resulting symbols are multiplied by spreading codes (C_{C0}, C_{C1}, C_{C2}, C_{C3}) and are subjected to frequency-domain spreading processing. Then, channel-estimation-value multiplication is performed to multiply the subcarrier components by the channel estimation values determined by the timing-detection/channel-estimation processing. The resulting signals are then subtracted from signals (cancellers) obtained during descrambling and stored in the memory, so that a reception signal in which the control channel signal is cancelled is obtained.

In a traffic channel processing portion 1126, after frequency-domain despreading processing 1127 is performed, P/S conversion 1128 is performed. Demodulation is performed by a Demod 1129, deinterleaving is performed by a Deinterleaver 1130, decoding is performed by a Decoder 1131, and traffic channel data is output.

### (Twenty-Second Embodiment)

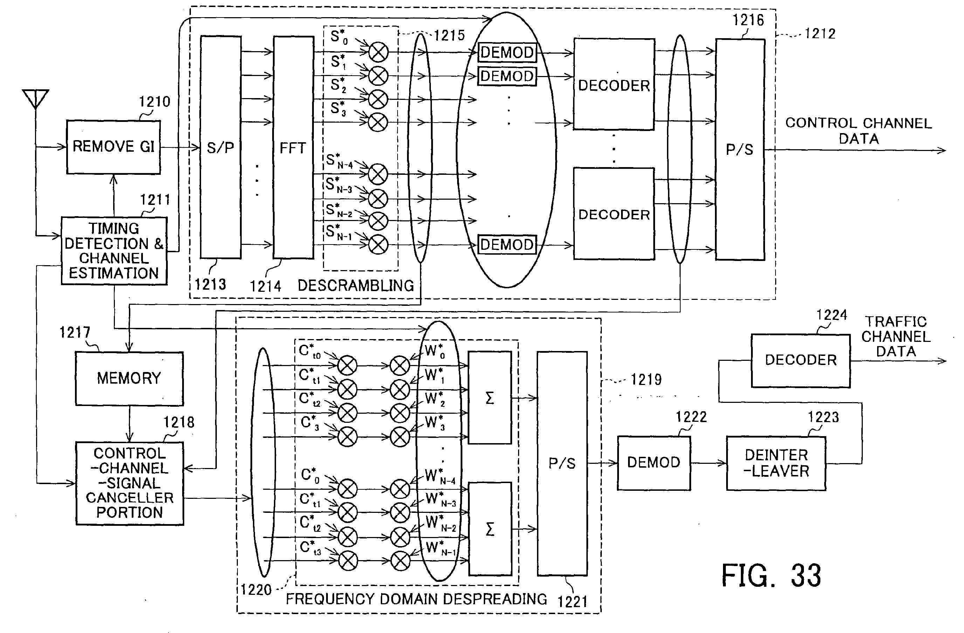

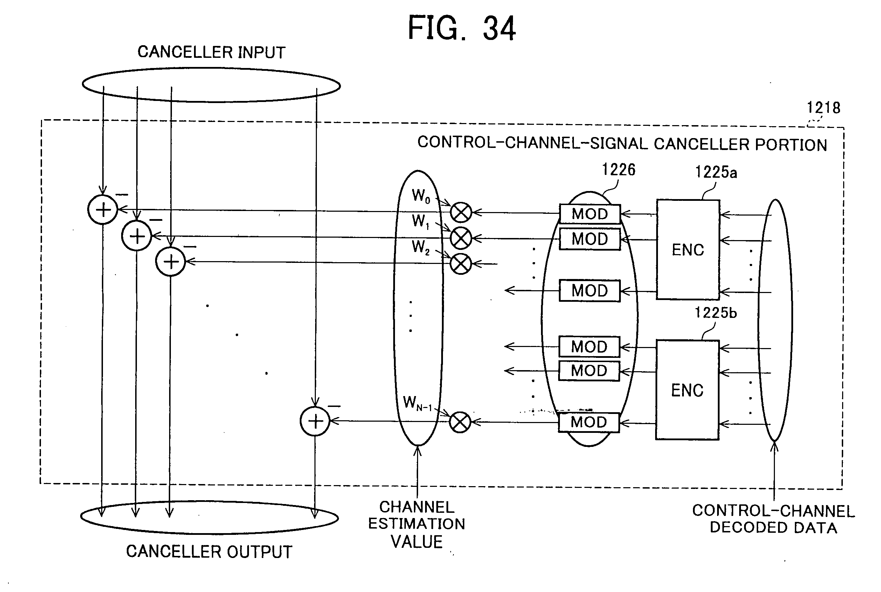

Fig. 33 is a block diagram showing the configuration of a receiver according to a twenty-second embodiment of the present invention and illustrating the configuration of a receiver corresponding to the transmitter of the seventeenth embodiment described above. Fig. 34 is a block diagram of a control-channel-signal canceller in the present embodiment.
As shown in Fig. 33, in the receiver of the present embodiment, a reception signal from which a guard interval was removed by a Remove GI 1210 is subjected to S/P conversion 1213 in a control-channel data signal processing portion 1212 and is then converted into subcarrier components by FFT processing 1214, and signals at a point of time when descrambling 1215 is performed are stored in a memory 1217. Then, after the subcarrier components are demodulated by demodulators (Demod), block-code decoding processing is performed by decoders (Decoder), and P/S conversion 1216 is performed, so that control channel data is obtained.

Since the configuration of the above-described twenty-first embodiment shown in Fig. 32 requires decoding processing for error correction encoding for each frame, OFDM symbols need to be converted into time-series data by the P/S conversion after demodulation and need to be decoded for each frame. In the present embodiment, however, since block codes having a code length less than or equal to the number of subcarriers are used, decoding processing can be performed for each OFDM symbol. The decoded control channel data is sent to a control-channel-signal canceller portion 1218 and control channel signal components are cancelled from the reception signals stored in the memory 1217. In addition, in traffic channel processing 1219, after frequency-domain despreading processing 1220 is performed, P/S conversion 1221 is performed. Demodulation is performed by a Demod 1222, deinterleaving is performed by a Deinterleaver 1223, and decoding is performed by a Decoder 1224, so that traffic channel data is obtained.

As shown in Fig. 34, in the control-channel-signal canceller portion 1218, the control channel decoded data, which was temporarily decoded, is re-encoded by encoders (Enc) 1225, the resulting data is modulated by modulators (Mod) 1226 for respective subcarriers, and the modulated data is subjected to channel-estimation-value multiplication, so that copies of the control channel signal are provided. The copies are subtracted from the signals obtained after the descrambling and stored in the memory 1217, so that canceller output signals are provided.

### (Twenty-Third Embodiment)

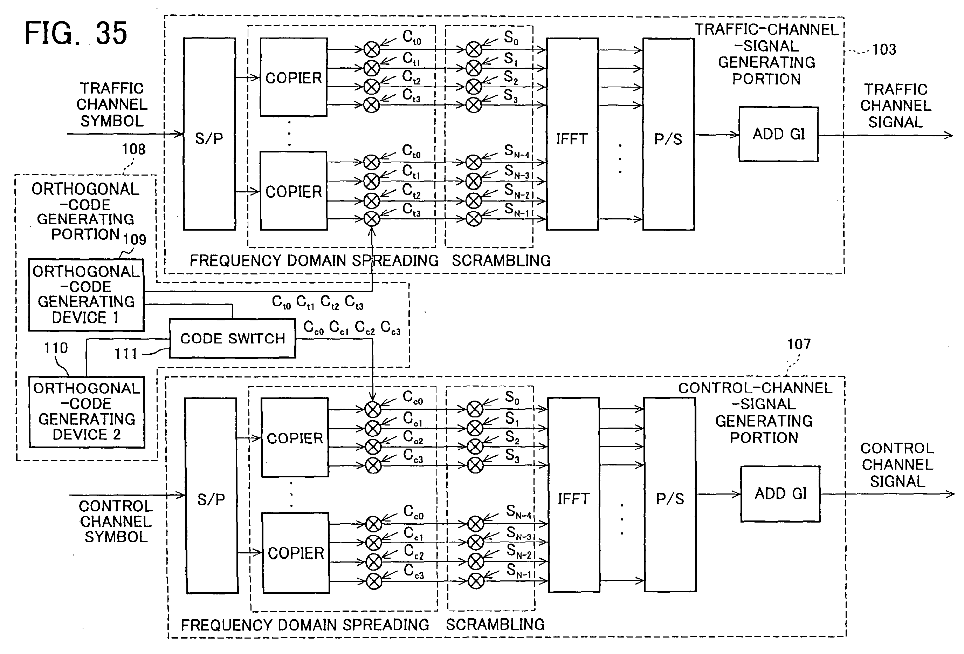

Fig. 35 is a block diagram of a control-channel-signal generating portion and a traffic-channel-signal generating portion of a transmitter according to a twenty-third embodiment.
The present embodiment has a configuration in which an orthogonal-code generating portion 108, which represents a feature of the present embodiment, is added to the control-channel-signal generating portion 103 and the traffic-channel-signal generating portion 107 in the thirteenth embodiment. The present embodiment has the same configuration as the thirteenth embodiment except that a spreading code (code) switching function is provided. Naturally, a code generating portion is also provided in the case of the thirteenth embodiment; however, the description is omitted since the only difference is that the codes for the control channel signal and the codes for the traffic channel signal are not orthogonal to each other.

Since a control-channel-signal generating portion 103 and a traffic-channel-signal generating portion 107 shown in Fig. 35 have the same configurations as those in the thirteenth embodiment, the descriptions thereof will be omitted. The orthogonal-code generating portion 108 includes an orthogonal-code generating device 1 (109) and an orthogonal-code generating device 2 (110), which generate multiple orthogonal codes, and a code switch 111 for switching between the orthogonal-code generating device 1 (109) and the orthogonal-code generating device 2 (110). The codes generated by the orthogonal-code generating device 1 (109) and the codes generated by the orthogonal-code generating device 2 (110) are non-orthogonal to each other.

Only codes generated by the orthogonal-code generating device 1 (109) are used as codes for the traffic channel signal. With respect to codes used for the control channel signal, when the channel quality is favorable, the code switch 111 is switched to the orthogonal-code generating device 2 (110) to use codes generated by the orthogonal-code generating device 2 (110). When the channel quality is poor, the code switch 111 is switched to the orthogonal-code generating device 1 (109) to use codes generated by the orthogonal-code generating device 1 (109). If multiple control channels or multiple traffic channels exist, a determination as to which of the orthogonal codes or the non-orthogonal codes are to be selected may be made based on a channel using the poorest channel or may be made based on the average value of levels of each channel.

In the above, the determination of the orthogonal or non-orthogonal codes has been made based on the channel quality. However, the arrangement can also be such that, when enough codes are generated by the orthogonal-code generating device 1 (109) as codes used for the control channel signal, the codes generated by the orthogonal-code generating device 1 (109) are used, and when codes are insufficient, the code switch 111 is switched to the orthogonal-code generating device 2 (110) to use the codes generated by the orthogonal-code generating device 2 (110). However, in this case, when codes that are not orthogonal are used, the reception quality deteriorates compared to a case in which orthogonal codes are used. Thus, it is necessary to perform transmission with a slightly increased transmission level compared to a case in which orthogonal codes are used.

In addition, the configuration in which the orthogonal-code generating device 1 (109) and the orthogonal-code generating device 2 (110) can be switched for only the control channel signal is used in the present embodiment. The configuration may be such that the orthogonal-code generating devices 1 and 2 can be switched for only the traffic channel signal. The configuration may also be such that the orthogonal-code generating device 1 (109) and the orthogonal-code generating device 2 (110) can be switched for both the control channel signal and the traffic channel signal. For example, such configurations are effective when it is desired to fix codes for the control channel.

With the configuration described above, it is possible to assign optimum codes according to the channel quality or the number of codes in use.

### (Twenty-Fourth Embodiment)

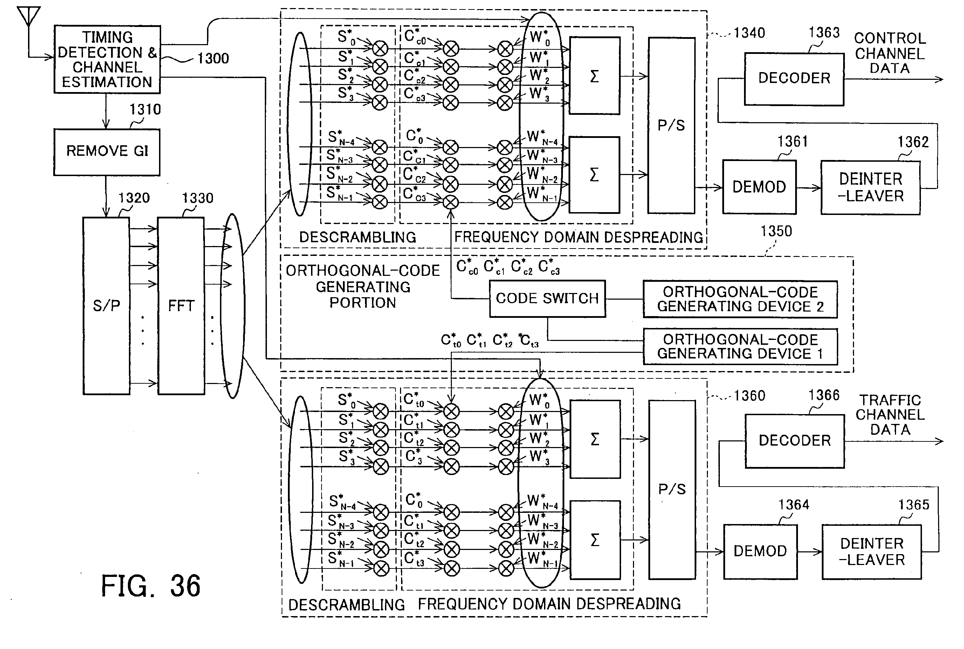

Fig. 36 is a block diagram showing the configuration of a receiver according to a twenty-fourth embodiment of the present invention.

It is assumed in the present embodiment that a signal transmitted from a transmitter as described in the twenty-fourth embodiment (see Fig. 35) is received through a wireless channel. The present embodiment shows the configuration of a receiver for receiving signals using, as spreading codes for a control channel signal, codes that are not orthogonal to spreading codes used for a traffic channel signal when the channel quality is favorable and using codes that are orthogonal to the spreading codes when the quality of the channel is poor. Thus, the configuration of the receiver does not include, particularly, the control-channel-signal canceller portion described above.

First, timing-detection/channel-estimation processing 1300 performs timing detection and channel estimation to determine timing for extracting a reception signal for performing FFT processing 1330 and channel estimation values. A guard interval of the reception signal is removed by a Remove GI 1310, and the resulting signal is subjected to S/P conversion 1320 and FFT processing 1330. Thereafter, the control channel and the traffic channel are detected and processed by a control-channel-data signal processing portion (2) (1340) and a traffic-data-signal processing portion (2) (1360), respectively.
Since the control channel signal has been subjected to OFCDM modulation involving frequency domain spreading, complex conjugates (C*_{C0}, C*_{C1}, C*_{C2}, C*_{C3}) of the spreading codes used for the spreading and the weighting factors determined by the timing-detection/channel-estimation processing are used to perform frequency despreading processing. In this case, descrambling, frequency domain despreading, and P/S conversion are executed. The complex conjugates (C*_{C0}, C*_{C1}, C*_{C2}, C*_{C3}) of the spreading codes used for the spreading are output via a code switch. When the control channel is spread using codes that are orthogonal to those for the traffic channel, the code switch is switched to an orthogonal-code generating device 1, and when the control channel is spread by codes that are not orthogonal, the code switch is switched to an orthogonal-code generating device 2. After the frequency despreading processing is performed, control channel data is obtained through a demodulator (Demod) 1361, a deinterleaver (Deinterleaver) 1362, and a decoder (Decoder) 1363.
Since the traffic channel signal has similarly been subjected to OFCDM modulation involving frequency domain spreading, complex conjugates (C*_{T0}, C*_{T1}, C*_{T2}, C*_{T3}) of the spreading codes used for the spreading and the weighting factors determined by the timing-detection/channel-estimation processing are used to perform frequency-domain despreading processing. In this case, descrambling, frequency domain despreading, and P/S conversion are executed. The complex conjugates (C*_{T0}, C*_{T1}, C*_{T2}, C*_{T3}) of the spreading codes used for the spreading are output from the orthogonal-code generating device 1. After the frequency-domain despreading processing is performed, traffic channel data is obtained through a demodulator (Demod) 1364, a deinterleaver (Deinterleaver) 1365, and a decoder (Decoder) 1366.
In the above-described configuration of the receiver, if the descrambling codes for the control channel and the descrambling codes for the traffic channel are the same, it is possible to use the same configuration for the descrambling.

### (Twenty-Fifth Embodiment)

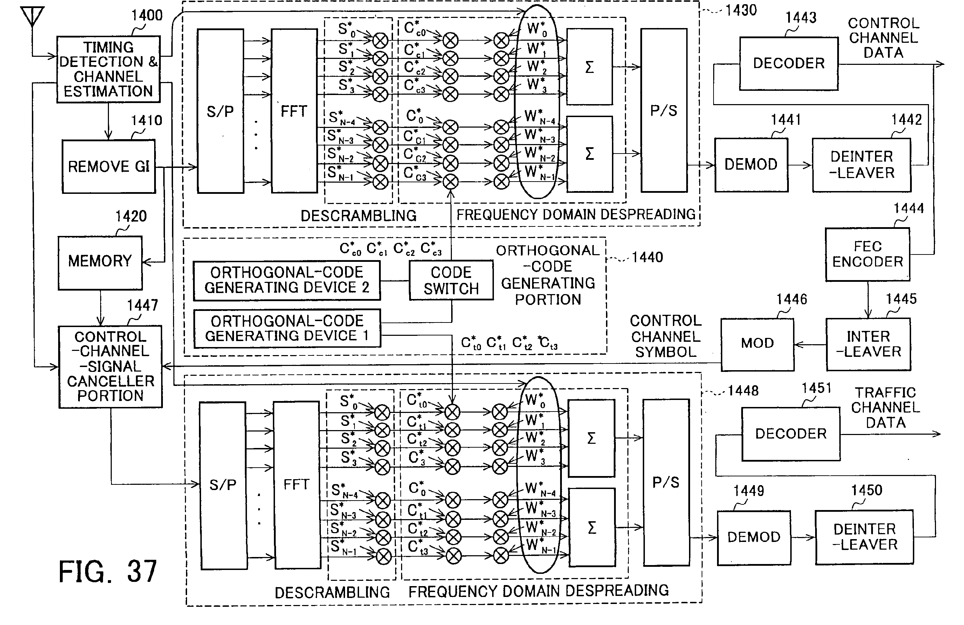

Fig. 37 is a block diagram showing the configuration of a receiver according to a twenty-fifth embodiment of the present invention.
It is assumed in the present embodiment that a signal transmitted from a transmitter as described in the twenty-fourth embodiment (see Fig. 35) is received through a wireless channel. Unlike the twenty-fourth embodiment, the present embodiment has a configuration in which the receiver has a canceller. With this arrangement, when the spreading codes for the control channel are not orthogonal to the spreading codes for the traffic channel, traffic channel signals can be demodulated after the canceller cancels out control channel signals from the reception signal. Thus, it is possible to perform high-quality reception.
First, timing-detection/channel-estimation processing 1400 performs timing detection and channel estimation to determine timing for extracting a reception signal for performing FFT processing and channel estimation values. From the channel estimation values, a weighting factor by which each subcarrier is to be multiplied after FFT processing is determined.

A guard interval of the reception signal is removed by a Remove GI 1410, the resulting signal is temporarily stored in a memory 1420, and a control channel signal is first detected by a control channel data signal processing portion 1430. Since the control channel signal has been subjected to OFCDM modulation involving frequency domain spreading, complex conjugates (C*_{C0}, C*_{C1}, C*_{C2}, C*_{C3}) of the spreading codes used for the spreading and the weighting factors determined by the timing-detection/channel-estimation processing are used to perform despreading processing. In this case, S/P conversion, FFT processing, descrambling, frequency domain despreading, and P/S conversion are executed. An orthogonal-code generating portion 1440 in this case is similar to the one in the twenty-fourth embodiment, and the complex conjugates (C*_{C0}, C*_{C1}, C*_{C2} C*_{C3}) of the spreading codes used for the spreading are output via a code switch. After the despreading processing is performed by the control-channel-signal processing portion 1430, control channel data is obtained through a demodulator (Demod) 1441, a deinterleaver (Deinterleaver) 1442, and a decoder (Decoder) 1443.

Next, traffic channel detection performed by a traffic-channel-signal processing portion 1448 will be described. If the spreading codes for the received control channel are orthogonal to the spreading codes for the traffic channel, a control-channel canceller portion 1447 directly outputs an input, received from the memory 1420, to the traffic-channel-signal processing portion 1448 and performs traffic channel detection (demodulation) without canceling the control channel. That is, OFCDM demodulation processing for the traffic channel is performed. In this case, S/P conversion, FFT processing, descrambling, frequency domain despreading, and P/S conversion are executed. Then, a demodulator (Demod), a deinterleaver (Deinterleaver), and a decoder (Decoder) perform error correction decoding to obtain traffic channel data.

If the spreading codes for the received control channel are not orthogonal to the spreading codes of the traffic channel, a control channel signal is cancelled from the received signal and demodulation of the traffic channel is performed.

That is, the decoded control channel data is re-encoded by an FEC encoder 1444, is interleaved by an Interleaver 1445, is modulated by a MOD 1446, and is sent to a control-channel-signal canceller portion 1447. The control-channel-signal canceller portion 1447 is the same as the above-described block shown in Fig. 28. That is, after the S/P conversion is performed, copying is performed so that the control channel symbol is transmitted over multiple subcarriers, and frequency domain spreading is performed (frequency-domain spreading processing 1) by multiplying spreading codes (C_{C0}, C_{C1}, C_{C2}, C_{C3}). In addition, the resulting signals are multiplied by cell-specific scrambling codes (scrambling). In this case, after the subcarrier components are multiplied by the channel estimation values determined by the channel estimating portion (channel-estimation-value multiplication), Inverse Fast Fourier Transform processing (IFFT processing) and P/S conversion are performed to obtain copies of the time signal of the control channel signal. The copied signals are subtracted from the reception signal stored in the memory, so that a reception signal in which the control channel signal is cancelled (i.e., a traffic channel signal) is obtained.

Then, as described above, demodulation processing for the traffic channel is performed, so that traffic channel data is obtained from the reception signal.

In the present embodiment, although the control channel signal is reproduced from the control channel data as a control-channel-signal canceling method, the control channel signal may be reproduced from the control channel symbols before being subjected to the Demod 1441. Although the canceling is performed in a time domain before the S/P conversion, it is also possible to perform canceling for each subcarrier in a frequency domain after the FFT processing.

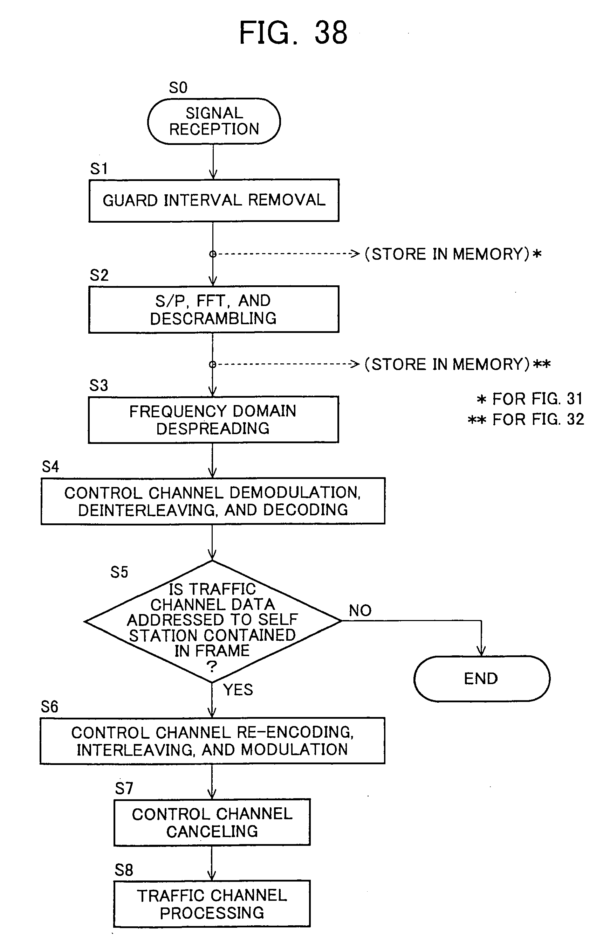

Next, the operations of the receivers according to the above-described twentieth and twenty-first embodiments (see the block diagrams shown in Figs. 31 and 32) will be described below with reference to the flow chart shown in Fig. 38.
Fig. 38 is a flow chart showing processing in which, only when it is determined from obtained control information that information addressed to the self station is contained in the traffic channel, a traffic channel signal is extracted.

Although the signals stored in the memory (1012 or 1124) and subjected to the canceling processing are different between the case of Fig. 31 and the case of Fig. 32, the flows for control are the same. That is, based on decoded control information, a determination is made as to whether or not information addressed to the self station is contained in the traffic channel of a received frame. The subsequent re-encoding/interleaving/modulation, control channel canceling, traffic channel reception processing are performed only when information addressed to the self station is contained.

In this case, first, a signal is received (step S0). A guard interval is removed from the reception signal by a Remove GI. Then, S/P conversion processing, FFT processing, and descrambling processing are performed (step S2). Frequency-domain despreading processing is performed (step S3). In addition, control channel demodulation, deinterleaving, and decoding processing are performed (step S4). In the case of the receiver apparatus having the configuration shown in Fig. 31, after the guard interval is removed, the reception signal is stored in the memory 1012. In the case of the receiver apparatus having the configuration shown in Fig. 32, after the descrambling 1115 is performed, the reception signal is stored in the memory 1124.

Subsequently, based on the decoded control channel information, a determination is made as to whether or not traffic channel data addressed to the self station is contained in the received frame (step S5). When traffic channel data addressed to the self station is contained (step S5; YES), the control channel data is re-encoded, interleaved, and modulated (step S6). The control channel is then cancelled and processing for the traffic channel is performed (step S8) . When a traffic channel addressed to the self station is not contained in the received frame (step S5; NO), the processing ends.

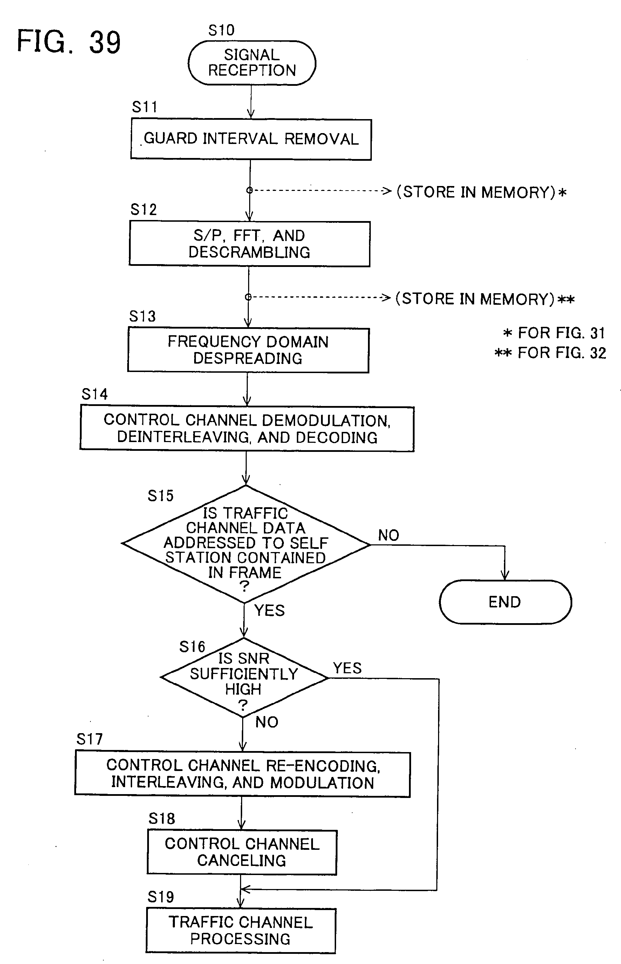

Next, an operation for determining whether or not to perform control-channel cancellation in accordance with the value of an SN ratio in the operation of the receivers (see the block diagrams shown in Figs. 31 and 32) according to the above-described twentieth and twenty-first embodiments will be described below with reference to the flow chart shown in Fig. 39.

Fig. 39 is a flow diagram also showing a case in which, only when it is determined from obtained control channel information that information addressed to the self station is contained in the traffic channel, a traffic channel signal is extracted. Although signals stored in the memories and subjected to the cancel processing are different between the case of Fig. 31 and the case of Fig. 32, the flows for control are the same. That is, based on the decoded control information, a determination is made as to whether or not information addressed to the self station is contained in the traffic channel of a received frame. Only when information addressed to the self station is contained, the process proceeds to a next determination.

In this case, first, a signal is received (step S10). A guard interval is removed from the reception signal (step S11). Then, S/P conversion processing, FFT processing, and descrambling processing are performed (step S12). Frequency domain despreading is performed (step S13). In addition, control channel demodulation, deinterleaving, and decoding processing are performed (step S14). As in the flow shown in Fig. 38, in the case of the configuration shown in Fig. 31, after the guard interval is removed, the reception signal is stored in the memory. In the configuration shown in Fig. 32, after the descrambling is performed, the reception signal is stored in the memory.

A determination is then made as to whether or not traffic channel data addressed to the self station is contained in the received frame. When traffic channel data is not contained, the processing ends.

When traffic channel data is contained, a determination is made as to whether or not the SNR is sufficiently high (step S16). That is, a judgment is made as to whether or not traffic channel data can be properly output even without canceling the control channel signal, based on channel state information measured by the channel estimating portion, modulated/encoded parameters contained in the control channel, and so on, and a determination is made as to whether or not to cancel the control channel. When the channel quality is sufficiently high (step S16; YES), control channel re-encoding/interleaving/modulation, control-channel cancel processing are omitted and traffic-channel processing is performed (step S19). In this case, the control channel canceller directly outputs an input, received from the memory, to the traffic channel processing portion. When the channel quality is not sufficiently high (step S16; NO), control-channel re-encoding, interleaving, and modulation processing are performed (step S17). Further, control-channel cancel processing is performed (step S18) and traffic channel processing is performed (step S19).

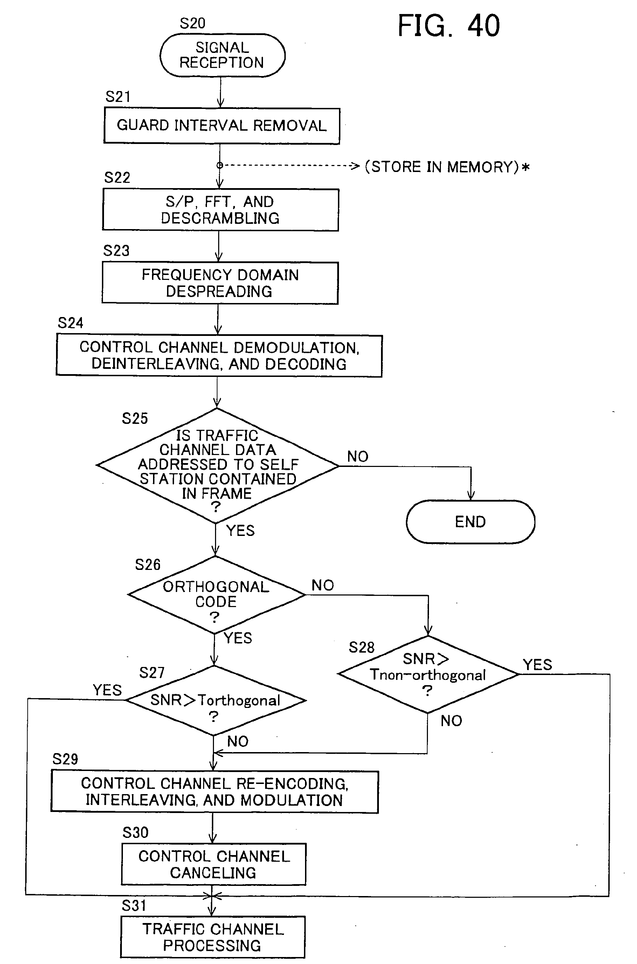

Next, a case in which the control-channel spreading codes that are orthogonal to the traffic-channel spreading codes and the control-channel spreading codes that are not orthogonal to the traffic-channel spreading codes are selectively used based on the channel quality will be described with reference to the operation flow shown in Fig. 40 for a case in which the receiver apparatus shown in Fig. 37 receives a signal transmitted from a transmitter as illustrated in the twenty-third embodiment.

Similarly to Figs. 38 and 39, Fig. 40 is a flow diagram for a case in which, only when it is determined from obtained control information that information addressed to the self station is contained in the traffic channel, a traffic channel signal is extracted.

First, a signal is received (step S20). A guard interval is removed from the reception signal (step S21). The signal from which the guard interval is removed is stored in the memory. Then, S/P conversion processing, FFT processing, and descrambling processing are performed and frequency domain despreading is performed (step S23). In this case, if the control-channel spreading codes are orthogonal to the traffic-channel spreading codes, the codes output from the orthogonal-code generating device 1 are used to perform despreading, and if the spreading codes are not orthogonal, the codes output from the orthogonal-code generating device 2 are used to perform despreading. Thereafter, control channel demodulation, deinterleaving, and decoding processing are performed (step S24).

A determination is then made as to whether or not traffic channel data addressed to the self station is contained in the received frame (step S25). When traffic channel data is not contained, the processing ends (step S25; NO). When traffic channel data is contained (step S25; YES), the process proceeds to the next step. A determination is then made as to whether or not spreading codes for the control channel signal are orthogonal to spreading codes for the traffic channel (step S26).
If the codes are orthogonal to each other (step S26), i.e., orthogonal codes are used (step S26; YES), a determination is made as to whether or not the SNR is sufficiently high (step S27). That is, when the orthogonal codes are used (step S26; YES), a judgment is made as to whether or not traffic channel data can be properly output even without canceling the control channel signal, based on channel state information measured by the channel estimating portion, modulated/encoded parameters contained in the control channel, and so on, and a determination is made as to whether or not to cancel the control channel. Specifically, a determination is made as to whether or not a measured SNR value is larger than an SNR threshold T_{orthogonal} for determining whether or not to cancel the control channel when the orthogonal codes are used. When the SNR value is larger (step S27; YES), control-channel re-encoding/interleaving/ modulation and control-channel cancel processing are omitted, and traffic-channel processing is performed. In this case, the control channel canceller directly outputs an input, received from the memory, to the traffic channel processing portion. When the SNR value is not larger (step S27; NO), control-channel re-encoding, interleaving, and modulation processing are performed, control-channel cancel processing is further performed, and traffic channel processing is performed.
If the codes are not orthogonal to each other (step S26; NO), a determination is made as to whether or not the SNR is sufficiently high (step S28) for a case in which the non-orthogonal codes are used. That is, based on channel state information measured by the channel estimating portion, modulated/encoded parameters contained in the control channel, and so on, a judgment is made as to whether or not traffic channel data can be properly output for a case in which the non-orthogonal codes are used, even without canceling the control channel signal. A determination is then made as to whether or not to cancel the control channel. Specifically, a determination is made as to whether or not a measured SNR value is larger than an SNR threshold T_{non-orthogonal} for determining whether or not to cancel the control channel when the non-orthogonal codes are used. When the SNR value is larger (step S28; YES), control-channel re-encoding/interleaving/modulation and control-channel cancel processing are omitted and traffic-channel processing is performed. In this case, the control channel canceller directly outputs an input, received from the memory, to the traffic channel processing portion. When the SNR value is not larger (step S28; NO), control-channel re-encoding, interleaving, and modulation processing are performed, control-channel cancel processing is further performed, and traffic channel processing is performed.

Typically, when non-orthogonal codes are used, the reception quality is poor compared to a case in which orthogonal codes are used. Thus, it is required that the above-noted threshold T_{non-orthogonal} be set larger than the threshold T_{orthogonal}.

The use of the method of the present embodiment makes it possible to perform reception that is optimum for the channel quality in accordance with the orthogonal or non-orthogonal codes.

Control-channel spreading codes C_{C} and traffic-channel spreading codes C_{T} are different from each other in the above-described system in which the control channel and the traffic channel are multiplexed to perform transmission. However, C_{C} and C_{T} may be the same, in which case, different scrambling codes can be used. For example, a first method is to use cell-specific control-channel scrambling codes and cell-specific traffic-channel scrambling codes. A second method is to use cell-common control-channel scrambling codes and cell-specific traffic-channel scrambling codes. When cell-common control-channel scrambling codes are used, cell differentiation may be performed using control-channel spreading codes.

The above description has been given of a system in which the control channel and the traffic channel are multiplexed to perform transmission. In the thirteenth to twenty-fifth embodiments described above, replacing the traffic channel with a traffic channel 1 for communicating high-speed data and replacing the control channel with a traffic channel 2 for communicating low-speed data can provide an embodiment in which two traffic channels having different speeds are multiplexed.

In the configuration of the receiver, it has been assumed that a signal transmitted from a transmitter as shown in the thirteenth, sixteenth, or twenty-third embodiment is received through a wireless channel. It is also possible to employ a similar configuration for signals using code multiplexing for a control channel, as in the fourteenth or fifteenth embodiment. The claims of the invention do not restrict the configuration to the receiver for a control channel using a single code.

As illustrated in the figures used for describing the embodiments described above, the description for the control channel signal and the traffic channel signal has been given using OFCDM using frequency domain spreading. However, it is apparent that the same advantages can be obtained even when OFCDM involving two-dimension spreading in a time domain and a frequency domain or OFCDM involving spreading in a time domain is used. Thus, the present invention is not limited to OFCDM using frequency-domain spreading.

### INDUSTRIAL APPLICABILITY

As described above, the data communication system, the transmitter apparatus, and the receiver apparatus according to the present invention are useful for a wireless communication system for simultaneously communicating high-speed data and transmitting low-speed data or control data, and are superior in effective use of frequencies and in improvement in multiplexing flexibility.

## Claims

1. A communication system using an orthogonal frequency division multiplexing (OFDM) technology, the communication system comprising: a traffic channel for transmitting traffic data and a control channel for transmitting control data, wherein a traffic channel signal generated using OFDM modulation and a control channel signal generated using a signal that is not orthogonal in any of time, frequency, and code relative to the traffic channel signal are multiplexed to generate a transmission signal.

2. The communication system as defined in claim 1, wherein the control channel signal is a signal spread over multiple subcarriers or multiple OFDM symbols of the OFDM-modulated traffic channel signal or over both the domains.

3. The communication system as defined in claim 1, wherein the control channel signal is a signal encoded using low-rate block codes, and codewords therefor are signals configured to be transmitted using multiple subcarriers of a single OFDM symbol.

4. The communication system as defined in claim 1, wherein a receiving station receives a signal in which the traffic channel and the control channel are multiplexed, generates copies of the control channel signal, multiplexed in a reception signal, from reception symbols obtained by demodulating the control channel and determining a signal point, removes control channel signal components from the reception signal, and then performs demodulation on the traffic channel.

5. The communication system as defined in claim 1, wherein data of the control channel is subjected to error correction encoding; and a receiving station receives a signal in which the traffic channel and the control channel are multiplexed, generates copies of the control channel signal, multiplexed in a reception signal, from control channel data obtained by demodulating/decoding the control channel, removes control channel signal components from the reception signal, and then performs demodulation processing on the traffic channel.

6. The communication system as defined in claim 1, wherein data of the control channel is subjected to error correction encoding and the data of the control channel contains address information of the traffic channel transmitted at present time or subsequently; and a receiving station receives a signal in which the traffic channel and the control channel are multiplexed, extracts control channel data by demodulating/decoding the control channel, and determines whether or not information addressed to the self station is contained in the traffic channel in accordance with control information obtained previously or at present time, and, when information addressed to the self station is contained in the traffic channel, the receiving station generates copies of the control channel signal, multiplexed in a reception signal, from the extracted control channel data, removes control channel signal components from the reception signal, and then performs demodulation processing on the traffic channel.

7. A communication system using an orthogonal frequency division multiplexing (OFDM) technology, the communication system comprising: a traffic channel 1 for transmitting high-speed traffic data and a traffic channel 2 for transmitting low-speed traffic data, wherein a traffic-channel-1 signal generated using OFDM modulation and a traffic-channel-2 signal generated using a signal that is not orthogonal in any of time, frequency, and code relative to the traffic-channel-1 signal are multiplexed to generate a transmission signal.

8. The communication system as defined in claim 7, wherein the traffic-channel-2 signal is a signal spread over multiple subcarriers or multiple OFDM symbols of the OFDM-modulated traffic-channel-1 signal or over both the domains.

9. The communication system as defined in claim 7, wherein the traffic-channel-2 signal is a signal encoded using low-rate block codes, and codewords therefor are signals configured to be transmitted using multiple subcarriers of a single OFDM symbol.

10. The communication system as defined in claim 7, wherein a receiving station receives a signal in which the traffic channel 1 and the traffic channel 2 are multiplexed, generates copies of the traffic-channel-2 signal, multiplexed in a reception signal, from a traffic-channel-2 symbol obtained by demodulating the traffic channel 2 and determining a signal point, removes signal components of the traffic channel 2 from the reception signal, and then performs demodulation processing on the traffic channel 1.

11. The communication system as defined in claim 7, wherein data of the traffic channel 2 is subjected to error correction encoding; and a receiving station receives a signal in which the traffic channel 1 and the traffic channel 2 are multiplexed, generates copies of the traffic-channel-2 signal, multiplexed in a reception signal, from the traffic-channel-2 data obtained by demodulating/decoding the traffic channel 2, removes signal components of the traffic channel 2 from the reception signal, and then performs demodulation on the traffic channel 1.

12. A transmitter apparatus using orthogonal frequency division multiplexing (OFDM) modulation, the transmitter apparatus comprising: means for generating a traffic channel signal by performing OFDM modulation on traffic channel data; means for generating a control channel signal from control channel data by using a signal that is not orthogonal in any of time, frequency, and code relative to the traffic channel signal; and means for generating a transmission signal by multiplexing the traffic channel signal and the control channel signal.

13. The transmitter apparatus as defined in claim 12, wherein the control-channel-signal generating means comprises means for spreading a control channel symbol for transmitting control channel data over multiple subcarriers or multiple OFDM symbols of the OFDM-modulated traffic channel signal or over both the domains.

14. The transmitter apparatus as defined in claim 12, wherein the control-channel-signal generating means comprises encoding means using low-rate block codes and means for arranging codewords therefor so that the codewords are transmitted using multiple subcarriers of a single OFDM symbol.

15. A receiver apparatus for receiving a signal transmitted from the transmitter apparatus as defined in claim 12, the receiver apparatus comprising: means for generating copies of the control channel signal, multiplexed in a reception signal, from a reception symbol obtained by demodulating the control channel and determining a signal point; and means for removing control channel signal components from the reception signal.

16. A receiver apparatus for receiving a signal transmitted from the transmitter apparatus as defined in claim 12, wherein data of the control channel has been subjected to error correction encoding; and the receiver apparatus comprises means for generating copies of the control channel signal, multiplexed in a reception signal, from control channel data obtained by demodulating/decoding the control channel and means for removing control channel signal components from the reception signal.

17. A receiver apparatus for receiving a signal transmitted from the transmitter apparatus as defined in claim 12, wherein data of the control channel has been subjected to error correction encoding; and the receiver apparatus comprises means for extracting control channel data by demodulating/decoding the control channel and determines whether or not information addressed to the self station is contained in the traffic channel in accordance with control information obtained previously or at present time, and when information addressed to the self station is contained in the traffic channel, the receiver apparatus generates copies of the control channel signal, multiplexed in a reception signal, from the extracted control channel data, removes control channel signal components from the reception signal, and then performs demodulation processing on the traffic channel.

18. A receiver apparatus for receiving a signal transmitted from the transmitter apparatus as defined in claim 12, the receiver apparatus comprising: a canceling function 1 for receiving a signal in which the traffic channel and the control channel are multiplexed, for generating copies of the control channel from a control channel symbol obtained by performing demodulation and determination on the control channel, and for removing control channel signal components from a reception signal; and a canceling function 2 for receiving a signal in which the traffic channel and the control channel are multiplexed, for generating copies of the control channel, multiplexed in the reception signal, from control channel data obtained by demodulating/decoding the control channel, and for removing control channel signal components from the reception signal, wherein in accordance with a channel quality, one of the canceling function 1, the canceling function 2, and no canceling is selected to perform demodulation processing on the traffic channel.

19. A receiver apparatus for receiving a signal transmitted from the transmitter apparatus as defined in claim 12, the receiver apparatus comprising only one of two canceling functions consisting of: a canceling function 1 for receiving a signal in which the traffic channel and the control channel are multiplexed, for generating copies of the control channel signal, multiplexed in a reception signal, from a control channel symbol obtained by performing demodulation and determination on the control channel, and for removing control channel signal components from the reception signal; and a canceling function 2 for receiving a signal in which the traffic channel and the control channel are multiplexed, for generating copies of the control channel, multiplexed in the reception signal, from control channel data obtained by demodulating/decoding the control channel, and for removing control channel signal components from the reception signal, wherein in accordance with a channel quality, one of canceling and no canceling is selected to perform demodulation on the traffic channel.

20. A transmitter apparatus using orthogonal frequency division multiplexing (OFDM) modulation, the transmitter apparatus comprising: means for generating a signal of a traffic channel 1 by performing OFDM modulation on data of the traffic channel 1; means for generating a signal of a traffic channel 2 by using a signal that is not orthogonal in any of time, frequency, and code relative to the traffic-channel-1 signal; and means for generating a transmission signal by multiplexing the traffic-channel-1 signal and the traffic-channel-2 signal.

21. The transmitter apparatus as defined in claim 20, wherein the means for generating the traffic-channel-2 signal comprises means for spreading a symbol for transmitting the traffic channel 2 over multiple subcarriers or multiple OFDM symbols of the OFDM-modulated signal of the traffic channel 1 or over both the domains.

22. The transmitter apparatus as defined in claim 20, wherein the means for generating the traffic-channel-2 signal comprises encoding means using low-rate block codes and means for arranging codewords therefor so that the codewords are transmitted using multiple subcarriers of a single OFDM symbol.

23. A receiver apparatus for receiving a signal transmitted from the transmitter apparatus as defined in claim 20, the receiver apparatus comprising: means for generating copies of the traffic-channel-2 signal, multiplexed in a reception signal, from a traffic-channel-2 symbol obtained by demodulating the traffic channel 2 and determining a signal point; and means for removing signal components of the traffic channel 2 from the reception signal.

24. A receiver apparatus for receiving a signal transmitted from the transmitter apparatus as defined in claim 20, wherein data of the traffic channel 2 has been subjected to error correction encoding; and the receiver apparatus comprises means for copying the traffic-channel-2 signal, multiplexed in a reception signal, from traffic-channel-2 data obtained by demodulating/decoding the traffic channel 2; and means for removing signal components of the traffic channel 2 from the reception signal.

25. A receiver apparatus for receiving a signal transmitted from the transmitter apparatus as defined in claim 20, the receiver apparatus comprising: a canceling function 1 for generating copies of the traffic-channel-2 signal, multiplexed in a reception signal, from a traffic-channel-2 symbol obtained by performing demodulation and determination on the traffic channel 2 and for removing signal components of the traffic channel 2 from the reception signal; and a canceling function 2 for generating copies of the traffic-channel-2 signal, multiplexed in the reception signal, from traffic-channel-2 data obtained by demodulating/decoding the traffic channel 2 and for removing signal components of the traffic channel 2 from the reception signal, wherein in accordance with a channel quality, one of the canceling function 1, the canceling function 2, and no canceling is selected to perform demodulation on the traffic channel 1.

26. A receiver apparatus for receiving a signal transmitted from the transmitter apparatus as defined in claim 20, the receiver apparatus comprising only one of: a canceling function 1 for generating copies of the traffic-channel-2 signal, multiplexed in a reception signal, from a traffic-channel-2 symbol obtained by performing demodulation and determination on the traffic channel 2 and for removing signal components of the traffic channel 2 from the reception signal; and a canceling function 2 for generating copies of the traffic-channel-2, multiplexed in the reception signal, from traffic-channel-2 data obtained by demodulating/decoding the traffic channel 2 and for removing signal components of the traffic channel 2 from the reception signal, wherein in accordance with a channel quality, one of canceling and no canceling is selected to perform demodulation on the traffic channel 1.

27. A transmitter apparatus using an orthogonal frequency division multiplexing (OFDM) technology and using a modulation scheme (OFCDM modulation) in which a signal subjected to OFDM modulation by using the OFDM technology is a signal spread over multiple subcarriers, multiple OFDM symbols, or both the domains, the transmitter apparatus comprising:
traffic-channel-signal generating means for generating a traffic channel signal by performing OFCDM modulation on traffic channel data;
control-channel-signal generating means for generating a control channel signal from control channel data by using a signal that is not orthogonal in any of time, frequency, and code relative to the traffic channel signal; and
transmission-signal generating means for generating a transmission signal by multiplexing the traffic channel signal and the control channel signal.

28. A transmitter apparatus using an orthogonal frequency division multiplexing (OFDM) technology and using a modulation scheme (OFCDM modulation) in which a signal subjected to OFDM modulation by using the OFDM technology is a signal spread over multiple subcarriers, over multiple OFDM symbols, or over both the domains, the transmitter apparatus comprising:
traffic-channel-signal generating means for generating a traffic channel signal by performing OFCDM modulation on traffic channel data;
control-channel-signal generating means for generating a control channel signal by modulating control channel data by an arbitrary scheme;
switching means for switching between a non-orthogonal signal, with which the control channel signal and the traffic channel signal are not orthogonal to each other in any of time, frequency, and code, and an orthogonal signal, with which the control channel signal and the traffic channel signal are orthogonal to each other in any of time, frequency, and code; and
transmission-signal generating means for generating a transmission signal by multiplexing the traffic channel signal and the control channel signal.

29. The transmitter apparatus as defined in claim 28, wherein the switching means performs switching to the non-orthogonal signal when a channel quality is favorable, and performs switching to the orthogonal signal when the channel quality is poor.

30. The transmitter apparatus as defined in claim 28, wherein the switching means switches between the non-orthogonal signal and the orthogonal signal in accordance with the number of spreading codes currently used for the traffic channel signal.

31. The transmitter apparatus as defined in any one of claims 27 to 30, wherein the control channel signal generated by the control-channel-signal generating means is a signal subjected to the OFCDM modulation.

32. The transmitter apparatus as defined in claim 27, wherein the control-channel-signal generating means comprises encoding means using low-rate block code and means for arranging codewords therefor so that the codewords are transmitted using multiple subcarriers of a single OFDM symbol.

33. A receiver apparatus for receiving a signal transmitted from the transmitter apparatus as defined in any one of claims 27 to 32, comprising:
control-channel-signal processing means for performing demodulation processing on control channel data from the control channel signal; traffic-channel-signal processing means for performing demodulation processing on traffic channel data by performing OFCDM demodulation on the traffic channel signal; and
control-channel canceller means comprising means for demodulating the control channel signal and generating copies of the control channel signal, multiplexed in a reception signal, from the demodulated signal and means for removing control channel signal components from the reception signal.

34. The receiver apparatus as defined in claim 33, wherein the control-channel canceller means generates copies of the control channel signal, multiplexed in the reception signal, from a control channel symbol obtained by demodulating the control channel signal and causing determining means to determine a signal point, removes control channel signal components from the reception signal, and then demodulates the traffic channel signal.

35. The receiver apparatus as defined in claim 33, wherein the control-channel canceller means generates copies of the control channel signal, multiplexed in the reception signal, from control channel data obtained by demodulating the control channel signal and causing error-correction-code decoding means to decode the demodulated control channel signal, removes control channel signal components from the reception signal, and then performs demodulation processing on the traffic channel signal.

36. The receiver apparatus as defined in claim 34 or 35, wherein in accordance with control information obtained previously or at the present time, the control-channel canceller means judges whether or not information addressed to the self station is contained in the traffic channel, and upon determining that information addressed to the self station is contained in the traffic channel, the control-channel canceller means generates copies of the control channel signal multiplexed in the reception signal, removes control channel signal components from the reception signal, and then performs demodulation processing on the traffic channel signal.

37. The receiver apparatus as defined in claim 33, wherein the control-channel canceller means comprises: canceling (1) means for generating copies of the control channel from a control channel symbol obtained by demodulating the control channel signal and causing determining means to determine a signal point and for removing control channel signal components from - the reception signal; and canceling (2) means for generating copies of the control channel, multiplexed in the reception signal, from control channel data obtained by demodulating/decoding the control channel and for removing control channel signal components from the reception signal, wherein in accordance with a channel quality, one of the canceling (1) means, the canceling (2) means, and means for preventing execution of canceling is selected to perform demodulation processing on the traffic channel.

38. The receiver apparatus as defined in claim 33, wherein the control-channel canceller means comprises only one of two canceling means consisting of: canceling (1) means for receiving a signal in which the traffic channel and the control channel are multiplexed, for generating copies of the control channel signal, multiplexed in the reception signal, from a control channel symbol obtained by performing demodulation and determination on the control channel, and for removing control channel signal components from the reception signal; and canceling (2) means for receiving a signal in which the traffic channel and the control channel are multiplexed, for generating copies of the control channel, multiplexed in the reception signal, from control channel data obtained by performing demodulation and decoding on the control channel, and for removing control channel signal components from the reception signal, wherein in accordance with a channel quality, whether or not canceling is to be executed is selected to perform demodulation on the traffic channel.

39. A receiver apparatus for receiving a signal transmitted from the transmitter apparatus as defined in any one of claims 28 to 30, the receiver apparatus comprising:
traffic-channel-signal processing means for performing OFCDM demodulation on a traffic channel signal to perform demodulation processing on traffic channel data;
control-channel-signal processing means for performing demodulation processing of control channel data from a control channel signal;
switching means for changing time, frequency or code so as to allow demodulation with any of a non-orthogonal signal, with which the control channel signal and the traffic channel signal are not orthogonal to each other in any of time, frequency, and code, and an orthogonal signal, with which the control channel signal and the traffic channel signal are orthogonal to each other in any of time, frequency, and code; and
control-channel canceller means comprising copying means for generating copies of the control channel signal, multiplexed in a reception signal, from a reception symbol or reception data obtained by demodulating the control channel and removing means for removing control channel signal components from the reception signal;
wherein when the control channel is the orthogonal signal, the traffic channel is demodulated, and when the control channel is not the orthogonal signal, the control-channel canceller means cancels the control channel from the reception signal and then performs demodulation on the traffic channel.

40. A receiver apparatus for receiving a signal transmitted from the transmitter apparatus as defined in any one of claims 28 to 30, the receiver apparatus comprising:
traffic-channel-signal processing means for performing OFCDM demodulation on a traffic channel signal to perform demodulation processing on traffic channel data;
control-channel-signal processing means for performing demodulation processing of control channel data from a control channel signal;
switching means for changing time, frequency or code so as to allow demodulation with any of a non-orthogonal signal, with which the control channel signal and the traffic channel signal are not orthogonal to each other in any of time, frequency, and code, and an orthogonal signal, with which the control channel signal and the traffic channel signal are orthogonal to each other in any of time, frequency, and code; and
control-channel canceller means comprising copying means for generating copies of the control channel signal, multiplexed in a reception signal, from a reception symbol or reception data obtained by demodulating the control channel and removing means for removing control channel signal components from the reception signal;
wherein, by using signals resulting from the copying performed by the copying means, the control-channel canceller means judges whether or not the removing means executes canceling of the control channel from the reception signal, performs selection, and performs demodulation on the traffic channel, in accordance with a channel quality and with whether or not the orthogonal signal or the non-orthogonal signal is used.

41. A transmitter apparatus using an orthogonal frequency division multiplexing (OFDM) technology and using a modulation scheme (OFCDM modulation) in which a signal subjected to OFDM modulation by using the OFDM technology is a signal spread over multiple subcarriers, multiple OFDM symbols, or both the domains, the transmitter apparatus comprising:
traffic-channel-signal-1 generating means for generating a traffic channel signal 1 by performing OFCDM. modulation on traffic channel data 1;
traffic-channel-signal-2 generating means for generating a traffic channel signal 2 from traffic channel data 2 by using a signal that is not orthogonal in any of time, frequency, and code relative to the traffic channel signal 1, the traffic channel data 2 being low in speed compared to the traffic channel data 1; and
transmission-signal generating means for generating a transmission signal by multiplexing the traffic channel signal 1 and the traffic channel signal 2.

42. A transmitter apparatus using an orthogonal frequency division multiplexing (OFDM) technology and using a modulation scheme (OFCDM modulation) in which a signal subjected to OFDM modulation by using the OFDM technology is a signal spread over multiple subcarriers, over multiple OFDM symbols, or over both the domains, the transmitter apparatus comprising:
traffic-channel-signal-1 generating means for generating a traffic channel signal 1 by performing OFCDM modulation on traffic channel data 1;
traffic-channel-2 signal generating means for generating a signal of a traffic channel 2 by modulating traffic channel data 2 by an arbitrary scheme;
switching means for switching between a non-orthogonal signal, with which the traffic-channel-2 signal and the traffic-channel-1 signal are not orthogonal to each other in any of time, frequency, and code, and an orthogonal signal, with which the traffic-channel-2 signal and the traffic-channel-1 signal are orthogonal to each other in any of time, frequency, and code; and
transmission-signal generating means for generating a transmission signal by multiplexing the traffic channel signal 1 and the traffic channel signal 2.

43. The transmitter apparatus as defined in claim 42, wherein the switching means performs switching to the non-orthogonal signal when a channel quality is favorable, and performs switching to the orthogonal signal when the channel quality is poor.

44. The transmitter apparatus as defined in claim 42, wherein the switching means switches between the non-orthogonal signal and the orthogonal signal in accordance with the number of spreading codes currently used for the traffic-channel-1 signal.

45. The transmitter apparatus as defined in any one of claims 41 to 44, wherein the traffic-channel-2 signal generated by the traffic-channel-signal-2 generating means is a signal subjected to the OFCDM modulation.

46. The transmitter apparatus as defined in claim 41, wherein the traffic-channel-signal-2 generating means comprises encoding means using low-rate block code and means for arranging codewords therefor so that the codewords are transmitted using multiple subcarriers of a single OFDM symbol.

47. A receiver apparatus for receiving a signal transmitted from the transmitter apparatus as defined in any one of claims 41 to 46, the receiver apparatus comprising:
traffic-channel-1 signal processing means for performing OFCDM demodulation on the traffic channel signal 1 to perform demodulation processing on the traffic channel data 1;
traffic-channel-2 signal processing means for performing demodulation processing on traffic channel data 2 from a traffic channel signal 2, the traffic channel data 2 being low in speed compared to the traffic channel data 1; and
traffic-channel-2 canceller means comprising means for generating copies of the traffic channel signal 2 multiplexed in a reception signal and means for removing components of the traffic channel signal 2 from the reception signal.

48. The receiver apparatus as defined in claim 47, wherein in accordance with the traffic channel data 2 obtained by demodulating the traffic channel 2 and causing error-correction-code decoding means to perform decoding, the traffic-channel canceller means generates copies of the traffic channel signal 2 multiplexed in the reception signal and removes signal components of the traffic channel 2 from the reception signal.

49. The receiver apparatus as defined in claim 47, wherein in accordance with a traffic channel 2 symbol obtained by demodulating the traffic channel signal 2 and causing determining means to determine a signal point, the traffic-channel canceller means generates copies of the traffic channel signal 2 multiplexed in the reception signal and removes components of the traffic channel signal 2 from the reception signal.

50. The receiver apparatus as defined in claim 47, wherein the traffic-channel canceller means comprises: canceling (1) means for generating copies of the traffic channel signal 2, multiplexed in the reception signal, from a traffic-channel-2 symbol obtained by demodulating the traffic channel 2 and causing determining means to determine a signal point and for removing components of the traffic channel signal 2 from the reception signal; and canceling (2) means for generating copies of the traffic channel signal 2, multiplexed in the reception signal, from the traffic channel data 2 obtained by demodulating the traffic channel 2 and causing error-correction-code decoding means to decode the demodulated traffic channel 2 and for removing signal components of the traffic channel 2 from the reception signal, wherein one of the canceling (1) means, the canceling (2) means, and means for preventing execution of canceling is selected to perform demodulation on the traffic channel 1.

51. The receiver apparatus as defined in claim 47, wherein the traffic-channel canceller means comprises only one of two canceling means consisting of: canceling (1) means for generating copies of the traffic-channel-2 signal, multiplexed in the reception signal, from a traffic-channel-2 symbol obtained by demodulating the traffic channel 2 and performing determination and for removing components of the traffic channel signal 2 from the reception signal; and canceling (2) means for generating copies of the traffic channel 2, multiplexed in the reception signal, from traffic channel data 2 obtained by demodulating/decoding the traffic channel 2 and for removing components of the traffic channel signal 2 from the reception signal, wherein in accordance with a channel quality, whether or not canceling is to be executed is selected to perform demodulation on the traffic channel 1.

52. A receiver apparatus for receiving a signal transmitted from the transmitter apparatus as defined in any one of claims 42 to 44, the receiver apparatus comprising:
traffic-channel-1 signal processing means for performing OFCDM demodulation on the traffic channel signal 1 to perform demodulation processing on the traffic channel data 1;
traffic-channel-2 signal processing means for demodulating the traffic channel signal 2 to perform demodulation processing on the traffic channel data 2;
switching means for changing time, frequency or code so as to allow demodulation with any of a non-orthogonal signal, with which the traffic channel signal 1 and the traffic channel signal 2 are not orthogonal to each other in any of time, frequency, and code, and an orthogonal signal, with which the traffic channel signal 1 and the traffic channel signal 2 are orthogonal to each other in any of time, frequency, and code; and
traffic-channel-2 canceller means comprising copying means for generating copies of the traffic channel signal 2, multiplexed in a reception signal, from a reception symbol or reception data obtained by demodulating the traffic channel signal 2 and removing means for removing components of the traffic channel signal 2 from the reception signal;
wherein when the traffic channel signal 2 is the orthogonal signal, the traffic channel data 1 is demodulated, and when the traffic channel signal 2 is not the orthogonal signal, the traffic-channel-2 canceller means generates the copies, cancels the traffic channel signal 2 from the reception signal, and then performs demodulation on the traffic channel data 1.

53. A receiver apparatus for receiving a signal transmitted from the transmitter apparatus as defined in any one of claims 42 to 44, the receiver apparatus comprising:
traffic-channel-1 signal processing means for performing OFCDM demodulation on the traffic channel signal 1 to perform demodulation processing on the traffic channel data 1;
traffic-channel-2 signal processing means for demodulating the traffic channel signal 2 to perform demodulation processing on the traffic channel data 2;
switching means for changing time, frequency or code so as to allow demodulation with any of a non-orthogonal signal, with which the traffic channel signal 1 and the traffic channel signal 2 are not orthogonal to each other in any of time, frequency, and code, and an orthogonal signal, with which the traffic channel signal 1 and the traffic channel signal 2 are orthogonal to each other in any of time, frequency, and code; and
traffic-channel-2 canceller means comprising copying means for generating copies of the traffic channel signal 2, multiplexed in a reception signal, from a reception symbol or reception data obtained by demodulating the traffic channel signal 2 and removing means for removing components of the traffic channel signal 2 from the reception signal;
wherein, by using signals resulting from the copying performed by the copying means, the traffic-channel-2 canceller means determines whether or not the removing means executes canceling of the traffic channel signal 2 from the reception signal, performs selection, and performs demodulation on the traffic channel data 1, in accordance with a channel quality and with whether or not the orthogonal signal or the non-orthogonal signal is used.

54. A data communication system comprising the transmitter apparatus as defined in any one of claims 27 to 32 and the receiver apparatus as defined in any one of claims 33 to 38.

55. A data communication system comprising the transmitter apparatus as defined in any one of claims 28 to 31 and the receiver apparatus as defined in claim 39 or 40.

56. A data communication system comprising the transmitter apparatus as defined in any one of claims 41 to 46 and the receiver apparatus as defined in any one of claims 47 to 51.

57. A data communication system comprising the transmitter apparatus as defined in any one of claims 42 to 45 and the receiver apparatus as defined in claim 52 or 53.
